(19) Europäisches Patentamt
European Patent Office
Office européen des brevets

(11) Veröffentlichungsnummer : **0 146 725**
**B1**

(12) # EUROPÄISCHE PATENTSCHRIFT

(45) Veröffentlichungstag der Patentschrift : **08.07.87**

(51) Int. Cl.⁴ : **H 02 M 7/757**, H 02 J 3/36

(21) Anmeldenummer : **84113023.0**

(22) Anmeldetag : **29.10.84**

(54) **Verfahren und Vorrichtung zur Aufnahme des Normalbetriebes einer Hochspannungsgleichstromübertragungsstrecke.**

(30) Priorität : **09.11.83 DE 3340540**
**01.03.84 DE 3407656**
**26.09.84 DE 3435305**
**18.10.84 DE 3438236**

(43) Veröffentlichungstag der Anmeldung : **03.07.85 Patentblatt 85/27**

(45) Bekanntmachung des Hinweises auf die Patenterteilung : **08.07.87 Patentblatt 87/28**

(84) Benannte Vertragsstaaten :
**CH DE FR GB LI SE**

(56) Entgegenhaltungen :
**EP-A- 0 075 319**
**DE-A- 2 836 308**
**US-A- 3 992 659**

(73) Patentinhaber : **Siemens Aktiengesellschaft Berlin und München**
**Wittelsbacherplatz 2**
**D-8000 München 2 (DE)**

(72) Erfinder : **Neupauer, Helmut, Dr.**
**Heiligenlohstrasse 3b**
**D-8520 Erlangen (DE)**

**EP 0 146 725 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Aufnahme des Normalbetriebes einer Hochspannungsgleichstromübertragungsstrecke (HGÜ) zur Leistungsübertragung zwischen zwei Wechselspannungsnetzen entsprechend dem Oberbegriff des Anspruchs 1. Die Erfindung betrifft ferner eine Vorrichtung hierzu.

Im Normalbetrieb prägt ein an das erste Wechselspannungsnetz angeschlossener erster Stromrichter in einer ersten Station der HGÜ einen Gleichstrom ein (Gleichrichterbetrieb), während ein an das zweite Wechselspannungsnetz angeschlossener Stromrichter in einer zweiten Station den Gleichstrom aus der HGÜ entnimmt und in das zweite Netz einspeist und dabei den Gleichspannungspegel der HGÜ festlegt (Wechselrichterbetrieb).

In der US-A-3 992 659 ist vorgeschlagen, die Spannung am Gleichstromausgang des Gleichrichters herunterzusteuern, wenn die Gleichspannung einen Schwellwert überschreitet und der Gleichstrom einen Schwellwert unterschreitet. Dadurch soll vermieden werden, daß bei Aufnahme des Gleichrichterbetriebes die HGÜ unzulässig aufgeladen wird, falls eine Leitungsunterbrechung in der Übertragungsstrecke oder dem Wechselrichter vorliegt.

In der EP-A-75 319 ist vorgeschlagen, zur Aufnahme des Wechselrichterbetriebes zunächst den Wechselrichtertransformator und einen gleichstromseitigen Glättungskondensator über Freilaufventile des Stromrichters aufzuladen und erst anschließend netzsynchronisierte Wechselrichter-Zündbefehle freizugeben, um die Einschaltströme über die Wechselrichterventile gering zu halten. Außerdem wird vorgeschlagen, im Normalbetrieb den Gleichrichter-Steuerwinkel mittels eines Leistungsregelkreises in der einen Station und den Wechselrichter-Steuerwinkel mittels eines Spannungsregelkreises in der anderen Station zu bilden, um auf diese Weise auf Fernwirkübertragungen zwischen beiden verzichten zu können und kurze Regelzeiten zu erreichen.

Die die beiden Stromrichter verkoppelnde Induktivität der HGÜ bewirkt dabei, daß sich jede Spannungsänderung in der zweiten Station mit einer durch die Laufzeit der HGÜ gegebenen Totzeit als Störspannung für die Stromeinprägung der ersten Station auswirkt, während jede Stromänderung in der zweiten Station mit dieser Totzeit eine Änderung der Kommutierungsdauern des zweiten Stromrichters hervorruft. So kommt es insbesondere zum Wechselrichterkippen des zweiten Stromrichters, wenn (z. B. bei der Aufnahme der Leistungsübertragung) durch Hochlaufen des Steuerwinkels in der ersten Station der HGÜ-Strom rasch hochgefahren wird und die Aussteuerung des Wechselrichters nicht entsprechend zurückgenommen wird.

Zum Wechselrichterkippen mit einem Kurzschluß der HGÜ-Spannung kommt es in der zweiten Station auch bei einem Wechselspannungseinbruch. Dadurch wird die Leistungsübertragung unterbrochen. Eine Störung des Normalbetriebes mit Unterbrechung des HGÜ-Stromes tritt auch in der ersten Station bei einem Kurzschluß im Netz oder im Stromrichter auf.

Es ist jedoch von wirtschaftlicher Bedeutung, daß nach jeder derartigen Störung, bei denen beide Stationen abgeschaltet oder auf einen Notbetrieb umgeschaltet werden müssen, möglichst rasch wieder in den Normalbetrieb übergegangen wird. Dies erfordert, daß die gestörte Station durch ein Freigabesignal das Ende der Störung möglichst rasch an die gesunde Station meldet. Beide Stationen müssen dann den Normalbetrieb in einer Weise wieder aufnehmen, die wegen der gegenseitigen Verkopplung über die HGÜ unter Berücksichtigung der Übertragungs- und Verarbeitungszeit aufeinander abgestimmt sein müssen.

Daher muß die Aufnahme des Normalbetriebes in beiden Stationen mit einer Totzeit aufeinander synchronisiert werden und erst nach einer verhältnismäßig langen Anlaufzeit kann die normale Leistungsübertragung ungefähr wieder erreicht werden.

Aufgabe der Erfindung ist es, ein Verfahren für eine rasche Aufnahme der normalen Leitungsübertragung anzugeben.

Diese Aufgabe wird gelöst durch ein Verfahren mit den Merkmalen des Anspruchs 1. In den Unteransprüchen sind vorteilhafte Weiterbildungen des Verfahrens, insbesondere unter Berücksichtigung der verschiedenen Störfälle, sowie eine Vorrichtung hierzu samt vorteilhafter Weiterbildungen angegeben.

Weitere der Beschreibung entnehmbare Erfindungen sind Gegenstand der gleichzeitig eingereichten EP-Anmeldungen Nr. 84 113 024.8 und 84 113 026.3.

Anhand von mehreren Ausführungsbeispielen und Figuren wird die Erfindung näher erläutert. Dabei zeigen :

Figur 1 den Aufbau einer HGÜ-Anlage,

Figur 2 den Zusammenhang zwischen Zündwinkel $\alpha$, Löschwinkel $\gamma$, dem induktiven Gleichspannungsabfall, der Gleichspannung und der Wechselspannung beim Betrieb eines netzgetakteten Stromrichters,

Figur 3 den schematischen Aufbau einer HGÜ-Kurzkupplung mit Vorsteuerung der Steuerwinkel für den ungestörten Normalbetrieb,

Figur 4 die Struktur des Aufbaus nach Fig. 3,

Figur 5 einen abgewandelten Aufbau einer HGÜ-Anlage mit Vorsteuerung,

Figur 6 eine andere schematische Ausführungsform der Station B mit Vorsteuerung,

Figur 7 einen gegenüber Fig. 3 abgewandelten Aufbau,

Figuren 8 und 9 gegenüber Fig. 6 abgewandelte Ausführungsform der Station B,

Figur 10 eine andere schematische Ausführungsform der Station A mit Vorsteuerung,

Figur 11 eine Ausführungsform einer Überwachungseinrichtung für die Station A oder B,

Figuren 12 und 28 Signalverläufe und Aufbau einer Ausführungsform einer Grenzwertmeldeeinrichtung für die Überwachungseinrichtung nach Fig. 11,

Figur 13 die Verwendung eines Netzmodelles in einer Station bei einer HGÜ-Fernleitung,

Figur 14 den Aufbau des Netzmodells von Fig. 13,

Figur 15 den detaillierten Aufbau einer Station am Beispiel der Station B,

Figur 16 Signalverläufe für den Betrieb der Station B nach Fig. 1, bei Aufnahme des netzgetakteten Betriebs nach einer Stillsetzung der HGÜ,

Figur 17 das Schaltbild einer Blockierschaltung für die Anordnung nach Fig. 1,

Figuren 18 und 19 Verlauf von Spannungen und Strömen sowie Stromführungsdauern für die Stromrichterventile beim Betrieb nach Fig. 16,

Figur 20 Signalverläufe für den Betrieb der Station B nach Fig. 1 bei einer vorübergehenden Störung (Übergang aus dem Normalbetrieb und in den Normalbetrieb),

Figur 21 das Schaltbild einer Auswahlschaltung beim Aufbau nach Fig. 15,

Figur 22 den Verlauf einer nach einer Netzstörung wiederkehrenden Wechselspannung und die netzgetakteten Zündimpulse der Station nach Fig. 15,

Figur 23 den Verlauf der Steuerwinkel, Spannungen und Ströme bei einem bevorzugten Beispiel,

Figuren 24 und 25 den Verlauf von Spannungen, Strömen und Signalen beim Betrieb einer HGÜ mit einer während einer Störung der Station B bzw. der Station A entregten Strecke,

Figuren 26 und 27 die gleichen Verläufe für den Fall eines Notbetriebs mit Bypass während einer Störung der Station A bzw. B.

Aufbau einer HGÜ-Anlage

Nach Fig. 1 ist eine Hochspannungsgleichstrom-Übertragungsstrecke (HGÜ) über die Stationen A und B, die jeweils einen Stromrichter enthalten, an zwei Wechselspannungsnetze NA und NB angeschlossen. Soll mit dieser Anlage ein Gleichstrom von der ersten Station A zur zweiten Statin B übertragen werden, so wird der über die HGÜ fließende Strom dadurch vorgegeben, daß in der Station A der erste Stromrichter als Gleichrichter betrieben wird, um dem ersten Netz NA (Spannung $U_A$) einen Strom zu entnehmen, der als Ausgangsgleichstrom $i_{dA}$ des Stromrichters von der Station A der HGÜ eingeprägt wird. Der zweite Stromrichter (Station B) wird bei dieser Betriebsart als Wechselrichter betrieben, um den über seine Gleichstromanschlüsse fließenden Eingangsgleichstrom $i_{dB}$ in das zweite Netz NB einzuspeisen, wobei der für die Stromeinspeisung verwendete Wechselrichter-Steuerwinkel die Eingangsgleichspannung $U_{dB}$ der Station B und somit das Spannungsniveau der HGÜ bestimmt.

Meist wird ein oberwellenarmer Betrieb der Stromrichter angestrebt, weshalb die Stromrichter als 12- und mehrpulsige Stromrichter aufgebaut sind und mehrere, z. B. gleichstromseitig in Reihe geschaltete Teil-Stromrichter enthalten, die über Stromrichterdrosseln LA bzw. LB und/oder Filterkreise (CFA, LFA bzw. CFB, LFB) an die HGÜ und über unterschiedlich geschaltete Stromrichtertransformatoren, die mit ihrem Übertragungsverhältnis ü bezeichnet sind (z. B. ü = 1), an das jeweilige Wechselspannungsnetz NA bzw. NB angeschlossen sind. Insbesondere bei Kurzkupplungen, die zur Verkopplung zweier räumlich nahe benachbarter Netze dienen und häufig lediglich eine Hochspannungs-Glättungsdrossel enthalten, kann die Verwendung der Filterelemente LFA, CFA bzw. LFB, CFB u. U. auch ganz entfallen. Der nach den Filterelementen auftretende Strom (« HGÜ-Strom ») wird mit $i_{dLA}$ (bzw. die entsprechende « HGÜ-Spannung » mit $U_{dLA}$) bezeichnet, während die Größen vor den Filter-Elementen mit $i_{dA}$ und $U_{dA}$ bezeichnet sind.

Für die Regelung benötigte Ist-Werte werden dabei meist vorteilhaft möglichst nahe am HGÜ-Anschluß der jeweiligen Station, also gegebenenfalls hinter den Filter-Elementen, abgegriffen ; in anderen Fällen (z. B. zur Überwachung des störungsfreien HGÜ-Betriebes) kann es gleichgültig sein, wo die zur Erfassung der Istwerte nötigen (nicht dargestellten) Meßglieder angeordnet sind.

Die Teilstromrichter 1A', 1A" sind gleichstromseitig zur Verbindung der Pole 2, 3 der HGÜ in Reihe geschaltet und enthalten jeweils einer Ausgangsphase R, S, T ihrer Transformatoren zugeordnete Ventilgruppen, die mit « + » bzw. « — » gekennzeichnet sind, wenn ihre Anoden bzw. Kathoden an den Transformator angeschlossen sind. z. B. liegt die Ventilgruppe $R^{+'}$ in Stromflußrichtung zwischen Transformator und Pol 2. Ein Steuersatz liefert für den Teilstromrichter 1A' die Zündbefehlsfolge $S'_\alpha$, die aus einzelnen Zündbefehlen $R^+{}'_\alpha$, ..., $T^-{}'_\alpha$ besteht und in einer Blockierschaltung (Schaltersymbol BS') entweder gesperrt oder zu einer Zündimpulsfolge $Z'_\alpha$ verstärkt als Einzelimpulse $R^{+'}$, ..., $T^{-'}$ an die mit dem gleichen Symbol bezeichneten Ventile gelegt werden.

Der Steuersatz $ST'_A$ erhält ein Referenzspannungssystem $U'_{Asyn}$ von einem an den Wechselspannungseingang des Teilstromrichters angeschlossenen Referenzspannungsgenerator $RG'_A$, der die Zündbefehle $S'_\alpha$ durch Vergleich von $U'_{Asyn}$ mit einer Stellgröße (z. B. einer Steuerspannung $U_{STA}$ oder einem Steuerwinkel $\alpha_A$) bildet (« netzgetakteter Betrieb mit dem Steuerwinkel $\alpha_A$").

Die Stellgröße (z. B. Steuerwinkel $\alpha_A$) wird dabei von einer Steuer- und Regeleinrichtung 4A

geliefert und ist im Stand der Technik in der Regel allen Teilumrichtern der Station gemeinsam. Der Teilstromrichter 1A" (Ventilgruppen $R^{+''}$, ..., $T^{-''}$) und seine Stelleinrichtungen (RGA", STA", BS") sind wie der Teilstromrichter 1A' aufgebaut ; gleichartige Größen sind entsprechend bezeichnet. Das es in den meisten Fällen für den Fachmann selbstverständlich ist, wie mit der Stellgröße der Station A die Steuerung der vorhandenen Teilumrichter vorzunehmen ist, wird im folgenden der Gesamtstromrichter häufig mit 1A bezeichnet und die Unterscheidung der dem jeweiligen Teilstromrichter zugeordneten Größen unterdrückt.

Auch die Station B ist möglichst gleichartig analog aufgebaut ; die Teilumrichter 1B' und 1B" werden z. B. häufig wie ein einheitlicher Stromrichter 1B behandelt. Da viele Bauteile und Maßnahmen für die beiden Stationen identisch sind, wird in diesen Fällen auch die Unterscheidung durch die Buchstaben A und B weggelassen.

Im als Gleichrichter betriebenen Stromrichter 1A wird der Steuerwinkel nahe der Vollaussteuerung ($\alpha_A \approx 0°$) vorgegeben und bestimmt zunächst die Ausgangsgleichspannung $U_{dA}$. Der Ausgangsgleichstrom $i_{dA}$ ist dann durch den Spannungsabfall $U_{dLA} — U_{dA}$ an der nachgeordneten Drossel LA bestimmt gemäß

$$i_{dA} = \frac{1}{LA} \int (U_{dA} - U_{dLA})\, dt \quad (1)$$

Wird daher der Steuer- und Regeleinrichtung 4A eine Führungsgröße $i^*_{dA}$ als Sollwert für eine den Steuerwinkel $\alpha_A$ liefernde Stromregelung eingegeben, so bewirkt ein Einbruch der Spannung $U_B$ oder $U_{dB}$, wie er z. B. von einem Wechselrichterkippen in der Station B hervorgerufen wird, oder jede andere Änderung im Betrieb der Station B nach der Laufzeit der HGÜ eine Änderung von $U_{dLA}$, die sich in eine Stromänderung bemerkbar macht und den Stromregler anstößt.

Für die Stromregelung der Station A wirkt also $U_{dLA}$ bzw. — mit der durch die HGÜ-Laufzeit bedingten Totzeit — $U_{dB}$ als Störgröße.

Ähnlich ist es, wenn als Führungsgröße der Station A die zu übertragende Wirkleistung verwendet wird. In diesem Fall liefert ein Wirkleistungsregler z. B. den Sollwert $i^*_{dA}$ entsprechend dem auf die Energiebilanz des Netzes NA abgestimmten Wirkleistungssollwert $P^*_A$.

Auch der Stromrichter 4B der Station B bestimmt durch seinen Steuerwinkel $\alpha_B$ die Ausgangsgleichspannung $U_{dB}$. Da der Gleichstrom $i_{dB}$, der als Wirk- und Blindstrom in das Netz $N_B$ eingespeist wird, von der Station A aus eingeprägt ist, kann die Steuer- und Regeleinrichtung 4B die Blindleistungsabgabe in das Netz NB entsprechend einem Blindleistungssollwert $Q^*_B$ regeln, der als Führungsgröße zur Netzspannungsstabilisierung verwendet werden kann. Dadurch bestimmt die Station B, welcher Spannungspegel sich in der HGÜ einstellt. Der Strom $i_{dB}$ und der im Netz NB fließende Strom stellt sich dabei frei ein ; er entspricht (bis auf geringe Stromverluste der Leitung) dem vor der Streckenlaufzeit eingeprägten Strom $i_{dA}$.

Da — insbesondere für einen hohen Wirkstromanteil der Leistungsübertragung — im Normalfall ein Steuerwinkel nahe der Wechselrichtervollaussteuerung ($\alpha_B$ nahe 180°) angestrebt wird, ist bei einer Kommutierung die Dauer von einer Zündung des Folgeventils (Zundwinkel $\alpha_B$) bis zur vollständigen Stromlosigkeit des abkommutierenden Ventils (d. h. bis zum « Löschwinkel » $\gamma_B$) verhältnismäßig lange und nimmt mit zunehmendem Strom $i_{dB}$ zu. Während der Kommutierungszeit bricht die Spannung $U_{dB}$ um den sogenannten « induktiven Gleichspannungsabfall » ein.

Der vom Gleichstrom $i_{dB}$ (bzw. dem eingeprägten Strom $i_{dA}$) bewirkte induktive Gleichspannungsabfall wirkt also als Störgröße für den Stromrichter 1B.

Dies ist vor allem wichtig, da der Löschwinkel einen von der Freiwerdezeit der Stromrichterventile athängigen Maximalwert (« Wechselrichtertrittgrenze ») nicht überschreiten darf, damit es nicht zum Wechselrichterkippen mit einem Kurzschluß der Spannung $U_{dB}$ kommt. Ein Anstieg des eingeprägten Stromes $i_{dA}$ bewirkt — nach der HGÜ-Laufzeit — in der Station B einen Anstieg der Kommutierungsdauer und des induktiven Gleichspannungsabfalls, auf den mit einer Vorverlegung des Zündzeitpunktes der Station B (Verkleinerung von $\alpha_B$) geantwortet werden muß, wenn der maximale Löschwinkel oder ein als Führungsgröße der Station B vorgegebener Löschwinkel $\gamma^*$ eingehalten werden soll.

Wegen dieser gegenseitigen Störgrößen müssen also die Regelungen der über die HGÜ miteinander verkoppelten Stromrichter in ihrem Betrieb aufeinander abgestimmt werden. In der Regel werden dabei Informationen über den Betriebszustand des einen Stromrichters (z. B. ein aus der jeweiligen Führungsgröße abgeleitetes Marginalstrom-Signal oder ein Störungssignal) mittels Fernwirkleitungen zur anderen Station übertragen. Wegen der Totzeit der HGÜ sowie der Verarbeitungszeit dieser Informationsübertragung kann dabei ein stabiler Betrieb der HGÜ nur erreicht werden, wenn die Regler beider Stationen relativ träge eingestellt sind (An- und Ausregelzeiten von z. B. 200 ms).

Die HGÜ kann somit bei schnellen Störungen die jeweiligen Wechselspannungsnetze nur beschränkt stabilisieren. Außerdem ist insbesondere ein schnelles Anfahren der HGÜ, z. B. bei einer vorübergehenden Störung in einer Station und daher einem vorübergehenden Ausfall der HGÜ, nicht möglich. Z. B. durch einen ausreichenden Sicherheitsabstand von der Wechselrichtertrittgrenze sollte auf Kosten der Wirkleistungsübertragung vorrangig ein Wechselrichterkippen vermieden werden.

Das im folgenden beschriebene Betriebsverfahren verringert diese Schwierigkeiten. Es ermöglicht bei ausreichendem Schutz vor Wechselrichterkippen eine hochdynamische Regelung und ein schnelles Anfahren nach Störungen.

So wird zunächst die Bildung und Übertragung der erwähnten Informationen vereinfacht und durch geeigneten Eingriff — nämlich eine Vorsteuerung des Steuerwinkels einer Station mit der jeweils zu berücksichtigenden Störgröße bzw. einem Modellwert — eine wesentliche Verkürzung der Anregelzeiten erreicht. Soweit es sich um eine Kurzkupplung handelt, bei der wegen der räumlichen Nähe beider Stationen die Informationen über den Betriebszustand der gegenseitigen Station ohne größere Übertragungszeiten vorhanden sind, kann dabei auf einen Gleichspannungsdetektor für die HGÜ-Spannung verzichtet werden.

Bei einer HGÜ-Fernübertragung werden in der einen Station die nötigen Informationen über die andere Station praktisch nur aus Betriebsgrößen (insbesondere Ist- und Sollwerten) der einen Station gebildet. Dadurch entfallen Fernwirkleitungen und die Information steht zum frühest möglichen Zeitpunkt zur Verfügung, nämlich sobald sich die Zustandsänderung der anderen Station in der einen Station bemerkbar macht. Die Vorsteuerung führt dabei zu sehr schnellen Regelkreisen, wobei Anregelzeiten unter 50 ms (z. B. 20 ms) möglich werden.

Sollte eine durch die verwendete Modell-Strößgröße bedingte Betriebsunsicherheit gelegentlich zu einem Wechselrichterkippen oder zu einer anderen Stromrichterstörung führen, so können die wirtschaftlichen Folgen einer derartigen Störung klein gehalten werden, da die verwendete Vorsteuerung ein rasches Wiederanfahren der HGÜ nach einer Störung erlaubt.

So kann das Betriebsverfahren vorrangig auf eine optimale Ausnutzung der HGÜ abgestimmt werden. Insbesondere kann die HGÜ auch zum Ausregeln dynamischer Vorgänge (z. B. Ausgleichsvorgängen in den Netzen) vorrangig im Hinblick auf eine Stabilisierung der Netzspannung ausgelegt werden. Besondere Maßnahmen ermöglichen diese Ausnutzung der HGÜ sogar in dem Fall, daß wegen einer Gleichrichter- oder Wechselrichterstörung die Wirkleistungsübertragung unterbrochen ist.

Der induktive Gleichspannungsabfall als Störgröße

Das erfindungsgemäße Verfahren geht aus von einer Untersuchung des Einflusses, den die Gleichspannungsgrößen eines Stromrichters auf dessen Betrieb ausüben.

In Figur 2 ist gestrichelt der Verlauf der Spannungen an den einzelnen Phasen eines Wechselspannungsnetzes (Netzspannung $U_{\sim}$) gezeigt. Unter der Annahme, daß der Strom im Stromrichter bei einer Ventilzündung sofort und vollständig kommutiert wird, entsteht an den Gleichspannungsanschlüssen die vom Zündwinkel $\alpha$ abhängige Spannung $u_{di}\alpha$ (t), die als Augenblickswerte der « ideellen ungeglätteten Leerlaufgleichspannung » bezeichnet wird.

Die idealisierende Annahme, daß der Strom sofort kommutiert (die Kommutierungsdauer also Null ist), liegt nur im Leerlauf vor, bei dem der Gleichstrom selbst zu Null wird. Bei Vollaussteuerung ergibt sich unter diesen idealisierenden Voraussetzungen für den Mittelwert der ideellen Leerlaufgleichspannung die Spannung $U_{di}$, die über einen für den jeweiligen Stromrichtertyp durch einen reinen Zahlenwert angebbaren Proportionalitätsfaktor proportional der momentanen Netzspannungsamplitude $U_{\sim}$ bzw. der effektiven Netzspannung ist :

$$U_{di} = \text{const} \cdot U_{\sim} \tag{2}$$

d. h. :

$$U_{diA} = \text{const} \cdot U_A,\ U_{diB} = -\text{const} \cdot U_B.$$

Der Vorzeichenwechsel für die Station B berücksichtigt dabei die gegenüber der Zählrichtung der Spannung $U_{dB}$ umgekehrte Stromführungsrichtung der Ventile des Stromrichters 1B . $U_{di}$ entspricht der Spannungszeitfläche der gleichgerichteten Netzspannung.

Zu zwei Zündwinkeln $\alpha$ und $\delta$ gehören die jeweiligen ideellen ungeglätteten Leerlaufgleichspannungen $u_{di\alpha}$ (t) und $u_{di\delta}$ (t), deren schraffiert dargestellte Spannungszeitflächen als « geglättete ideelle Leerlaufgleichspannungen » durch

$$U_{di\alpha} = U_{di} \cos\alpha,\ U_{di\delta} = U_{di} \cos\delta \tag{3}$$

gegeben sind.

Um nun zu realen Verhältnissen zu gelangen, sei angenommen, daß der Stromrichter mit dem Zündwinkel $\alpha$ gezündet wird und der tatsächlich über die Ventile in die Gleichspannungsanschlüsse fließende Strom $i_d$ zum Abkommutieren von dem zuvor gezündeten Ventil eine bestimmte Kommutierungszeit (entsprechend einem « Überlappungswinkel » u, indem beide Ventile stromführend sind) benötigt. Das Ende der Kommutierungszeit sei durch den Winkel $\delta$, d. h. den Löschwinkel $\gamma = 180° - \delta$ gegeben, so daß gilt :

$$180° - \gamma = \alpha + u, \tag{4}$$

wobei die Lage des Löschwinkels $\gamma$, d. h. die Größe des Überlappungswinkels u, von der Höhe des kommutierenden Stromes $i_d$ abhängt. Die beim Zündwinkel $\alpha$ tatsächlich auftretende ungeglättete Gleichspannung $u_{d\alpha}$ (t) ist in Figur 2 ebenfalls dargestellt. Sie ist praktisch der Mittelwert 1/2 ($u_{di\alpha}$ (t) + $u_{di\delta}$ (t)), der die rechts schraffiert dargestellte « Spannungs-Kommutierungszeit-Fläche » in zwei Hälften teilt. Somit ergibt sich für den tatsächlichen Mittelwert $U_{d\alpha}$ der Gleichspannung

$$U_{d\alpha} = \frac{1}{2} (U_{di\alpha} + U_{di\delta}) = U_{di} - \frac{1}{2} (U_{di\alpha} - U_{di\delta}), \qquad (5)$$

d. h. die tatsächliche Gleichspannung weicht von der zum Zündwinkel $\alpha$ gehörenden ideellen Leerlaufgleichspannung $U_{di\alpha} = U_{di} \cdot \cos\alpha$ um eine Spannungsdifferenz ab. Dieser sogenannte « induktive Gleichspannungsabfall » ist über einen stromrichterspezifischen Parameter dx proportional zum tatsächlichen Gleichstrom $i_d$ :

$$\frac{1}{2} (U_{di\alpha} - U_{di\delta}) = dx \cdot i_d = \frac{1}{2} U_{di}(\cos \alpha - \cos \gamma), \qquad (6)$$

so daß daraus die Beziehungen folgen :

$$U_{d\alpha} = \text{const} \cdot U_{\simeq} \cos\alpha - dx \cdot i_d,$$

d. h. bei geeigneten normierten Meßwerten $U_A$ und $U_B$ für die Wechselspannungsamplituden beider Stationen folgt für die HGÜ-Spannungen $U_{dA}$ und $U_{dB}$ :

$$U_{dA} = U_A \cdot \cos\alpha_A - dx_A \cdot i_{dA} \qquad (7)$$

$$U_{dB} = - U_B \cdot \cos\alpha_B - dx_B \cdot i_{dB}.$$

Da sich wegen der vorhandenen Induktivitäten der Gleichstrom während einer Kommutierung praktisch nicht ändert, gestatten die Beziehungen (4), (6) somit, zu jedem Zündzeitpunkt aus dem Zündwinkel und den Meßwerten für die Wechselspannung und den Gleichstrom bereits im voraus zu berechnen, welche Werte der Überlappungswinkel, der Löschwinkel und Gleichspannung bei der Zündung annehmen wird.

Der vorgesteuerte Normalbetrieb

Eine erste Anwendung dieser Zusammenhänge ist in Figur 3 dargestellt für den Fall einer Kurzkupplung — d. h. die HGÜ besteht in diesem Fall nur aus einer Induktivität L = LA + LB, die ohne Filterkreise zwischen den beiden Stromrichtern 1 und 2 angeordnet ist. Figur 4 zeigt die Struktur dieser Anordnung, wobei die Induktivität L der HGÜ analog zur Gleichung 1 durch einen Integrator (Integrationskonstante L) mit der Eingangsgröße $U_{dA} - U_{dB}$ und der Ausgangsgröße $i_d \approx i_{dA} \approx i_{dB}$ dargestellt ist.

Die Wirkung des Stromrichters 1A des Steuersatzes STA und des Referenzspannungsgenerators RGA, die als stromeinprägende Baugruppe SRA dargestellt sind, ergibt sich dabei dadurch, daß der eingestellte Zündwinkel $\alpha_A$ bei unvollkommener Synchronisation des Referenzspannungsgenerators auf die tatsächliche Phase der Wechselspannung NA bis auf einen Fehlwinkel $\delta\alpha_A$ die Spannung $U_{di\alpha A}/U_A = \cos(\alpha_A + \delta\alpha_A)$ bestimmt (cos-Bildner 410 im Strukturbild). Daraus folgt unter Renormierung (Multiplizierer 411) und Berücksichtigung des induktiven Spannungsabfalles $dx_A \cdot i_d$ dieses Stromrichters (Proportionalglied 413, Subtraktionsglied 412) schließlich $U_{dA} = U_{di\alpha} - i_d\, dx_A$.

Die Totzeit der Stromeinprägung ist durch ein Totzeitglied 414 symbolisiert, während ein Dynamikglied 415 die Glättung des Steuerwinkels im Steuersatz bzw. in einer in der Regel vorteilhaften eigenen Steuersatzglättung darstellt.

Daraus ergibt sich, daß der induktive Spannungsabfall des Stromrichters 1A nach dem Prinzip der Vorsteuerung durch Addition einer entsprechenden Modell-Störspannung $dx_A \cdot i_d$ auf die Steuergröße für $U_A$ (in diesem Fall den von einem Stromregler 41A gelieferten Signal $U_A \cdot \cos\alpha^*_A$) kompensiert werden kann. In vielen Fällen, z. B. wenn dem Regler 41A ein auf $U_A$ normierter arcos-Geber 40a zur Linearisierung der Steuerkennlinie nachgeschaltet ist, ist nicht einmal eine der Normierung der Steuergröße entsprechende Normierung der Vorsteuerspannung (Modell-Störgröße) notwendig, so daß eine Rechenschaltung 43A z. B. lediglich ein Proportionalglied 431' zu enthalten braucht, um aus dem vorliegenden Strom-Meßwert $i_{dA}$ (in diesem Fall $i_{dA} \approx i_d \approx i_{dB}$) also einer am Ort der Station A verfügbaren Größe, die Modell-Störgröße $i_{dA} \cdot dx_A$ als Vorsteuerspannung zu bilden.

Schaltet man an der Vorsteuereinrichtung (Additionsglied 42A) zusätzlich oder alternativ die Spannung $U_{dB}$ auf, so wird auch der vom Stromrichter 1B ausgehende Einfluß auf die Stromregelung kompensiert. Die Station A gleicht also Sprünge in der von der Station B ausgehenden Störgröße praktisch verzögerungsfrei aus und der Regler kann schneller eingestellt werden, da dadurch der verzögernde Einfluß der HGÜ-Induktivität wegfällt. Entsprechend kann der Regler ohne Rücksicht auf die

Zeitkonstanten, die der Übertragungsleitung und dem Betrieb der Station B zuzuordnen sind, allein auf das Zeitverhalten der Stromeinprägung (Istwert- und Sollwertbildung sowie Glättung und Verzögerung des Stromrichters) optimiert werden.

Der dafür an sich erforderliche Hochspannungs-Gleichstromwandler kann aber gemäß der Erfindung entfallen, wenn der Istwert $U_{dB}$ für die Vorsteuerung durch eine Modell-Störgröße $\widehat{U}_{dB}$ ersetzt wird, die eine Rechenschaltung 44 aus dem Meßwert $i_d$, d. h. dem HGÜ-Strom bzw. dem Eingangsgleichstrom des Stromrichters 1B gemäß der Beziehung (7):

$$\widehat{U}_{dB} = - U_B \cdot \cos\alpha_B - dx_B \cdot i_{dB}$$

aus dem Istwert $i_{dB}$, der Netzspannung $U_B$ und dem Zündwinkel (Steuerwinkel) $\alpha_B$ berechnet. Dazu dienen z. B. nach dem Schaltsymbol (Fig. 3) ein Proportionalglied 442, ein Multiplizierer 441 und ein Summationsglied 443.

Dabei ist aber das Zeitverhalten der beiden Umrichter mit ihren Steuersätzen und der HGÜ selbst zu berücksichtigen. Dies geschieht durch ein Dynamikglied 440, das vorteihafterweise als Hintereinanderschaltung mehrerer Glättungsglieder ausgebildet ist und daher insbesondere auch die auftretenden Totzeiten ausreichend zu berücksichtigen gestattet.

Der Stromrichter 1A wird also letztlich mit einem Steuerwinkel $\alpha_A$ betrieben, der zu einer Steuerspannung $U_{STA} = U_A \cdot \cos\alpha^*_A + U_{dAv}$ gehört, wobei die Vorsteuerspannung $U_{dAv}$ den induktiven Gleichspannungsabfall $\Delta x_{Av} = i_{dA} \cdot dx_A$ berücksichtigen kann, vor allem aber die aus Gleichung (1) folgende Störspannung $U_{dLA}$ (bei Kurzkupplung: $U_{dB}$ bzw. $\widehat{U}_{dB}$) enthält.

In der Station B ist ebenfalls zu berücksichtigen, daß auf die durch den Steuerwinkel $\alpha_B$ bestimmte Spannung $U_d$ ebenfalls (neben einer durch eine Fehlsynchronisation $\delta\alpha_B$ bedingten Störspannung) der induktive Gleichspannungsabfall als Störgröße wirkt, die von dem Führungsgrößenregler ausgeregelt werden muß.

Die Station B enthält die gleichen Strukturelemente für den Block SRB mit einer (gegebenenfalls als eigenes Glättungsglied ausgebildeten) Steuersatzglättung 415B und einer Vorsteuereinrichtung, die aus einem Additionsglied 42B und — je nach der Natur des Signals $\Delta x_B$ und des Vorsteuersignals $\Delta x_{Bv}$ — einem Linearisierungsglied 40B besteht.

Wie Figur 8 zeigt, kann dabei zunächst ein Signal, das über einen Vorgabewinkel $\alpha^*_B$ einen Sollwert der HGÜ-Spannung $U^*_{dB} = - U_B \cdot \cos\alpha^*_B$ bestimmt, einer Steuereinrichtung entnommen werden, die diesen Spannungssollwert aus einer Führungsgröße oder anderen Betriebsgrößen der Station B rechnerisch bestimmt (gesteuerter Betrieb). Insbesondere kann aber $\alpha^*_B$ (oder $\cos\alpha^*_B$, falls noch ein Linearisierungsglied 40B nachgeschaltet ist) auch als Ausgangssignal eines Führungsgrößenreglers abgegriffen werden.

Die entsprechende Modell-Störgröße wird dann an der Vorsteuereinrichtung (Additionsstelle 59, Fig. 8) als induktiver Gleichspannungsabfall $dx_B \cdot i_{dB}$ (bzw. als entsprechender « Vorsteuerwinkel ») diesem Vorgabewinkel so aufgeschaltet, daß der Steuerwinkel $\alpha_B$ gegeben ist durch $\alpha_B = \alpha^*_B + \alpha_{Bv}$ mit

$$\cos\alpha_B = \frac{U^*_{dB} + dx_B \cdot i_{dB}}{- U_B}.$$

Im Schaltungsblock SRB wird der Steuerbefehl für die Wechselrichterventile dann bei einem Referenzwinkel (t) der vom Referenzspannungsgenerator $RG_B$ erzeugten Referenzspannung erzeugt, der durch die Bedingung

$$\frac{U^*_{dB} + dx_B \cdot i_{dB}}{- U_B} = \cos(\alpha^*_B + \alpha_{Bv}) = \cos\varphi(t)$$

bzw.

$$\alpha^*_B + \alpha_{Bv} - \varphi(t) = 0$$

gegeben ist. Dadurch kann ein Sprung in der Störgröße weitgehend und praktisch verzögerungsfrei kompensiert werden, selbst wenn der die Störgröße erzeugende Führungsgrößenregler 41A sehr schnell (Zeitkonstante unter 50 ms, insbesondere etwa 10 ms oder weniger) eingestellt ist. Auch hier gilt, daß der Regler allein auf das Zeitverhalten der eigenen Station ohne Berücksichtigung der Zeitkonstanten, die der HGÜ und der anderen Station zuzuordnen sind, optimiert werden kann.

Dies ermöglicht zwar einen stabilen stationären Betrieb mit schnellen Regelungen, stellt aber die Einhaltung eines der Wechselrichtertrittgrenze entsprechenden minimalen Löschwinkels (« Schonwinkel ») nicht sicher.

Um aber ein Wechselrichterkippen zu vermeiden, muß die Kommutierung jeweils bei einem bestimmten (minimalen) Löschwinkel $\gamma^*$ beendet sein. Daher müssen die Ventile jeweils bei einer Phasenlage (t) des Wechselrichters gezündet werden, die durch

$$\varphi(t) = 180^\circ - \gamma^* - u$$

gegeben ist. Im Idealfall, daß die Ventilzündung ohne Schaltverzug und bei idealer Synchronisation mit der Phasenlage (t) = $_B$ erfolgt und der induktive Spannungsabfall durch den Modellwert $dx_B \cdot i_{dB}/U_B$ exakt erfaßt ist, muß also der Steuerwinkel $\alpha_B$ auf

$$(\alpha_B)_{max} = 180° - \gamma^* - u = \arccos\left(-\cos\gamma^* - \frac{2\,dx_B \cdot i_{dB}}{U_B}\right)$$

begrenzt werden.

In den Betriebszuständen, in denen eine derartige Zündwinkelbegrenzung eingreift, gilt im Steuersatz demnach die Zündbedingung (t) = 180° — $\gamma^*$ — u, d. h.

$$180° - \gamma^* - u - \varphi(t) = \arccos\left(-\cos\gamma^* - \frac{2\,dx_B \cdot i_{dB}}{U_B}\right) - \varphi(t) = 0$$

oder

$$-\cos\gamma^* - \frac{2\,dx_B \cdot i_{dB}}{U_B} - \cos\varphi(t) = 0\,,$$

wobei $\gamma^*$ bzw. $\cos\gamma^*$ ein Wert für den Löschwinkel ist, der vorgegeben wird. Diese Vorgabe des maximalen Steuerwinkels $\alpha_{Bmax}$ kann über eine Begrenzungseinrichtung 58 (Fig. 8) am Eingangskanal für den Steuerwinkel $\alpha_B$ des Steuersatzes erfolgen, wobei $\alpha_B$ gesteuert oder geregelt vorgegeben wird und, wie soeben erläutert wurde, vorgesteuert sein kann. Die Begrenzung wirkt dabei ebenfalls wie eine Vorsteuerung mit einem aus $\gamma^*$ errechneten Vorsteuerwinkel $\alpha_{Bv} = (\alpha_B)_{max}$.

Gilt Formel (7) streng und wird aus einem Spannungssollwert $U^*_{dB}$ nach $U_B \cos\gamma^* = - U^*_{dB} + dx_B \cdot i_{dB}$ ein Soll-Winkel $\gamma^*$ ausgerechnet und auf $\gamma_{min}$ begrenzt, so liefert der in der Rechenstufe 43B' (Fig. 8) gebildete Winkel $\alpha_{Bv} = \arccos(-\cos\gamma^* - 2\,dx_B \cdot i_{dB}/U_B)$ oder — falls keine Linearisierung vorgenommen wird — die entsprechende Spannung $U_{dBv} = - U_B \cdot \cos\gamma^* - 2\,dx_B \cdot i_{dB}$ einen Grenzwert für den auf beliebige Weise (z. B. durch einen Blindleistungsregler oder einen anderen « Führungsgrößenregler ») vorgebbaren Winkel $\alpha^*_B$ bzw. eine entsprechende Steuerspannung.

Ein derartiger Führungsgrößenregler kann dann lediglich bewirken, daß gegenüber dem « Vorsteuerwinkel » $\alpha_{Bv}$ der Steuerwinkel $\alpha_B$ und damit die Spannung $U_{dB}$ zurückgenommen wird, während bei gegebenem $U_B$ und $i_{dB}$ die Werte $U^*_{dB}$ und $\gamma_{min}$ nicht überschritten werden. Ist aus dem Führungsgrößen-Sollwert der Winkel $\gamma^*$ errechenbar, wie dies im Rechenelement 47 der Fig. 6 oder 7 erfolgt, so kann in einer gesteuerten Anordnung der Winkel $\alpha_{Bv} = 180° - \gamma^* - u$ auch ohne weitere Regelung direkt dem Steuersatz aufgeschaltet werden.

Im Steuersatz gilt dabei stets : $\alpha_{Bmax} = 180° - \gamma^* - u$, wobei u der aus $\gamma^*$ und dem induktiven Gleichspannungsabfall (Modell-Störgröße) berechnete Überlappungswinkel ist.

Der Modellwert $2\,dx_B \cdot i_d/U_B$ kann dabei bei jeder Phasenlage des Netzes aus Momentanwerten für $i_d$ und $U_B$ bestimmt werden. Das bedeutet, daß zu jeder momentanen Phasenlage des Netzes bereits der zugehörige induktive Spannungsabfall und damit der Überlappungswinkel vorausberechnet wird. Durch Überwachung der genannten Zündbedingung wird also dann eine Ventilzündung vorgenommen, wenn gemäß dem vorausberechneten Überlappungswinkel die bis zum (durch $\gamma^*$ vorgegebenen) Soll-Zeitpunkt einer Ventillöschung noch verbleibende Zeitspanne zur Vollendung der Kommutierung ausreicht.

Im realen Stromrichterbetrieb bewirkt ein den Steuerwinkel steuerndes Signal $\alpha_{Bv}$, das aus einem Soll-Löschwinkel $\gamma^*$ gemäß $180° - \gamma^* = \alpha_{Bv} + u$ berechnet wird, beim Referenzwinkel $\varphi(t)$ eine Ventilzündung, die aber bei der realen Phasenlage $\varphi_0(t) = \varphi(t) + \delta\varphi_B$ des Wechselspannungsnetzes erfolgt und wegen einer möglichen Ungenauigkeit $\delta u$ des errechneten Überlappungswinkels zum Istwert $180° - \gamma = \varphi(t) + \delta\varphi_B + u + \delta u$ führt. Es ergibt sich also eine Soll-/Istwert-Differenz $\Delta\gamma = \alpha_{Bv} - \varphi(t) - \delta u - \delta\varphi_B$.

Daher wird die Differenz $\Delta\gamma$ vorteilhaft unter Verwendung eines Löschwinkelreglers 41B (Fig. 8) ausgeregelt, zu dessen Ausgangssignal $\Delta x_B$ der vorausberechnete « Vorsteuerwinkel » $\alpha_{Bv}$ addiert wird, so daß sich für den Steuersatz die Bedingung

$$\Delta x_B - \alpha_{Bv} = \varphi(t) \text{ mit } \alpha_{Bv} = \arccos\left(-\cos\gamma^* - \frac{2\,dx_B \cdot i_{dB}}{U_B}\right)$$

ergibt. Es kann aber auch ein Regler für eine andere Führungsgröße verwendet werden, wobei dann der Soll-Löschwinkel $\gamma^*$ zur Berechnung von $\alpha_{Bv}$ aus dem Führungsgrößensollwert bestimmt wird (vgl. Position 47 in Fig. 5 oder 6) und das Reglerausgangssignal $\Delta x_B$ zur Einhaltung des Führungsgrößensollwertes den Löschwinkel korrigiert.

Auch hier wird der zu $\gamma^*$ gehörende Überlappungswinkel bzw. der induktive Gleichspannungsabfall aus Momentanwerten für $i_{dB}$ und $U_B$ bei jeder Phasenlage (t) im voraus berechnet.

Man gelangt so zu einer geregelten Vorgabe des Löschwinkels, die in Fig. 8 zur Begrenzung des — geregelt oder gesteuert vorgegebenen — Vorgabewinkels $\alpha^*_B$ verwendet ist. Im bevorzugten Ausführungsbeispiel der Fig. 3 und Fig. 4 wird der geregelt vorgegebene Vorsteuerwinkel $\alpha_{Bv}$ als Modell-Störgröße $\Delta x_{Bv}$ direkt dem Ausgang des Führungsgrößenreglers 41B aufgeschaltet, dessen Ausgangsgröße $\Delta x_B$ dazu dient, den als Führungsgröße vorgegebenen Löschwinkel auf $\cos\gamma^* - \cos\gamma = 0$ zu regeln. Der Vorsteuereinrichtung 42B, 40B ist in diesem Fall also zur Bildung von $\alpha_B = 180° - \gamma^* - u + \Delta x_B$ die Vorsteuerspannung $\Delta x_{BV} = - \cos\gamma^* - 2 \cdot i_{db} \cdot dx_B/U_B$ aufgeschaltet. Diese Vorsteuerspannung dient somit zur Berücksichtigung des induktiven Gleichspannungsabfalls und wird von der Rechenschaltung 43B berechnet, wozu z. B. die in deren Schaltsymbol dargestellten Rechenbausteine mit der dargestellten Rechenverknüpfung dienen können.

Die Berücksichtigung der hier angegebenen Zusammenhänge kann selbstverständlich auch nach daraus abgeleiteten Beziehungen in veränderten Rechenschaltungen erfolgen, die der Fachmann je nach Bedarf zusammenstellen kann.

Man gelangt daher im Fall einer Kurzkupplung zu einer auf ein rasches Ausregeln von Betriebszustandsänderungen beider Stromrichter abgestimmten Anordnung, die mit einfachen Mitteln auskommt und insbesondere im Hochspannungsteil als Detektor nur einen Stromwandler benötigt.

In Figur 5 sind die Beziehungen auf eine Anlage angewendet, bei der die Stromrichter jeweils über Stromrichterdrosseln LA und LB und Filterkreise LFA, CFA sowie LFB, CFB an die HGÜ (Kurzkupplung oder Fernübertragungsleitung) angeschlossen ist.

Dabei ist auf eine Kompensation der geringen Steuerwinkelverschiebung, die von dem induktiven Gleichspannungsabfall des Stromrichters 1A hervorgerufen wird, verzichtet. Ferner ist zur Berücksichtigung der von der Station B ausgehenden Störung anstelle der Modell-Störgröße $U_{dB}$ die HGÜ-Eingangsspannung $U_{dLA}$ als Vorsteuerspannung $U_{dAv}$ in der Station A verwendet.

Die Station A bedarf im Normalbetrieb keiner Fernwirksignale, die in ihren Betrieb als über Fernwirkleitungen übertragene Information über den Zustand der Station B eingreifen. Vielmehr stehen in der Station A alle für den Normalbetrieb benötigten Größen als Ist- oder Sollwerte zur Verfügung. Das gleiche gilt für die Station B. Die Vorsteuerung beider Stationen berücksichtigt dabei die gegenseitige Verkopplung beider Stationen derart, daß ein stabiler Betrieb mit kurzen Regelzeiten erreicht wird.

Bei der Ausführungsform nach Figur 5 ist das Linearisierungsglied 40B in die Rechenschaltung 43B integriert, da als Führungsgrößenregler 41B ein Löschwinkelregler verwendet ist, dessen Ausgangssignal $\Delta x_B$ bereits einen Winkel darstellt. Der in der Rechenschaltung 43B dann benötigte $\cos\gamma^*$ wird mittels eines Funktionsgebers 40B' gebildet.

Ferner ist vorgesehen, bei sprunghaften Änderungen der jeweiligen Führungsgrößen in den beiden Stationen die jeweilige Änderungsgeschwindigkeit des Führungsgrößensollwerts mittels eines Hochlaufgebers 45A bzw. 45B zu begrenzen. Die weiteren, bereits aus früheren Figuren bekannten Bauteile tragen die alten Bezugszeichen.

In der Station B kann wahlweise der Löschwinkel $\gamma$, die Blindleistung Q oder eine andere, zur Spannungskonstanthaltung, zur Dämpfung von Ausgleichsvorgängen oder zu anderen dynamischen Regelungen geeignete Führungsgröße vorgesehen sein. Dies ist durch den Umschalter 46 angedeutet, durch den der Eingang der Vorsteuereinrichtung 42B zwischen dem Löschwinkelregler 41B und anderen Führungsgrößenreglern 41B', 41B'' umgeschaltet werden kann. Für diese Umschaltung ist vorgesehen, daß eine Hilfsrechenschaltung 47 aus den jeweils in Eingriff gebrachten Führungsgrößen-Sollwerten den zugehörigen Löschwinkel-Sollwert $\gamma^*$ bzw. dessen am Funktionsgeber 40B abgreifbaren $\cos\gamma^*$ liefert.

Der für die Bildung der Modell-Störgröße benötigte, dem induktiven Spannungsabfall des Stromrichters entsprechende Stromrichterparameter $dx_A$ bzw. $dx_B$ kann in den jeweiligen Rechenschaltungen selbsttätig nachgestellt werden, in dem jeweils bei jeder Ventillöschung aus dem gemessenen Zünd- und Löschwinkel der tatsächlich aufgetretene induktive Spannungsabfall bestimmt und mit dem errechneten Wert verglichen wird, entsprechend der Beziehung: $U_B (\cos\alpha_B + \cos\gamma) = 2\, dx_B \cdot i_{dB}$. Entsprechend diesem Vergleichsergebnis kann dann der Parameter 2 $dx_B$ nachgeregelt werden, wie dies durch die Parameter-Nachführungseinrichtung 48 in Figur 6 angedeutet ist.

Ferner ist in Figur 6 symbolisch angedeutet, daß der Steuersatz STB die Steuersignale $S_\alpha$ durch Überwachung der oben aufgeführten Zündbedingung bildet.

Die Vorausberechnung des Überlappungswinkels, der jeweils bei der momentanen Phasenlage $\varphi(t)$ des Netzes zum Soll-Löschwinkel $\gamma^*$ sowie den Momentanwerten von $i_{dB}$ und $U_B$ gehört, kann z. B. im Millisekundentakt in einem Mikrocomputer 43B geschehen, wie für den Fall einer Kurzkupplung (Induktivität L) in Figur 7 dargetellt ist. Auch hier ist von der Modell-Störgröße $\widetilde{U}_{dB}$ als Vorsteuerspannung $U_{dAv}$ der Station A Gebrauch gemacht, wobei sich die Rechenschaltung 44 noch wesentlich vereinfachen läßt, wenn nicht vom Steuerwinkel $\alpha_B$ selbst, sondern vom vorgegebenen Löschwinkel $\gamma*$ oder verwandten, z. B. im Mikrocomputer selbst gebildeten Größen ausgegangen wird. Insbesondere kann z. B. anstelle von $\widetilde{U}_{dB}$ auch die Größe $U_B \cos\gamma^* - dx_B \cdot i_{dB}$ über ein Dynamikglied, das das Übertragungsverhalten von Stromrichtern und HGÜ nachbildet, der Vorsteuereinrichtung 42A aufgeschaltet werden.

Ferner zeigt Figur 7, daß als Führungsgröße der Station A vorteilhaft die Wirkleistung P der HGÜ verwendet wird. Aus der Regeldifferenz P*—P bildet dabei ein überlagerter Wirkleistungsregler 51 den Sollwert $i^*_d$ des Stromreglers 41A. Auch dieser Sollwert $i^*_d$ kann vorteilhaft mit einer Störgröße $\widetilde{i}_d$ am

Additionsglied 52 vorgesteuert werden, wobei $\tilde{I}_d$ = $P^*/U_{dB}$ vom Dividierer 53 bereitgestellt wird.

Figur 8 zeigt eine Ausführungsform der Station B, bei der der Hochlaufgeber 66B zunächst eine Steuergröße liefert, die (gegebenenfalls über ein Steuersatz-Glättungsglied 415B) den Steuerwinkel $\alpha_B$ des Stromrichters gesteuert vorgibt. Die Größe $\alpha^*_B$ kann von einem nicht dargestellten Führungsgrößenregler (z. B. einem Wirkleistungsregler oder einem Regler für die HGÜ-Spannung $U_{dB}$) vorgegeben oder entsprechend dem bereits geschilderten gesteuerten Betrieb rechnerisch vorgegeben sein. Mit 59 ist dabei eine Vorsteuereinrichtung angedeutet, die den auf den Soll-Winkel $\alpha^*_B$ wirkenden induktiven Gleichspannungsabfall kompensiert, der von einem Rechenzusatz 43B″ bereitgestellt wird. Der bereits in Figur 7 enthaltene Mikrocomputer 43B′ ermittelt ferner den Cosinus eines Vorsteuerwinkel $\alpha_{Bv}$, der sowohl die vom induktiven Gleichspannungsabfall hervorgerufene Spannungsdifferenz zwischen der ideellen zu $\gamma^*$ gehörenden ideellen, Leerlaufgleichspannung und der Spannung $U_B$ wie auch die ebenfalls vom induktiven Gleichspannungsabfall hervorgerufene Winkelverschiebung berücksichtigt, die zwischen dem Winkel $\alpha_B$ und dem zur Spannung $U_B$ gehörenden ideellen Zündwinkel besteht.

Das Linearisierungsglied 40B′ stellt dabei für eine Begrenzungsschaltung 58 einen maximalen Löschwinkel $\alpha_{max}$ bereit, der sich aus 180° — ($\gamma^*$ — U + $\Delta x_B$ ergibt), wobei $x_B$ als Ausgangssignal eines Löschwinkelreglers 67B bereitgestellt ist.

Solange die Begrenzungsschaltung 58 also nicht in Betrieb ist, ist der Stromrichter durch Vorgabe von $\alpha^*_B$ gesteuert betrieben. Wenn jedoch der kompensierte Winkel $\alpha^*_B$ den vorgegebenen Grenzwinkel $\alpha_{max}$ erreicht, greift die Löschwinkelregelung ein und der Stromrichter wird mit geregeltem Löschwinkel betrieben. Ist der Löschwinkelregler 41B inaktiviert (z. B. durch einen Kurzschlußschalter 67B), so bestimmt allein der Vorsteuerwinkel $\alpha_{Bv}$ den Grenzwinkel $\alpha_{max}$. Durch den Eingriff der Winkelbegrenzung 58 wird dann die Station A mit einem gesteuerten Löschwinkel betrieben.

In der Regel sorgt die beschriebene Berücksichtigung des induktiven Gleichspannungsabfalls dafür, daß die Wechselrichtertrittgrenze eingehalten wird, solange sich $i_{dB}$ und $U_B$ während eines Kommutierungsvorgangs nicht allzusehr ändern und daher der vorausberechnete Übertragungswinkel u mit dem tatsächlichen Überlappungswinkel hinreichend übereinstimmt. Dadurch ist ein Betrieb mit maximalem Zündwinkel (maximaler Wirkleistungsübertragung bzw. minimaler Blindleistung) möglich. Ein größerer Sicherheitsabstand zur Wechselrichtertrittgrenze ist dabei nicht erforderlich, solange sichergestellt ist, daß auch im Extremfall, in dem plötzliche Änderungen von $i_d$ oder $U_b$ zum Kippen des Wechselrichters führen, der Stromrichter auf einen Störungsbetrieb umgeschaltet wird nach Beendigung einer Störung rasch wieder den Normalbetrieb aufnehmen kann.

Hierzu ist in der bevorzugten Ausführungsform der Steuer- und Regeleinrichtung 4B nach Figur 9 eine Überwachungs- und Programmschaltung 62B vorgesehen, die eine Speicherschaltung 63B (z. B. einen programmierten Mikroprozessor) und eine Überwachungseinrichtung 64B enthält und noch besprochen werden wird.

Die Einrichtung 62B betätigt zwei Umschalter 60B und 61B, deren in Figur 9 gezeigte Schalterstellung dem Normalbetrieb entspricht. In diesem Normalbetrieb wird also die vom Mikrocomputer 43B′ bereitgestellte Vorsteuerspannung (Vorsteuerwinkel $\alpha_{BV}$) über die Schalterstellung P1 der Vorsteuereinrichtung 42B zugeführt und zur Steuergröße $\Delta x_B$ des Zündwinkels $\alpha_B$ addiert, die von einem Führungsgrößenregler, insbesondere einem Löschwinkelregler 41B bereitgestellt wird. Eine im einzelnen nicht dargestellte Regeleinrichtung 68B kann dabei durch Umlegen des Schalters 60B auf die Vorsteuereinrichtung so umgeschaltet werden, daß z. B. bei einem Notbetrieb der Steuerwinkel entsprechend den Bedürfnissen des Netzes $N_B$, (z. B. entsprechend einem zur näherungsweisen Spannungskonstanthaltung erforderlichen Blindleistungssollwert $Q^*_B$) bereitgestellt wird.

In der Schalterstellung P2 wird dem Eingang der Vorsteuereinrichtung 42B anstelle des Modellwertes für die Modell-Störgröße $\alpha_{BV}$ ein anderer Modellwert zugeführt, der von einem Hochlaufgeber 66B geliefert wird. Der Endwert dieses Hochlaufgebers ist durch Werte bestimmt, die für die normale Leistungsübertragung der HGÜ im störungsfreien Betrieb vorgegeben sind, z. B. entsprechend einem Normalwert $U^*_B$ für die HGÜ-Spannung, der von einem Dividierer 67B als Quotient der Nenn-Wirkleistung $P^*$ und des Nenn-HGÜ-Stromes $i^*_{dB}$ für den Normalbetrieb errechnet wird.

Die Schalterstellung P3 ist dem Fall vorbehalten, daß (z. B. zur Stillsetzung der HGÜ oder zum Übergang in den Normalbetrieb) der Steuerwinkel $\alpha_B$ durch pulsartige Aufschaltung eines Zusatzsollwertes vorübergehend verschoben werden muß.

Die Station A ist weitgehend gleichartig aufgebaut, gleiche Bauteile tragen daher die gleichen, jetzt mit dem Buchstaben A versehenen Ziffern (Fig. 10).

Abgesehen von einer möglicherweise etwas anderen Funktion des Linearisierungsgliedes 40A ist in der Station A vorgesehen, daß der Umschalter 60A den für den Normalbetrieb vorgesehenen Stromsollwert $i^*_{dA}$ für den Stromregler 41A auf einen Stromsollwert umschaltet, der von einer übergeordneten Regeleinrichtung 68A entsprechend den Bedürfnissen des Netzes NA im Störungsfall geliefert wird. Ferner ist in der Position P1 des Umschatlers 61A als Modell-Störgröße $U_{dAV}$ im Normalbetrieb die Spannung $U_{dLA}$, also die bei Verwendung von Filterkreisen zwischen den Filterkreisen und dem HGÜ-Anschluß der Station A abgegriffene Gleichspannung, der Vorsteuereinrichtung 42A aufgeschaltet.

In beiden Stationen können ferner die Hochlaufgeber 66A, 66B sowie die Führungsgrößenregler 41A und 41B von der Steuer- und Programmschaltung inaktiviert werden. Außerdem ist vorgesehen, daß im Störungsfall die Einrichtungen 62A und 62B entsprechende Störungssignale zur Stillsetzung der

Stromrichter, z. B. durch Ansteuern der Blockierschaltungen BS aus Figur 1, abgeben.

Überwachung von Störfällen

Bei dem geschilderten Normalbetrieb entstehen keine Komplikationen, die von den Totzeiten und Verarbeitungszeiten von Fernwirksignalen herrühren und häufig eine träge Regelung des HGÜ-Betriebes erzwingen.

Der normale Betrieb der Stationen ist aber nur dann möglich, wenn beide Netze NA und NB und beide Stromrichter intakt sind. Bei einem Ausfall eines Netzes oder eines Stromrichters muß in einen Notbetrieb übergegangen werden. Daher ist in beiden Stationen jeweils eine Überwachungsvorrichtung nötig, die den ordnungsgemäßen Betrieb in beiden Stationen überwacht. Eine derartige Überwachungseinrichtung ist in Figur 11 dargestellt und sei zunächst für den Stromrichter A erläutert.

Diese Überwachung und der wechselweise Übergang zwischen Normalbetrieb und Notbetrieb bei Störung soll ebenfalls möglichst ohne Fernwirksignale auskommen. Vielmehr sollen nach einem weiteren Grundgedanken der Erfindung jeweils die nötigen Informationen über den in der fremden Station unterbrochenen oder wieder aufgenommenen Normalbetrieb an den Auswirkungen dieses Betriebes in der eigenen Station erkannt werden. Dabei kann es zum Erzeugen eindeutig erkennbarer Signale vorteilhaft sein, daß der Übergang in der fremden Station in einer bestimmten Weise vorgenommen wird. Während diese Maßnahmen zum Übergang vom und in den Normalbetrieb später besprochen wird, sei anhand der Figuren 11 bis 14 zunächst der Aufbau der Überwachungseinrichtung erläutert.

In diesen Figuren ist jeweils nur der Aufbau der Überwachungseinrichtung einer Station dargestellt. Die andere Station enthält eine identische Einrichtung und die in einer derartigen Einrichtung erzeugten Signale $F_{de}$, $F_{ef}$, ... sind, wenn nötig, durch den Buchstaben derjenigen Station zu ergänzen, in der sie gebildet werden (z. B. $F_{deA}$, $F_{dfA}$, ... in der Station A).

Der Vorteil dieser Überwachungseinrichtung wird in dem Verzicht auf Fernwirksignal-Leitungen gesehen. Ein Beginn oder Ende einer Störung der fremden Station wird an den gleichstromseitigen Eingängen der eigenen Station zum frühest möglichen Zeitpunkt erkannt. Sollten aus Sicherheitsgründen trotzdem eigene Signalleitungen die beiden Stationen verbinden, so lösen die damit Übertragenen Signale normalerweise nicht unmittelbar Maßnahmen zum Stillsetzen oder Anfahren der eigenen Station aus. Vielmehr werden diese Maßnahmen letztlich von den HGÜ-Strömen (z. B. in der Station A von Meßwerten $i_{dA}$ und/oder $i_{dlA}$) und den HGÜ-Spannungen (z. B. $U_{dA}$ bzw. $U_{dLA}$) und Verknüpfungen der Meßgrößen (insbesondere Verknüpfungen mit Meßwerten für Amplitude und gegebenenfalls Phasenlage des eigenen Wechselspannungsnetzes) ausgelöst.

**Die Netzspannungsamplitude U ≈ (im Fall der Station A also die Spannung $U_A$) wird mittels eines** gestörten Zustand der eigenen Station zu melden und die jeweilige Meldung zu speichern.

Die Netzpannungsamplitude U ≈ (im Fall der Station A also die Spannung $U_A$) wird mittels eines Grenzwertmelders 711 darauf überwacht, ob ein gewisser für den ungestörten Betrieb vorgegebener Minimalwert überschritten ist ; das Ausgangssignal $G_{711}$ = « 1 » zeigt somit ein intaktes Wechselspannungsnetz an.

Das Überwachungssignal $G_{711}$ kann insbesondere dazu verwendet werden, um das Ausgangssignal Q eines Störungsgedächtnisses 700 auf das zum ungestörten Normalbetrieb gehörende Signal Q = 1 zu setzen. Das Gedächtnis ist z. B. als ein Flip-Flop ausgebildet, dessen Setzeingang über ein ODER-Gatter 701 durch ein den Normalbetrieb freigebendes Freigabesignal $F_f$ gesetzt wird. Dieses Freigabesignal wird zunächst bei Beendigung einer Störung des eigenen Netzes dadurch erzeugt, daß das Wiedererreichen des Grenzwertes $U_{grenz}$ über ein Verzögerungsglied 712 (Zeitkonstante $T_{syn}$) eine Zeistufe 713 anstößt, die somit nach einer durch die Verzögerungszeit $T_{syn}$ vorgegebenen Verzögerung einen Impuls (« Selbstfreigabeimpuls » $F_{fe}$) vorgegebener Länge bildet. Die Verzögerungszeit $T_{syn}$ berücksichtigt, daß nach Wiederkehr der eigenen Netzspannung noch eine bestimmte Zeit erforderlich ist, bis der eigene Referenzspannungsgenerator aus der wiederkehrenden Netzspannung eine für den Normalbetrieb des eigenen Stromrichters erforderliche netzsynchrone Referenzspannung erzeugt.

Unterschreitet jedoch bei einer Netzstörung die eigene Netzspannung den Grenzwert, so wird aus $G_{711}$ = « 0 » über eine Baugruppe 74, die als wichtigstes Element eine weitere Zeitstufe 741 enthält, ein Impuls $F_{de}$ (« Selbststörungs-Meldeimpuls ») gebildet, der über ein ODER-Gatter 702 den Rücksetzeingang des Störungsgedächtnisses 700 mit dem entsprechenden Störungssignal $F_d$ = 1 beaufschlagt. Die ODER-Gatter 701 und 702 können über weitere Eingänge auch andere, geeignete Störungs- bzw. Freigabemeldungen erhalten, wobei auch andere kritische Größen des eigenen Wechselspannungsnetzes (z. B. unzulässige Änderungen von Frequenz oder Phase) überwacht werden. Der Grenzwertmelder 711 und die anderen Überwachungsglieder zur Erfassung und Überwachung der eigenen Wechselspannung können dabei insbesondere im Referenzspannungsgenerator unter Ausnutzung der dort ohnehin erzeugten Signale untergebracht sein. z. B. kann auch der störungsfreie Betrieb des eigenen Stromrichters überwacht oder mittels eines Startbefehls die Inbetriebnahme aus dem Stillstand ermöglicht werden.

Der Signalzustand Q = 1, der durch das Freigabesignal $F_f$ gesetzt ist, zeigt nicht nur den störungsfreien Zustand der eigenen Station, sondern der gesamten Anlage an. Entsprechend zeigt der Signalzustand $\overline{Q}$ = 1 eine Störung an und wird durch das « Störungssignal » (« Defektsignal ») $F_d$ gesetzt.

Hierzu werden die Ausgänge der Baugruppen 71 und 74, die die eigene Station überwachen, mit

einem « Fremdfreigabeimpuls » $F_{ff}$ bzw. einem « Fremdstörungs-Meldeimpuls » $F_{df}$ über die ODER-Gatter 701 und 702 zum « Freigabesignal » $F_f$ bzw. zum « Störungssignal » $F_d$ verknüpft. Diese Impulse $F_{ff}$ und $F_{df}$ werden von den in der eigenen Station angeordneten Baugruppen 73 bzw. 72 erzeugt und melden durch Überwachung der elektrischen Größen an den Gleichspannungsanschlüssen der eigenen Station, daß die jeweils andere (« fremde ») Station den Normalbetrieb bzw. einen störungsbedingten Notbetrieb aufgenommen hat. Sofern das eigene Netz ungestört ist, lösen die Impulse $F_{ff}$ und $F_{df}$ also einen dem jeweiligen — ungestörten oder gestörten — Zustand der anderen Station entsprechenden Betrieb der eigenen Station aus.

Eine Fremdstörung liegt z. B. immer dann vor, wenn in der fremden Station ein Kurzschluß des Netzes oder des Stromrichters auftritt und daher der Gleichstrom als Fehlerstrom über diesen Kurzschluß fließt. Ein derartiger Fehlerstrom macht sich mit einer durch die Laufzeit der HGÜ bedingten Verzögerung in der eigenen Station dadurch bemerkbar, daß der Gleichstrom $i_d$ erheblich vom für den Normalbetrieb vorgesehenen Stromsollwert abweicht : Die Abweichung $i^*_d$-$i_d$ übersteigt kritische Werte. Dies tritt auch dann auf, wenn bei längerdauernder Störung die Leitung stromlos ist und daher der Strom an den gleichspannungsseitigen Anschlüssen der eigenen Station nicht mehr auf die Regelung reagiert.

Daher ist in der die Fremdstörung erfassenden Baugruppe 72 ein Subtraktionsglied 721 zur Bildung der Differenz $i^*_d — i_d$ in der eigenen Station und ein nachgeschalteter Gleichrichter 722 vorgesehen. Ein nachgeschaltetes Bandpaßfilter sorgt dafür, daß kurzzeitige, insbesondere während der Kommutierungszeiten des eigenen Stromrichters auftretende Stromabweichungen ebenso unterdrückt werden, wie ständige oder verhältnismäßig langdauernde Abweichungen. Solche anhaltenden Abweichungen entstehen z. B. beim Hochfahren auf den Normalbetrieb, bevor die HGÜ nach einer Störung den vollen Gleichstrom $i^*_d$ übertragen kann. Ein plötzlich einsetzendes und einige Millisekunden dauerndes Ansteigen oder Absinken des Gleichstromes wird am Ausgang des Filters 723 gemeldet und mittels eines Grenzwertmelders 734 erfaßt. Da eine derartige Störung aber auch auftritt, wenn die eigene Station gestört ist, wird das Ausgangssignal des Grenzwertmelders 724 an einem UND-Gatter 725 nur dann freigegeben, wenn (z. B. mittels des Grenzwertmelders 711) der ordnungsgemäße Zustand der eigenen Station gemeldet ist.

Hat dagegen die fremde Station den Normalbetrieb nach Beseitigung einer Fremdstörung wieder aufgenommen, so macht sich dies in der eigenen Station — wiederum nach einer durch die Laufzeit der HGÜ bedingten Verzögerung — in einer sprunghaften Änderung von Spannung und/oder Strom an den Gleichstromanschlüssen bemerkbar. Daher wird z. B. die Eingangsgleichspannung $U_d$ bzw. $U_{dL}$ (z. B. $U_d = U_{dA}$, $U_{dL} = U_{dLA}$ für Station A) mittels eines Differenziergliedes 730 differenziert, um anschließend in einer Grenzwertmeldestufe 731 einen Fremdfreigabe-Meldeimpuls zu erzeugen, sobald die Änderung der Spannung einen bestimmten Grenzwert überschreitet. Das Ausgangssignal dieser Grenzwertmeldestufe 731 kann wiederum an einem UND-Gatter 732 verriegelt werden, wenn die Baugruppe 71 eine Störung des eigenen Netzes meldet.

Es kann dabei vorteilhaft sein, den entsprechenden Fremdfreigabe-Meldeimpuls $F_{ff}$ auch durch entsprechende Überwachung des Stromes zu bilden (Elemente 733, 734, 735).

Die Grenzwertmeldestufe 731 kann zur Erhöhung der Sicherheit für die Erkennung des wiederaufgenommenen Betriebes in der Fremdstation entsprechend Figur 12 aufgebaut sein. Die von der fremden Station (im Beispiel der Figur 12 : Station A) bei der Wiederaufnahme des Normalbetriebes hervorgerufenen Änderungen der elektrischen Größen (z. B. $U_{dB}$) an den Gleichspannungsanschlüssen der eigenen Station (Station B) weisen einen typischen Kurvenverlauf auf, aus dem der Impuls $F_{ff}$ abgeleitet wird.

In Figur 12 ist angenommen, daß die Strecke während einer Störung stromlos ist und der Stromrichter 1A daher gesperrt oder auf die Gleichspannung Null ($\alpha_A = 90°$) gesteuert ist. Um in Station B den in der Station A gestarteten Normalbetrieb zu erkennen, wird die Aufnahme des Gleichrichterbetriebes durch eine impulsartige Verschiebung vom Steuerwinkel $\alpha_A$ zum Zeitpunkt $t_1$ eingeleitet. Zum Zeitpunkt $t_2$ wird ein rampenförmiger Hochlauf des Steuerwinkels auf einen betriebsmäßigen Wert nahe Vollaussteuerung vorgenommen. Dies führt zum dargestellten Verlauf von $U_{dA}$ und $i_{dA}$, wobei $t_2$ insbesondere so vorgegeben werden kann, daß $i_{dA} > 0$ erhalten bleibt.

Mit einer durch die Streckenlaufzeit bedingten Verzögerung ergibt sich ein typischer Spannungsverlauf $U_{dB}$ in der Station B, dessen Differential in der Überwachungseinrichtung der Station B auf Überschreiten eines positiven und eines negativen Grenzwertes überwacht wird. Die hierzu vorgesehenen Grenzwertmelder 731.1 und 731.2 setzen daher für die Dauer $\Delta T_H$ ein Flip-Flop 731.3, das seit dem Beginn der Störung (Störungssignal $F_{dB}$) rückgesetzt ist. Im Glied 731.4 wird die Dauer $\Delta T_H$ auf ihre Signifikanz überwacht, z. B. indem man das Ausgangssignal des Flip-Flops in ein Schieberegister eingibt, das einen Fremd-Freigabeimpuls $F_{ff}$ erzeugt, wenn das Ausgangssignal $Q_D$ sie eingespeicherte typische Dauer $\Delta T_H$ zeigt. Die Station B nimmt dann nach einer vorgegebenen Verzögerungszeit ebenfalls mit einem rampenförmigen Hochlauf des Steuerwinkels $\alpha_B$ ihrerseits zum Zeitpunkt $t'_2$ den Normalbetrieb wieder auf.

Ebenso können auch weitere Überwachungen und Verriegelungen der jeweiligen Freigabesignale bzw. Störungssignale vorgesehen sein, um speziell auftretende Betriebsfälle eindeutig zu erfassen. Einsatz und Aufbau derartiger Verriegelungen kann der Fachmann jederzeit selbständig bei der Schaltung nach Figur 11 ergänzend anbringen, sobald er bei der Untersuchung der möglichen Betriebszustände und Betriebsausfälle mögliche Unklarheiten bei der Erzeugung des Fremdfreigabesignals, des Fremdstörungssignals, des Selbstfreigabesignals und Selbststörungssignals erkennt.

Die in Fig. 11 gezeigte, besonders einfache Überwachungseinrichtung kann durch weitere Überwachungselemente erweitert oder ergänzt werden, die eine genauere Erkennung der Betriebszustände der fremden Station zulassen, wobei die an den HGÜ-Anschlüssen abgegriffene Information über die Betriebsgrößen der fremden Station auch zur Regelung der eigenen Station im Normal- oder Notbetrieb verwendet werden können.

Dies ist anhand der Station A in Figur 13 bei einer HGÜ erläutert, deren Stromrichter 1A und 1B jeweils über Stromrichterdrosseln und Filterkreise gemäß Fig. 1 an die HGÜ angeschlossen sind. Die HGÜ selbst ist im Ersatzschaltbild als Hintereinanderschaltung von Längsinduktivitäten L1, ..., LN und Querkapazitäten CO, ... CN dargestellt.

In der Station A ist wieder die Vorsteuereinrichtung mit Additionsglied 42A und Linearisierungseinrichtung 40A erkennbar, der neben dem Ausgangssignal des Führungsgrößenreglers 41A' über einen Umschalter 61A' als Vorsteuerspannung $U_{dAv}$ die Störspannung (HGÜ-Spannung $U_{dLA}$) oder ein Modellwert $\widetilde{U}_{dB}$ für die Störspannung aufschaltbar ist.

Die Rechenschaltung zur Erzeugung des Modellwertes $\widetilde{U}_{dB}$ ist hier in die Überwachungs- und Programmschaltung 62A' als ein zusätzlicher Rechenbaustein 43A'' eingebaut, der teilweise auch Überwachungsfunktion hat, wie Fig. 14 erläutern wird. Er liefert gleichzeitig auch einen Modellwert $i_{dB}$ für den HGÜ-Strom $i_{dB}$ der fremden Station, der als Ersatz-Istwert für den Führungsgrößenregler 41A' dient. Der zugehörige Sollwert $\tilde{i}^*_{dB}$ ist vom Hochlaufgeber 66A geliefert, dem wahlweise (Umschalter 60A) das Ausgangssignal eines für den Notbetrieb vorgesehenen übergeordneten Reglers 68A (z. B. für die Amplitude $U_A$ des Wechselspannungsnetzes NA) oder das Ausgangssignal eines für den Normalbetrieb vorgesehenen übergeordneten Reglers 51 aufgeschaltet ist. Für den Regler 51 kann insbesondere die gleiche Vorsteuerung vorgesehen sein wie nach Figur 7.

Im Rechenbaustein 43A'' ist die Struktur der HGÜ z. B. auf die in Fig. 14 angegebene Weise nachgebildet. Am Block SRA ist hierfür der Istwert des Stromrichter-Ausgangsgleichstroms $i_{dA}$ abgegriffen und der die HGÜ nachbildenden Schaltung zugeführt. Die Filterkreise der beiden Stationen sind durch die Schaltungen FA und FB nachgebildet.

Mit den Bezeichnungen der Figuren 1 und 13 werden dadurch Modellwerte $\tilde{i}_{FA}$, $\widetilde{U}_{dLA}$ und $\widetilde{U}_{CN} = \widetilde{U}_{dLB}$ für die elektrischen Größen $i_{fA}$, $U_{dLA}$ und $U_{dLB}$ der HGÜ gebildet. Vom Filterkreis der Station B braucht nur die Stromrichterdrossel LB als Integrator nachgebildet zu werden, die aus $U_{dLB}$ und einem Modellwert $\widetilde{U}_{dB}$ den Modell-Strom $\tilde{i}_{dB}$ liefert.

Zur Bildung von $U_{dB}$ kann zunächst mittels das Subtraktionsgliedes 75 vom Modellwert $\widetilde{U}_{dLA}$ der ohmsche Spannungsabfall $r_H \cdot i_{dA}$ (entsprechend dem Widerstand $r_H$ der HGÜ) subtrahiert werden. Ferner muß aber berücksichtigt werden, daß der fremde Stromrichter seine HGÜ-Spannung $U_{dB}$ durch Stromentnahme aus der HGÜ regelt. Dieser Strom $i_{dB}$ ist aber durch den — vor der HGÜ-Laufzeit eingeprägten — Strom $i_{dA}$ bestimmt.

Deshalb kann die Regeldifferenz $i_{dA} - \tilde{i}_{dB}$ durch einen Nachführregler 76 ausgeregelt werden, dessen Ausgangssignal korrigierend auf $U_{dB}$ wirkt und letztlich dafür sorgt, daß der Modellstrom $\tilde{i}_{dB}$ im Normalbetrieb dem tatsächlichen Strom $i_{dB}$ der fremden Station entspricht.

An der Differenz $U_{dLA} - \widetilde{U}_{dLA}$ oder der Regeldifferenz $i_{dA} - \tilde{i}_{dB}$ kann nun ebensogut wie am Vergleichsglied 721 der Überwachungseinrichtung der Figur 11 ein Kippen des fremden Stromrichters erkannt werden. Bei einer derartigen Störung ist nämlich die Gleichspannung $U_{dB}$ kurzgeschlossen und die HGÜ entlädt sich über den Kurzschluß. Bei zunächst unverändertem Steuerwinkel $\alpha_A$ in der eigenen Station steigt daher der Strom $i_{dA}$ nach einer durch die HGÜ-Laufzeit bedingten Verzögerung. Da die Nachbildung nach Fig. 14 aber diesen Kurzschluß noch nicht berücksichtigt, nimmt die Differenz $i_{dA} - \tilde{i}_{dB}$ hohe Werte an.

Wird in der Modellschaltung der Fig. 14 nach einer derartigen Störungsmeldung über den Umschalter 77 jetzt die Spannung $\widetilde{U}_{dB}$ kurzgeschlossen, so wird auch der Störfall der kurzgeschlossenen fremden Station (gekippter Wechselrichter) nachgebildet. In diesem Zustand ist die Modellschaltung in der Lage, an einer erneuten plötzlichen Ändereung von $i_{dA} - \tilde{i}_{dB}$ zu erkennen, wenn der fremde Stromrichter seinen Normalbetrieb wieder aufnimmt und der HGÜ eine Spannung $U_{dB} \neq 0$ einprägt. Der Umschalter 77 wird dann erneut umgelegt und es erfolgt die Simulierung des wiederaufgenommenen Normalbetriebes.

Es handelt sich bei der Modellschaltung nach Fig. 14 demnach um eine erste Form eines « Netzbeobachters », der simulierte Werte für die elektrischen Größen der fremden Station allein aus den in seiner eigenen Station vorhandenen elektrischen Größen ermittelt. Fernwirksignal-Leitungen werden auch hierbei nicht benötigt und die Information über den Betriebszustand der fremden Station steht mit der kürzestmöglichsten Verzögerung, nämlich der Laufzeit der HGÜ selbst, zur Verfügung.

Selbstverständlich kann dieses Prinzip, wonach die fremde Station durch Nachbildung der HGÜ und einiger Schaltungsteile der fremden Station in der eigenen Station überwacht wird, noch verbessert und abgeändert werden, wenn es der Bedarf erfordert. Vorteilhaft ist dabei, daß mit $\tilde{i}_{dB}$ und $\widetilde{U}_{dB}$ Modellwerte für elektrische Größen der anderen Station sowohl für den gestörten wie den ungestörten Betrieb zur Verfügung stehen.

So kann insbesondere, wie bereits dargestellt, der Modell-Strom $i_{dB}$ als Ersatz-Istwert für den Stromregler 41A' in Fig. 13 verwendet werden, der es damit möglich macht, auch im Störungsfall den

über die kurzgeschlossene fremde Station fließenden Strom zu regeln.

Dieses Prinzip der Netzüberwachung ermöglicht auch, nach einem Störfall das Ende der Störung zu erkennen und — je nach der Art der Störung — innerhalb weniger Millisekunden (z. B. etwa 10 ms) in einen Normalbetrieb mit hoher Leistungsübertragung überzugehen.

Übergang in den Normalbetrieb : Ventilauswahl und netzgetaktete Zündung

Bei dem geschilderten Normalbetrieb kann die HGÜ wegen der Möglichkeit einer schnellen Regelung der Leistungsübertragung auch zur Dämpfung von Ausgleichsvorgängen, zur Blindlaststellung der Netze und zu anderen Aufgaben herangezogen werden. Daher ist es für die Benutzer derartiger Anlagen vorteilhaft, wenn nach einem Ausfall der HGÜ der Normalbetrieb möglichst rasch wieder aufgenommen wird.

Hierbei sind verschiedene Störfälle zu unterscheiden.

Tritt in der als Gleichrichter betriebenen ersten Station ein Zusammenbruch des Netzes NA oder ein Stromrichterfehler auf, so kommt es zu einem Kurschluß der Gleichspannung $U_{dA}$. Hat sich die HGÜ während der ersten Station über einen Kurzschlußpfad oder z. B. auch über den Stromrichter der zweiten Station vollkommen entladen und ist die zweite Station zur Vermeidung einer Energiefluß-Umkehr abgeschaltet, ohne daß aber in der zweiten Station eine Störung im Wechselspannungsnetz oder im Stromrichter vorliegt (« gesunde » Station B), so liegt nach Ende der Störung die Aufgabe darin, bei Wiederkehr der Netzspannung $U_A$ von der nunmehr « wieder gesundeten » Station A aus die stromlose HGÜ hochzufahren.

Die gleiche Aufgabe liegt auch vor, wenn nach der Erstinstallation oder nach Wartungsarbeiten die HGÜ in Betrieb genommen wird.

Die Erfindung sieht auch den Fall vor, daß nach einer Gleichrichterstörung die HGÜ nicht vollständig entladen ist. z. B. kann der Gleichrichterbetrieb nur sehr kurz unterbrochen sein oder es kann der Stromrichter 1A auch durch einen Bypass-Pfad überbrückt sein, ohne daß der Stromrichter 1B stillgesetzt ist. Bei diesem Bypass-Betrieb wirkt die HGÜ dann nur als Blindlast für das Netz NB und bleibt geladen. Der über den Bypasspfad fließende Strom wirkt dann als Blindstrom für die gesunde Station.

Ein derartiger Bypass-Betrieb hat den Vorteil, daß die HGÜ nicht vom entladenen Zustand aus hochgefahren werden muß, vielmehr muß der Strom nur auf den für den normalen Energietransport vorgesehenen Wert erhöht werden, wodurch sich die Anlaufzeit verkürzt. Außerdem kann die HGÜ auch während der Störung noch zur Stabilisierung des Netzes in der gesunden Station ausgenutzt werden.

Der Bypass-Pfad kann dabei über einen eigenen Bypass-Schalter (Schalter 80A in Fig. 13) der Station A geschlossen werden ; vorteilhaft ist aber der Bypasspfad über in Reihe liegende Ventile des Stromrichters 1A (z. B. die Ventile $R^{+'}$, $R^{-'}$, $R^{+''}$, $R^{-''}$ der Figur 1) geführt. In beiden Fällen gilt zwar $U_{dA} = 0$, jedoch bewirkt der Bypass $i_{dA}$ 0, $U_{dLA}$ 0 und $U_{dB}$ 0.

In diesem Fall muß also berücksichtigt werden, daß die gesunde Station B stromführend ist und daß der bei der Wiederaufnahme des Normalbetriebes anwachsende HGÜ-Strom dort nicht zu einem Wechselrichterkippen führen darf.

In der Station B führt ein Einbruch der Wechselspannung $U_B$ dazu, daß der ins Netz NB fließende Strom plötzlich ansteigt und dessen Kommutierung über den für die Wechselrichtertrittgrenze maßgebenden maximalen Löschwinkel (Schonwinkel) andauert. Der Wechselrichter kippt daher und schließt die Spannung $U_{dA}$ kurz. Auch hier kann vorgesehen sein, durch eine Störungsmeldung den Stromrichter 1A der gesunden Station abzuschalten, so daß sich die HGÜ über die kurzgeschlossene Station B entlädt. Vorteilhaft ist aber auch hier, die Station A weiterzubetreiben und die HGÜ nachzuladen, wobei die Station B durch einen Bypasspfad kurzgeschlossen wird. Auch für diesen Bypass-Pfad können ein Bypass-Schalter (80B nach Figur 13) oder bestimmte, durch Vorprogrammierung ausgewählte, in Reihe liegende Ventile des Stromrichters 1B verwendet werden, oder gleich die Ventile des Stromrichters 1B, die entsprechend der Phasenlage des Wechselspannungsnetzes NB (« Wechselrichtertakt ») bei der Störung zufällig Strom führen und das Kippen auslösen. Wegen der bereits geschilderten Vorteile des Bypass-Betriebes kann ein Bypass-Pfad in der Station B selbst dann erwünscht sein, wenn an sich je nach Art der auftretenden Störung kein zwangsläufiges Wechselrichterkippen auftritt oder die Benutzer auch ein rechtzeitiges Stillsetzen des Stromrichters 1B zulassen.

Vor allem in dem Fall, daß der Bypasspfad der Station B über die beim Kippen zufällig stromführenden Ventile geführt wird, müssen die Ventile, mit denen der Normalbetrieb netzgetaktet wieder aufgenommen werden soll, einerseits in Abhängigkeit vom Netztakt, d. h. von der Phasenlage der wiederkehrenden Wechselspannung $U_B$, und andererseits in Abhängigkeit von den im Bypass-Betrieb bereits stromführenden Ventilen vorgenommen werden.

Die für den netzgetakteten Anlauf erforderliche Phasenlage der in der « wiedergesundeten » Station wiederkehrenden Wechselspannung kann aber vom Referenzspannungsgenerator zunächst nur unvollkommen erfaßt werden, da diese Wechselspannung in der Regel von einem Gegenspannungs- und Oberschwingungs-System überlagert ist, das erst allmählich abklingt. Die Erfindung läßt Synchronisationsfehler bis zu 30° zu und ermöglicht, bereits nach wenigen Millisekunden den Normalbetrieb in der wiedergesundeten Station so aufzunehmen, daß die gesunde Station diesen Betriebszustand rasch erkennen und ihrerseits mit der Aufnahme des Normalbetriebes beantworten kann.

Für die erfindungsgemäße Aufnahme des Normalbetriebes ist es wesentlich, daß die wiedergesundete Station bei Wegfall der Störung über die HGÜ ein Signal schickt, das in der gesunden Station eindeutig erkennbar ist. Vorteilhaft prägt die wiedergesundete Station der HGÜ einen Spannungsimpuls ein. Da diese Einprägung des Spannungsimpulses besonders nach einer Störung im Wechselrichter Schwierigkeiten macht, sei zunächst die Einprägung des Spannungsimpulses in der Station B anhand der Figuren 15 bis 22 beschrieben, wobei sich dann die in der Station A nötigen Vorrichtungsteile lediglich als Vereinfachung der für die Station B bereits beschriebenen Vorrichtung ergibt.

Im linken Teil der Figur 15 ist zunächst die bereits bekannte Konfiguration aus der Steuer- und Regeleinrichtung 4B, der Überwachungseinrichtung 64B und der Speicherschaltung 63B dargestellt. Da sich diese Figur auf einen aus Teilstromrichtern aufgebauten Stromrichter 1B entsprechend Figur 1 bezieht, ist vorgesehen, bei der aus Figur 8 bekannten Struktur der Einrichtung 4B den Hochlaufgeber 66B mit zwei Hochlaufgeber 66B' und 66B" aufzubauen, die zu getrennten Zeiten gestartet werden können (Zündimpuls-Freigabesignale QIZ) gestartet und mit einer Zeitversetzung, die mittels eines Verzögerungsgliedes ZS eingestellt wird auf die Vorsteuereinrichtungen 42B geschaltet werden können.

Die Überwachungseinrichtung 64B ist nur durch das Störungsgedächtnis 700 und die Gatter 701 und 725 symbolisiert, wobei das Gatter 701 das Freigabesignal $F_{fB}$ auch dann auf das Störungsgedächtnis 700 gibt, wenn ein (z. B. an der Speicherschaltung 63B abgegriffener) Startimpuls « Start » eingegeben wird.

Die Erläuterung der Schaltung sei mit dem Fall begonnen, daß mit einem derartigen Startbefehl die HGÜ aus dem stromlosen Zustand, bei dem über die Blockierschaltungen alle Ventile gesperrt gehalten werden, angefahren wird. In Figur 16 ist im linken Teil dieser gesperrte Zustand dargestellt. Für $T_0$ sind die Steuerwinkel $\alpha_{B'} = \alpha_{B''} = 90°$, entsprechend der Ausgangsspannung Null des Stromrichters, vorgegeben. Der Steuersatz STB' liefert dann z. B. einen entsprechend $\alpha_B = 90°$ netzsynchronen Zündbefehl $R^+_\alpha{}'$, der zusammen mit dem Startbefehl einem UND-Gatter GU1 (Figur 15) zugeführt ist und dort erst zum Zeitpunkt $T'_0$ ein Ausgangssignal $FS_0$ erzeugt. Der Zündbefehl $R^+_\alpha{}'$ ist aus dem Zündbefehls-Setz $S'_\alpha$ entsprechend der für diesen Fall fest vorprogrammierten Betriebsart ausgewählt, da der netzgetaktete Zündzyklus des Stromrichters 1A' mit den Ventilen $R^{+'}$ und $S^{-'}$ beginnen soll.

Das Signal $FS_0$ wird über ein ODER-Gatter GO1 als synchrones Anlauf-Freigabe-Signal FS auf de dynamischen Eingang eines dynamischen Flip-Flops IZ gegeben. Er erzeugt dort das Zündimpuls-Freigabesignal QIZ = 1, mit dem der Hochlaufgeber angestoßen wird, wenn keine Netzstörung vorliegt (QB = 0).

In Figur 16 sind ferner die vom Steuersatz STB' gebildeten Zündbefehle $R^+_\alpha{}'$, ... $S^-_\alpha{}'$ für den Teilstromrichter 1B' sowie auch die von STB" gebildeten Befehle $R^+_\alpha{}''$, ... $S^-_\alpha{}''$ für den Teilstromrichter 1B" gezeigt, wobei zur Vereinfachung $\alpha_{B'} = \alpha_{B''}$ angenommen sei. Diese von den Steuersätzen gebildeten Zündbefehle sind aber vor dem Zeitpunkt $T'_0$ gesperrt und daher nur gestrichelt gezeichnet.

Diese Sperrung geschieht in der von QIZ angesteuerten Blockierschaltung BS', BS" durch UND-Gatter GU2 gemäß Figur 17. Durch die Koinzidenz des Startsignals und des Zündbefehls $R^+_\alpha{}'$ an GU1 wird also letztlich QIZ = 1 gesetzt und die Sperrung der Zündbefehle aufgehoben, so daß nunmehr die Zündbefehle auf den entsprechenden Verstärker $VR^+$, ... $VS^-$ durchgeschaltet werden, also in den Teilstromrichtern jeweils die Ventile $R^+$ und $S^-$ zünden.

Diese Ventilzündungen erfolgen zuverlässig, da das Signal $FS_0$ gleichzeitig auch über einen Impulsbildner $IF_0$ einen Impuls $FZ_0$ bildet, der über ODER-Gatter $GO3R^+$, $GO3S^-$ die Verstärker $VR^+$ und $VS^-$ ansteuert. Dies führt dazu, daß der Zündimpuls $R^{+'}$ gegenüber dem vom Steuersatz abgegebenen Zündbefehl $R^+_\alpha{}'$ um die in Figur 16 schraffiert dargestellte Fläche verlängert wird, während die schraffierten Flächen für die Zündimpulse $S^-_\alpha{}'$, $R^+_\alpha{}'$ und $S^-_\alpha{}''$ die über $GO3R^+$ und $GO3S^-$ eingekoppelten Impulse $FZ_0$ darstellen.

Wird dem jeweiligen Teilstromrichter ein Steuerwinkel $\alpha \leq 90°$ vorgegeben, so zünden daher die Ventile $R^+$, $S^-$ und legen an die HGÜ-Pole 2, 3 eine Spannung (Station A : $U_{dA} \geq 0$, Station B : $U_{dB} \leq 0$ entsprechend dem festgelegten Vorzeichen), die anschließend durch eine Steuerwinkeländerung auf den für den Normalbetrieb vorgesehenen Betriebswert hochgefahren wird, im Beispiel der Figur 16 durch Hochlauf des Steuerwinkels auf $\alpha_B = 150°$ in der Station B.

Dies gilt selbst dann, wenn dem gegenüber der Referenzspannung des Referenzspannungsgenerators vorgegebenen Steuerwinkel $\alpha$ wegen eines Fehlwinkels $\delta A < 30°$ des Referenzspannungsgenerators gegenüber der tatsächlichen Phasenlage des Netzes ein tatsächlicher Zündwinkel von maximal 120° entspricht. Denn erst bei diesem Grenzwinkel wird die durch $R^+$, $S^-$ einzukoppelnde verkettete Netzspannung $U_{RS}$ negativ und die eingekoppelten Zündimpulse $R^+$, $S^-$ bleiben wirkungslos.

Dies ändert sich auch dann nicht, wenn zum Zeitpunkt $T'_0$ die Ventilkombination $R^+$, $R^-$ und/oder $S^+$, $S^-$ bereits stromführend ist, wie dies z. B. für einen Bypass-Betrieb bei Netzstörung vorgesehen sein kann. Denn auch dann führen $R^+$ und $S^-$ dazu, daß der Strom auf die Ventilkombination $R^+$, $S^-$ kommutiert.

Enthält die Kombination der Bypass-Ventile auch die Ventile $T^+$, $T^-$, so führt der Zündimpuls zu einem Strom über $R^+$, $T^-$ und der eingekoppelte Impuls $S^-$ bleibt ebenso wirkungslos, wie der nächste Impuls $T^-$, der in dem vom Zünd-impuls-Freigabe-Signal QIZ = 1 zum Zeitpunkt $T'_0$ freigebenen normalen Zündzyklus auf den Impuls $R^+$ folgt. Erst der übernächste Zündimpuls des Zündzyklus, d. h. $S^-$, bewirkt dann die normale Stromführung über $S^+$, $T^-$. Die bis dahin durch die Aufnahme des

netzgetakteten Normalbetriebes an die HGÜ angelegte Spannung stellt daher einen Spannungsimpuls dar, der einem vorübergehenden Gleichrichterbetrieb mit $U_{dA} \geqslant 0$ bzw. $U_{dB} \leqslant 0$ entspricht.

Der bisher beschriebene Teil der Schaltung kann daher nicht nur für die Inbetriebnahme der stromlosen HGÜ mittels des Startbefehls verwendet werden, sondern auch für die Aufnahme des netzgetakteten Stromrichterbetriebes bei anderen Betriebszuständen. Ist z. B. nach einer Selbststörung durch ein entsprechendes Ausgangssignal $\overline{QB} = 1$ des Störungsgedächtnisses 700 über den Rücksetzeingang des dynamischen Flip-Flops IZ auf das Ausgangssignal QIZ = 0 gesetzt, so ist der Stromrichter gesperrt. Ist bei länger dauernder Störung die HGÜ-Spannung abgeklungen, so kann ein Freigabesignal $F_{fe}$ nunmehr den Signalzustand $\overline{QB} = 0$ hervorrufen, so daß das dynamische Flip-Flop IZ' erneut mit einem Startbefehl und einem daraus abgeleiteten Impuls $FS_0 = 1$ anlaufen kann.

Es kann aber bei einer Selbststörung auch vorgesehen sein, bei abgeklungenem Strom $i_{dB}$ in der Station B einen Bypasspfad zu schließen, in dem z. B. die Ventile $T^+$ und $T^-$ gezündet werden.

Diese Ventilzündung erfolgt, wenn das durch die Selbststörung gesetzte Signal $\overline{QB}$ die Speicher SBT— und SBT+, die bei dieser Bypass-Ventil-Kombination auf « 1 » gesetzt sind, mittels eines von einem Impulsformer IF gebildeten Bypass-Zusatzimpulses BZ über die UND-Gatter GU3T— und GU3T+ ein Zündimpuls auf VT— und VT+ eingekoppelt wird. Wird nun der Bypass-Betrieb durch einen Befehl « Start » beendet, so gibt wiederum beim Auftreten des Zündbefehls $R^+_\alpha$ das Gatter GU1 ein Signal $FS_0$ ab, das über das Flip-Flop IZ die Zündbefehlssperre in der Blockierschaltung BS der Figur 17 aufhebt und außerdem über den Impulsbildner $IF_0$ entsprechende Zündimpulse auf $VR_+$ und $VS_-$ einkoppelt.

Figur 18 zeigt den Verlauf der Ventilströme $iR^+$, ..., $iT^-$, wobei während des Bypass-Betriebes zunächst $iT^+$ und $iT^-$ fließen, bis durch die beschriebene, von $FZ_0$ ausgelöste normale Zündimpulsfolge $R^+$, $T^-$, $S^+$, $R^-$, ... die oben beschriebenen Stromkommutierungen ablaufen. Figur 19 zeigt am Beispiel eines bei Netzwiederkehr stark oberwellenhaltigen und unsymmetrischen Netzes, dessen Verlauf in Fig. 22 im einzelnen dargestellt ist, die dabei auftretenden Ventilspannüngen $UT^+$ und $US^+$ für die Ventile $T^+$, $S^+$ und die resultierende HGÜ-Spannung und die Stromführungsdauern, die durch Pfeile angegeben sind. Dabei ist der eingeprägte Spannungsimpuls schraffiert dargestellt, der bei der gewählten Vorzeichenwahl negativ ist entsprechend einem vorübergehenden Gleichrichterbetrieb der Station B.

Soll der vorübergenende Spannungsimpuls ausgeprägter sein, so kann dies leicht dadurch erreicht werden, daß in der jeweiligen Station der Steuerwinkel vorübergehend in den Gleichrichterbetrieb verschoben wird, wobei diese Verschiebung dem z. B. in Figur 16 gezeigten Hochlauf des Steuerwinkels vorgelagert oder dem Start des Hochlaufs überlagert sein kann.

Für die Ansteuerung des zweiten Teilstromrichters 1B" gilt das gleiche, wobei lediglich durch ein Verzögerungsglied ZS erreicht wird, daß durch $\overline{QB}$ das entsprechende dynamische Flip-Flop IZ mit einer gewissen Zeitverzögerung angesteuert, also der Anlauf der zweiten Teilstromrichters mit einer gewissen Zeitverzögerung erfolgt. Der Aufbau der weiteren, durch einen Doppelstrich gekennzeichneten Bauteile ist identisch mit dem für den Teilstromrichter 1B' erläuterten Vorrichtungsteil, so daß im folgenden beide Teilstromrichter weitgehend als ein einziger Stromrichter aufgefaßt und erläutert wurden.

Bei dieser Variante ist für Übergang vom Bypass-Betrieb in den Normalbetrieb vorausgesetzt, daß der HGÜ-Strom $i_d$ vor Schließen des Bypass-Pfades abgeklungen war und der Bypass-Pfad über eine vorprogrammierte Auswahl von in Reihe liegenden Ventilen geschlossen wurde. Die Speicher $SBT^+$, $SBT^-$ können dabei in der Speicherschaltung enthalten sein.

Bei einem Wechselrichterkippen sind ebenfalls in Reihe liegende Ventile stromführend, jedoch hängt es von der zufälligen Phasenlage des Netzes während des Kippens ab, welche dieser Ventile diesen Kurzschlußpfad bilden. Um nun rasch in den Bypass-Betrieb übergehen zu können, können diese Ventile als Bypass-Ventile beibehalten werden, sofern ihre Kombination festgestellt wird und dann unter den Ventilen des Stromrichters entsprechend dieser Kombination diejenigen Ventile ausgewählt werden, die für den Wiederanlauf des Normalbetriebes geeignet sind.

Hierzu dienen die in Figur 17 dargestellten Speicher $SBR^+$, ... $SBS^-$, die ebenfalls von den Zündbefehlen $S_\alpha$ angesteuert werden und bei jeder Phasenlage des Netzes, also zu jedem Zeitpunkt innerhalb des Zyklusses der Steuerbefehle $S_\alpha$ feststellen, über welche Stromrichterventile jeweils ein Wechselrichterkippen erfolgen könnte. Es ist dies zumindest jeweils die Ventilgruppe, die infolge Überschreitung des maximalen Löschwinkels im Gegensatz zur normalen Kommutierungsfolge noch stromführend ist, und die dazu in Reihe liegenden Ventilgruppen.

In Figur 20 ist angenommen, daß der von Kippen ausgelöste Selbststörungs-Meldeimpuls auftritt, bevor der Steuersatz den nächsten Zündbefehls $S^+_\alpha$ abgibt (Zeitpunkt $T_1$), also bei leitendem Ventil $R^+$ zuletzt das Ventil $T^-$ angesteuert wurde. Daher ist ein durch $S^+_\alpha$ rücksetzbarer Speicher $SBR^-$ mit dem Befehl $T^-_\alpha$ auf den Wert « 1 » gesetzt und gibt an, daß das Ventil $R^+$ am Wechselrichter-Kurzschluß beteiligt ist. Während durch QIZ = 0 an GU2 der « reguläre » Befehl $S^+$, der vom Steuersatz erzeugt wird, gesperrt ist, wird an $GU3R^-$ über den Speicher $SBR^-$ und den Befehl BZ der in Figur 20 schraffiert Bypass-Zusatzimpuls auf das Ventil $R^-$ gegeben, das zusammen mit dem jetzt nicht gelöschten Ventil $R^+$ ein sicheres Schließen des Bypass-Pfades $R^+$, $R^-$ bewirkt.

Tritt das Kippen nach einem anderen Zündbefehl auf, so bewirken die Speicher $SBR^+$, ... und Gatter $GU3R^+$ ... eine entsprechende Auswahl, Speicherung und Ansteuerung der möglichen Bypass-Ventil-Kombination. Es kann aber auch — insbesondere in der Station A — vorgesehen sein, die Auswahl der

Bypass-Ventile nicht derart betriebsabhängig vorzugeben, sondern stets eine vorprogrammierte Kombination (gegebenenfalls auch mehrere oder alle in Reihe liegende Stromrichter-Ventilgruppen) in der Speicherschaltung vorzugeben und über eine Ansteuerung der Gatter GU3 bzw. GO2 im Kurzschlußfall einzukoppeln.

Zur Erzeugung des gewünschten Spannungsimpulses beim Vorgehen nach Figur 16 ist es aber erforderlich, den für die Aufnahme des netzgetakteten Betriebes erforderlichen Anfangstakt entsprechend der betriebsabhängig vorgegebenen Bypass-Ventil-Kombination zu wählen. Für die Bypass-Ventile $R^+$, $R^-$ soll die netzgetaktete Zündung also jetzt mit einer Kommutierung auf die Ventile $S^-$ oder $S^-$ beginnen, wozu die Auswahlschaltung AS der Figur 15 vorgesehen ist.

Daher werden nach Figur 21 in der Folge SZ der hinter den Verriegelungen GO2 abgegriffenen, unabhängig vom Normal- oder Bypass-Betrieb abgegebenen Zündimpulse jeweils ein Impuls (z. B. der Impuls $S^+ + S^-$) gebildet, der zwei in Reihe liegenden und ein Potentielles Bypass-Paar bildenden Ventilen zugeordnet ist (ODER-Gatter GO4R, GO4S, GO4T). Diese potentielle Bypass-Kombination wird an UND-Gattern GU4R, ... gesperrt, bis im Störfall über den Bypass-Zusatzimpuls BZ die Bypass-Ventilzündungen tatsächlich vorgenommen werden und die Bypass-Kombination in den Speichern SQR, ..., die jeweils am Ende einer Störung mit dem Zündimpuls-Freigabe-Signal QIZ rücksetzbar sind, gespeichert wird.

Während also die Speicher $SBR^+$, ... der Blockierschaltung aus der Zündbefehlsfolge des Steuersatzes jeweils die möglichen Bypass-Ventile bestimmen und im Störungsfall deren Zündung bewirken, wählen die Gatter GO4 aus den tatsächlich abgegebenen Zündimpulsen die möglichen Bypass-Ventile, die nur im Störungsfall gespeichert werden.

Weitere ODER-Gatter GO5S, GO5R, GO5T vereinigen die in der Zündbefehlsfolge $S_\alpha$ enthaltenen, jeweils zum Abkommutieren des Stromes von einem der ausgewählten Bypass-Ventile benötigten Zündbefehle (für die Bypass-Kombination $R^+$, $R^-$, also die Zündbefehlskombination $S^+_\alpha + S^-_\alpha$), die dann bei Koinzidenz mit der gespeicherten Kombination, die durch Gatter GU5S, GU5R, GU5T und GO6 festgestellt wird, zu einem Synchronsignal $FS_\alpha$ führen.

Das Gatter GO1 gibt dann als Anlauf-Freigabe-Signal das Synchronsignal FS anstelle des früher besprochenen Startsignals « Start », das am Flip-Flop IZ das Zündimpuls-Freigabe-Signal QIZ erzeugt, wenn IZ nach Beendigung der Netzstörung (QB = 0) freigegeben wird.

Dadurch startet dann der gewünschte Anlauf des netzgetakteten Normalbetriebes selbsttätig nach Ende der Netzstörung.

Zusammengefaßt zeigt Figur 20 also : Im Normalbetrieb geben die Signale $QR^+$, ... $QS^-$ jeweils ein Ventil an, das im Falle einer Kommutierungsstörung bei der nächsten Zündung als Bypass-Ventil in Frage kommt und durch den Bypass-Zusatzimpuls $FZ_O$ gezündet werden sollte, um den Bypass zu schließen. Die Netzstörung führt dazu, daß die Netzspannung $U_B$ zum Zeitpunkt $T_1$ unter einen vorgegebenen Grenzwert absinkt und über QIZ = 0 zur Sperrung der normalen Zündbefehle $S_\alpha$ bzw. $Z_\alpha$ und zur Einkopplung des schraffierten Bypass-Zusatzimpulses auf $R^-$ führt. Während der Störung ist dann nur die Ventilkombination $R^+ + R^-$ stromführend und diese Ventilkombination ist in der Auswahlschaltung gespeichert. Nach Wiedereinsetzen der Netzspannung (Zeitpunkt $T_2$) und Auftreten des Freigabesignals (Zeitpunkt $T_2$, Setzen des Störungsgedächtnisses auf $Q_B = 1$) wählen die Speicher SQR, SQS, SQT der Auswahlschaltung ein Ventil für die Aufnahme des Normalbetriebes aus und die Auswahlschaltung erzeugt dann das Anlauf-Freigabesignal, wenn der mit dem Steuerwinkel betriebene netzgetaktete Stromrichter den zu diesem ausgewählten Ventil gehörenden Zündbefehl abgibt. Mit dem Anlauf-Freigabesignal FS wird dann der normale Zündzyklus freigegeben, der mit der Zündung dieses Ventiles beginnt und zum Abkommutieren des Stromes von einem der Bypass-Ventile führt.

Das Wechselspannungsnetz setzt, wie Figur 20 für die Phasenspannung $(UB)_R$ und die Spannungsamplitude UB zeigt, sehr unregelmäßig ein. Das Störungsgedächtnis liefert das Signal QB = 1 erst nach einer bestimmten Zeit, die der Referenzspannungsgenerator zur Ermittlung einer einigermaßen zuverlässigen Phasenlage des Netzes benötigt. Ein rasch arbeitender Referenzspannungsgenerator ist in der DE-A-33 46 291 beschrieben und stellt sicher, daß dann die Phasenlage des Netzes bis auf weniger als 30° genau bestimmt ist. Ein im Impulsbildner 713 in Figur 11 enthaltenes Verzögerungsglied kann sicherstellen, daß in Station B der Selbstfreigabeimpuls Ffe und damit das Freigabesignal und QB = 1 erst nach der für die Synchronisierung erforderlichen Mindestzeit erzeugt wird.

In Fig. 22 ist für einen typischen Verlauf der wiederkehrenden verketteten Phasenspannungen USR, UTS, URT des Wechselspannungsnetzes die Überlagerung der sinusförmigen Grundschwingung mit einem Gegenspannungssystem und mit Oberschwingungssystemen dargestellt. Mit $S^*_\alpha$ ist ein hypothetischer Satz von Zündimpulsen dargestellt, der zum Aussteuerungsgrad O (Steuerwinkel B = 90°) und zur Grundschwingung des wiederkehrenden Netzes gehört.

Dieser Satz $S^*_\alpha$ ist hypothetisch, d. h. nicht realisierbar, da die Grundschwingung zum Zeitpunkt $T_2$ noch nicht erfaßbar ist. Vielmehr bildet der Referenzspannungsgenerator eine Referenzspannung $U_{Bsyn}$, zu der bei einem hypothetischen Steuerwinkel αB = 90° die ebenfalls hypothetische Zündimpulsfolge $S^+G$, $R^-G$, ... gehört. Diese Impulsfolge ist ebenfalls nur hypothetisch, da im Steuersatz zur Durchführung des erfindungsgemäßen Verfahrens kein konstanter Steuerwinkel $\alpha_B$ = 90° vorgegeben wird. Jedoch zeigt der Vergleich der beiden hypothetischen Impulse $S^{+*}_\alpha$ und $S^+G$, daß zum Zeitpunkt $T_3$ die Referenzspannung $U_{Bsyn}$ von der (nicht erfaßbaren) Grundschwingung um eine Phasendifferenz

abweichen kann, die bis zu 30° beträgt. Erst zum Zeitpunkt $T_4$ (typisch : T4-T3 8 msec) ist der Referenzspannungsgenerator so weit eingeschwungen, daß die Referenzspannung $U_{Bsyn}$ praktisch synchron mit der Grundschwingung des (noch immer von Oberschwingungen überlagerten) Netzes ist und $R^{-*}_{\alpha} = R - G$ gilt.

Um den Normalbetrieb möglichst umgehend nach Netzwiderkehr aufzunehmen, ist nicht vorgesehen, mit der Freigabe der Zündimpulse bis zum Zeitpunkt $T_4$ zu warten. Vielmehr genügt es bereits, wenn die Fehlsynchronisierung der Referenzspannung weniger als 30° beträgt, d. h. die Zündimpulse werden bereits zum Zeitpunkt $T_3$ freigegeben.

In Fig. 22 ist angenommen, daß für den Anlauf des Normalbetriebes mit dem Steuerwinkel $\alpha_B = 90°$ (d. h. Austeuerung O, entsprechend einem Gleichspannungssollwert $U_{dB}^* = 0$) begonnen und innerhalb von etwa zwei Netzperioden auf einen Maximalwert $\alpha_B = \alpha_{max}$ hochgefahren wird, der einem für den Normalbetrieb vorgesehenen Nennwert entspricht. Entsprechend wird also das Ventil $S_+$ zum Zeitpunkt $T_3$ mit dem Zündimpuls $S^+_{\alpha} = S^+G$ gezündet, während etwa beim Zeitpunkt $T_4$ der tatsächliche Zündbefehl $R^-_{\alpha}$ gegenüber dem hypothetischen, zu $\alpha_B = 90°$ gehörenden $R^-G$ bereits um $(\alpha_{max} - 90°)/2$ verschoben ist. Zum Zeitpunkt $T_5$ ist $\alpha_{max} \approx 150°$ erreicht.

Übergang in den Normalbetrieb : Vorgabe des Steuerwinkels

Entsprechend den bisherigen Erläuterungen ist es also möglich, daß die eine Station nach Wegfall einer Störung auf die HGÜ einen Impuls gibt, insbesondere einen Spannungsimpuls, der auf der anderen Seite erfaßbar ist und einen Selbstfreigabeimpuls auslöst, mit dem dort die Aufnahme des Normalbetriebs ebenfalls eingeleitet wird. Die in Fig. 15 als Hardware gezeigte Anordnung kann teilweise auch in Software ausgeführt und mit der Speicherschaltung 63B vereinigt werden. Die Speicherschaltung 63B hat im wesentlichen nur festzulegen, welche der für den Störungsfall möglichen Notbetriebe (z. B. Bypass-Betrieb oder Stillsetzung der Strecke) ausgewählt werden. Die im folgenden für die einzelnen Notbetriebe beschriebenen Maßnahmen für die Aufnahme des Normalbetriebes geben dem Fachmann ausreichende Hinweise, wie die einzelne Signale der Überwachungseinrichtung in der Speicherschaltung für den Einzelfall zu verknüpfen sind, um das jeweilige Anfahrprogramm im Zusammenwirken mit dem Aufbau der Stationen nach den Fig. 8, 9, 10 und 13 durchzuführen.

Im folgenden wird stets diejenige Station, deren Störung die Unterbrechung des Normalbetriebes verursacht hat, als « die eine Station » bezeichnet. Im Fall einer Gleichrichterstörung ist dies die Station A und im Fall einer Wechselrichterstörung die Station B. Dabei kann — je nach Wahl der Energieflußrichtung für den Normalbetrieb — auch vorgesehen sein, daß eine am einen Ende der HGÜ angeordnete Station einmal die Rolle der Station A und ein anderesmal die Rolle der Station B übernimmt, da die Aufgaben und der Aufbau der Überwachungseinrichtung und der Speicherschaltung sowohl für den Gleichrichterbetrieb wie für den Wechselrichterbetrieb weitgehend gleich sind und beide Stationen daher möglichst identisch aufgebaut sind.

Nach Wegfall der Störung in der einen Station erzeugt dort die zugehörige Überwachungsstation (als « die eine Überwachungsstation » bezeichnet) den Selbstfreigabe-Impuls, der in dieser einen Station zum (als « führendes Freigabesignal » bezeichneten) Freigabesignal führt, mit dem der Anlauf ausgelöst wird.

Dieser Anlauf wird nach der HGÜ-Laufzeit an den gleichspannungsseitigen Anschlüssen der anderen (ungestörten) Station bzw. des anderen Stromrichters erfaßt und löst somit in der anderen Überwachungseinrichtung einen Fremdfreigabe-Impuls aus, der zum « abgeleiteten » Freigabesignal führt.

Grundgedanke für den Anlauf ist also, daß bei ungestörtem (« wiedergesundetem ») Zustand der vorher gestörten einen Station dort ein führendes Freigabesignal erzeugt und die Aufnahme des netzgetakteten Normalbetriebes des einen Stromrichters ausgelöst wird. In der anderen Station dagegen werden an den gleichspannungsseitigen Anschlüssen die dadurch hervorgerufenen Auswirkungen in ein abgeleitetes Freigabesignal umgesetzt, das dort ebenfalls den netzgetakteten Normalbetriebs auslöst, die somit mit der kürzestmöglichen Verzögerung nach Wiedergesundung der einen Station erfolgt. Fernwirksignal-Leitungen sind nicht erforderlich.

Dies setzt einerseits voraus, daß die von der einen Station hervorgerufenen elektrischen Vorgänge in der anderen Station eindeutig erkannt werden, andererseits müssen die Vorgänge in beiden Stationen aufeinander abgestimmt sein.

Beide Voraussetzungen werden dadurch erfüllt, daß in der einen Station zunächst der HGÜ ein Spannungsstoß eingeprägt wird und der Steuerwinkel des einen Stromrichters nach einer vorprogrammierten Hochlauffunktion etwa auf den für den Normalbetrieb vorgesehen Wert hochgefahren wird, wobei, wie Fig. 22 zeigt, der Spannungsstoß zwangsläufig durch das Hochlaufen des Steuerwinkels erzeugt oder im Bedarfsfall durch eine gesonderte und vorübergehende pulsartige Verschiebung des Steuerwinkels erzeugt werden kann. In der anderen Station wird der Steuerwinkel dann — von einem ungefähr dem Aussteuerungsgrad Null entsprechenden Winkel nahe 90° ausgehend — ebenfalls nach einer vorprogrammierten Hochlauffunktion auf den für den Normalbetrieb vorgesehen Wert hochgefahren.

Die beiden Hochlauffunktionen sind dabei aufeinander abgestimmt. Vorteilhaft beträgt ihre Hochlaufzeit etwa zwei Wechselspannungsperioden.

Während der Störung ist der gestörte eine Stromrichter entweder ganz abgeschaltet oder über den

Bypass-Pfad kurzgeschlossen. Daher erübrigt sich während des Notbetriebes zumindest die Aufschaltung der Modell-Störspannung an der Vorsteuereinrichtung im Steuerkanal des einen Steuersatzes. Andererseits muß der während der Aufnahme des Normalbetriebes hochlaufende Steuerwinkel am Ende des Anlaufvorgangs den für den stationären Betrieb vorgesehen Wert des Steuerwinkels erreichen bzw. möglichst ohne größere Sprünge in diesen stationären Wert übergehen. Würde daher der rampenförmige Hochlauf durch einen Hochlaufgeber am Eingang für den Vorgabewinkel erzeugt werden, so müßte dieser Vorgabewinkel, der in der Regel von einem überlagerten Führungsgrößenregler (z. B. dem Stromregler 41A bzw. dem Löschwinkelregler 41B) gebildet wird, in dem Maße zurückgenommen werden, in dem nunmehr die vorsteuernde Modell-Störgröße den Steuerwinkel bestimmt.

Deshalb ist vorteilhaft vorgesehen, den die Hochlauffunktion erzeugenden Hochlaufgeber 66A zumindest in der Station A (Fig. 10) am Eingang für die Vorsteuerspannung der Vorsteuereinrichtung anzuordnen und mittels des Umschalters 61A während des Störbetriebes und des Hochlaufvorgangs als Ersatzwert der Modell-Störgröße das Ausgangssignal des Hochlaufgebers aufzuschalten. Erst nach Erreichen des Hochlauf-Endwertes wird dann durch Umlegen des Umschalters 61A auf den Meßwert $U_{dLA}$ (bzw. die entsprechende Modellgröße $\widehat{U}_{dB}$) umgeschaltet. Spätestens wenn damit der stationäre Normalbetrieb erreicht ist, wird auch der Vorgabewinkel wieder am für den Normalbetrieb vorgesehenen Stromregler 41A abgegriffen, der während der Störung inaktiviert sein kann.

In der Station B dient die Modell-Störgröße zur Vorgabe des Löschwinkels und zur Einhaltung der Wechselrichtertrittgrenze. Ist während des Störbetriebs auf die Vorsteuerung mit dem entsprechenden Vorsteuerwinkel $\alpha_{Bv}$ verzichtet, so entsteht trotzdem keine Gefahr eines Wechselrichterkippens, da selbst im Falle eines Beipaßbetriebes der Steuerwinkel weit von der Wechselrichtertrittgrenze entfernt ist. Dies gilt auch noch, wenn nach einer Gleichrichterstörung die Station A den Strom zu erhöhen beginnt. Nimmt daher nach einem abgeleiteten Freigabesignal die Station B den Wechselrichterbetrieb wieder auf, so bildet die dort vorgegebene Hochlauffunktion einen gesteuerten Modell-Ersatzwert für die Modell-Störgröße, der ebenfalls die aus dem tatsächlichen induktiven Gleichspannungsabfall ermittelte Modell-Störgröße ersetzen kann und zur Begrenzung des Löschwinkels führt. Deshalb kann auch hier der Hochlaufgeber am Vorsteuerwinkel-Eingang der Vorsteuereinrichtung angeordnet werden und mittels eines Umschalters zwischen dem durch dem Hochlaufgeber gesteuert vorgegebenen Modellwert und dem aus dem induktiven Gleichspannungsabfall errechneten Wert der Modell-Störgröße umgeschaltet werden, wenn oder nachdem ungefähr der Hochlaufendwert erreicht ist.

Die beiden Hochlauffunktionen stellen somit Ersatzwerte für die jeweiligen Vorsteuergrößen dar. Es erscheint daher zunächst notwendig, daß beide Hochlauffunktionen gleichlaufend d. h. bezüglich ihrer Kurvenform und ihres Plateaus identisch sind. Eine derartig starre Abstimmung der beiden Hochlauffunktionen ist jedoch nicht erforderlich. z. B. kann der Hochlaufendwert des Hochlaufgebers der Station A durchaus etwas höher liegen und zu einem HGÜ-Strom führen, der im Hinblick auf den von der Hochlauffunktion in der Station B vorgegebenen Steuerwinkel zu einem jenseits der Wechselrichtertrittgrenze liegenden Löschwinkel führen könnte. Der Löschwinkelregler der Station B ist nämlich in der Lage, den Steuerwinkel $\alpha_B$ entsprechend der Wechselrichtertrittgrenze zurückzunehmen.

Für die verschiedenen Arten des Notbetriebes ergeben sich verschiedene mögliche Varianten.

a) Anlauf aus stromloser Strecke

In diesem Fall sind nach Eintritt der Störung beide Stromrichter gesperrt, wobei die Entladung der Strecke z. B. während eines Kurzschlusses der Spannung $U_{dB}$ über den Kurzschluß in dieser einen Station erfolgt sein kann oder auch, z. B. bei einer Gleichrichterstörung in der Station A, durch eine vorübergehende Zündwinkelverschiebung in der anderen, gesunden Station erzwungen werden kann.

Bei Wiederkehr des gestörten Netzes löst dann der entsprechende Selbstfreigabe-Impuls in der einen Überwachungsstation das führende Freigabesignal aus. Der in der einen Station wieder aufgenommene Normalbetrieb löst in der anderen Station das abgeleitete Freigabesignal aus, das auch dort den Anlauf nach der vorprogrammierten Hochlauffunktion anstößt. Beide Hochlauffunktionen beginnen etwa beim Aussteuerungsgrad Null (Steuerwinkel ungefähr 90°).

Ergänzend kann vorgesehen sein, daß der Steuerwinkel der einen Station aus der Hochlauffunktion und einer vorübergehenden Zusatzverschiebung in Richtung der Gleichrichter-Vollaussteuerung bestimmt ist, wobei diese Zusatzverschiebung dem Start der Hochlauffunktion vorgelagert oder überlagert sein kann.

Bei einer Störung des Wechselrichterbetriebes in der Station B bedeutet das, daß der bereits beschriebene negative Spannungsimpuls, der bei der Aufnahme des Normalbetriebes eingeprägt wird, verstärkt ist. Dies erleichtert sowohl die Bildung des abgeleiteten Freigabeimpulses wie den Start des Gleichrichterbetriebes in der Station A. Auch nach einer Störung des Gleichrichterbetriebes in der Station A ist ein derartiger Impuls vorteilhaft, der dazu führt, daß Strom $i_{dA}$ und Spannung $U_{dA}$ schnell ansteigen und die HGÜ aufladen, so daß sowohl der Hochlauf der Leistungsübertragung in den für den stationären Normalbetrieb vorgesehenen Wert schneller erfolgen wie das abgeleitete Freigabesignal der Station B leichter gebildet werden kann.

b) Notbetrieb mit Bypass-Pfad

Bei längerer Störung ist ein Betrieb mit Bypass-Pfad vorgesehen, bei dem in der gestörten einen Station beim Auftreten des Selbststörungs-Meldeimpulses die netzgetakteten Zündbefehle des einen Stromrichters gesperrt und der Beipaßpfad geschlossen wird. Wie bereits erläutert, kann dieser Bypass-Pfad vorteilhaft durch Zündung ausgewählter, in Reihe liegender Stromrichterventile geschlossen werden. In der anderen Station wird mittels des Fremdstörungs-Meldeimpulses der Steuerwinkel so weit in den Gleichrichterbetrieb verschoben, wie es zur Einspeisung eines den Bedürfnissen des anderen Netzes erforderlichen Bypass-Stromes in die HGÜ erforderlich ist.

Der Übergang von diesem Bypass-Betrieb in den Normalbetrieb erfolgt nun, wenn das Netz dieser einen Station wieder gesundet ist und das führende Freigabesignal erzeugt, das die Aufnahme des netzgetakteten Stromrichterbetriebes mit dem auf dem betriebsmäßigen Aussteuerungsgrad hochlaufenden Steuerwinkel auslöst. Gleichzeitig wird der Bypass-Pfad gelöscht, wozu es in der Regel dann keiner eigenen Maßnahme bedarf, wenn als Bypass-Pfad kein eigener Bypass-Schalter oder kein eigenes Bypass-Ventil, sondern in Reihe liegende, für den Normalbetrieb erforderliche Stromrichterventile verwendet werden.

In der anderen Station löst dann das abgeleitete Freigabesignal die Wiederaufnahme des Normalbetriebes aus, wobei der Steuerwinkel von dem vom Bypass-Strom bestimmten Steuerwinkel ausgehend nach der Hochlauffunktion auf den stationären Wert des Steuerwinkels hochläuft.

Handelt es sich dabei um einen Bypass-Betrieb nach einer Störung der Station A, so ist es nicht erforderlich hierbei eine eigene impulsförmige Verschiebung des Steuerwinkels zu Beginn des Hochlaufvorgangs vorzunehmen und die netzgetaktete Zündung zu Beginn des Anlaufvorgangs, d. h. die Einleitung des normalen Gleichrichterbetriebes, bereitet keine Schwierigkeiten. Vielmehr kann entsprechend Fig. 16 der Gleichrichterbetrieb mit der Taktung bestimmter, hierfür fest vorprogrammierter Ventile beginnen. Auch die Auswahl der Bypass-Ventile ist vorzugsweise vorprogrammiert, wobei der Bypass-Strom nicht nur über einen einzigen, aus in Reihe liegenden Ventilen gebildeten Bypass-Pfad, sondern auch über mehrere oder sogar alle Stromrichterventile geführt werden kann. Dies ist möglich und u. U. vorteilhaft, wenn z. B. in Station A durch geeignete Maßnahmen verhindert wird, daß sich nach einer Störung das wiederkehrende Netz NA sofort wieder über den Bypass-Pfad entlädt.

Während eines Beipaßbetriebes, bei dem der Bypass-Pfad über in Reihe liegende Ventile des Stromrichters der Station B geschlossen ist, ist die Auswahl der Bypassventile für die Dauer der Störung gespeichert. Entsprechend dieser gespeicherten Ventilkombination wird für die Wiederaufnahme des netzgetakteten Normalbetriebes auf die im Zusammenhang mit der Auswahlschaltung in Fig. 15 beschriebene Weise eines der Ventile ausgewählt, die im Zyklus der netzgetakteten Zündbefehle der Abkommutierung des Stromes von einem der Bypass-Ventile entsprechen.

Wechselspiel zwischen Normalbetrieb und Notbetrieb

Der geschilderte Normalbetrieb ermöglicht nach dem Prinzip der Vorsteuerung eine schnelle Regelung der HGÜ, ohne allerdings eine Störung vollkommen ausschließen zu können. Das Prinzip des ohne Verwendung von Fernwirksignalen angestoßenen, programmierten Hochlaufes ermöglicht den Übergang in den Normalbetrieb sowohl bei stromloser HGÜ wie bei einem Bypass-Betrieb innerhalb sehr kurzer Anlaufzeiten. Das im folgenden beschriebene Prinzip des Bypass-Betriebes ermöglicht nun, bei einer Störung eines der beiden Stationen die HGÜ auch während der Dauer der Störung als Blindlast für das Wechselspannungsnetz der ungestörten Station zu betreiben und entsprechend den Bedürfnissen dieses ungestörten Netzes zu steuern oder regeln.

Jedes dieser drei Prinzipien kann im Zusammenhang mit anderen Betriebsverfahren einer HGÜ einzeln oder in Verbindung mit einem anderen dieser Prinzipien vorteilhaft verwendet werden. Die im folgenden beschriebene Kombination aller drei Prinzipien ermöglicht es, die HGÜ sowohl im Normalbetrieb wie im Notbetrieb schnell zu regeln, um damit z. B. subsynchrone Resonanzerscheinungen oder andere dynamische Ausgleichsvorgänge in den Netzen zu dämpfen, die wirtschaftlichen Folgen einer Störung, insbesondere eines Spannungseinbruchs in einem der Wechselspannungsnetze gering zu halten und jeweils den Übergang zwischen Normalbetrieb, Bypass-Betrieb und gegebenenfalls unvermeidlichem) Betrieb mit Entregung der HGÜ in äußerst kurzer Zeit zu vollziehen.

Das Prinzip des Bypass-Betriebes einschließlich des Übergangs in den Bypass-Betrieb beim Auftreten einer Störung ist anhand der Signalverläufe in den Fig. 26 bis und 27 und der in den Fig. 9 und 10 gezeigten Ausführungsbeispiele der beiden Stationen näher erläutert. Neben diesem Bypass-Betrieb kann es — je nach Art der Störung — auch erforderlich sein, während der Störung die HGÜ stromlos zu halten ; dieser Notbetrieb ist in den Fig. 24 und 25 gezeigt. Für die Aufnahme des Normalbetriebes kann es dabei, wie bereits erwähnt wurde, sowohl bei einer HGÜ-Fernübertragung wie auch bei einer Kurzkupplung wünschenwert sein, daß z. B. der Übergang vom Bypass-Betrieb in den Normalbetrieb so gestaltet wird, daß das gestörte Netz bei Wiederkehr der Spannung vorwiegend mit Blindstrom belastet wird.

Dieser Übergang kann nicht nur von dem hochzusteuernden Gleichstrom selbst, sondern auch von der Anzahl der zur Verfügung stehenden und gleichzeitig am Übergang beteiligten Teilstromrichter beeinflußt werden. Dadurch ergibt sich die Möglichkeit, den angestrebten Gradienten in der Zunahme des Gleichstroms von der Zunahme des Netzblindstroms in diskreten Stufen zu entkoppeln und dadurch

die Anforderungen, die an das Netz und an die Stromregelung gestellt werden, in gewissem Umfang entsprechend der Anzahl der getrennt geschalteten Teilstromrichter getrennt voneinander zu erfüllen.

Dies ist in Fig. 15 dadurch ermöglicht, daß das Zeitglied ZS, das am Rücksetzeingang des dynamischen Flip-Flops die Bildung des Zündimpuls-Freigabesignals zur Entriegelung der Blockierschaltung BS" des Teilstromrichters 1B" freigibt, die Aufnahme des netzsynchron getakteten Stromrichterbetriebes gegenüber dem Teilstromrichter 1B' verzögert. Die ausgewählte, von der Kombination der Bypass-Ventile abhängige Impulsfreigabe der einzelnen Teilstromrichter erfolgt also in Stufen (zeitlich versetzt), wodurch auch die Zunahme der Netzblindleistung ebenfalls in Stufen erfolgt.

Im folgenden ist für den Anstieg des Steuerwinkels im allgemeinen eine Hochlauffunktion gewählt, die den Steuerwinkel von einem gegebenenfalls etwas von 90° abweichenden Wert linear bis in den stationären Zustand fährt. Obwohl es zunächst zwingend erscheint, daß die beiden Hochlauffunktionen, die ja als gesteuerte Werte den betriebsmäßig vorgegebenen Modellwert der Modell-Störspannung beim Übergang in den Normalbetrieb ersetzen, praktisch identisch sind, ist eine derart enge Abstimmung beider Hochlauffunktionen nicht zwingend. Es kann sogar vorteilhaft sein, die beiden Hochlauffunktionen insofern gegenläufig vorzugeben, als z. B. nach einer Störung in Station B der Steuerwinkel des Gleichrichters mit einer zunächst größeren und später abnehmenden Steigung hochgefahren werden kann, während der Wechselrichter-Steuerwinkel zunächst langsam und später schneller anwächst.

Dadurch soll die gesunde Station möglichst schnell mit Wirkstrom belastet werden, wobei die HGÜ schnell aufgeladen wird. Für die anfangs gestörte Station, deren wiederkehrende Spannung häufig starke Einschaltspitzen aufweist, wirkt die HGÜ dagegen zunächst als spannungssenkrechte Blindlast, wobei gleichzeitig ein sicheres Kommutieren erreicht wird.

a) Beispiel mit unterschiedlichen Hochlauffunktionen

Fig. 23 zeigt diese Variante des Anlaufs am Beispiel eines Netzkurzschlusses in NB und eines Bypass-Betriebes während der Störung.

Zum Zeitpunkt $t_{10}$ bricht die Spannung $U_B$ zusammen und das Grenzwertmelde-Ausgangssignal G711B zeigt das Unterschreiten der Grenzspannung $U_{Bgrenz}$ an und setzt das führende Störungssignal QB = 0. Dies löst in der Blockiereinrichtung des Stromrichters 1B eine Kommutierungssperre aus, indem alle regulären Zündbefehle des Steuersatzes unterdrückt und gleichzeitig über einen Bypass-Zusatzimpuls der Bypass-Pfad gezündet wird ; dieser Zustand ist durch einen Steuerwinkel $\alpha_B = 90°$ entsprechend der Ausgangsgleichspannung $U_{dB} = 0$ symbolisiert.

Über den Bypass-Pfad wird die HGÜ und das Filter der Station B umgeladen, was durch einen Stromfluß $i_{dB}$ (der den in Fig. 23 übertrieben lang dargestellten Zustand $i_{dB} = 0$ häufig gar nicht erreicht) und die Schwingung der Spannung $U_{dLB}$ an dem dem Stromrichter abgewandten Ende der Stromrichterdrossel LB erkennbar ist. Die während des Normalbetriebes z. B. auf einem Betriebswert $U^*_{dBo}$ gehaltene und während des Stromstoßes kurzgeschlossene Spannung $U_{dB}$ nimmt einen negativen Wert an, wenn der Strom $i_{dB}$ infolge der Umladung Null wird und die Bypass-Ventile erlöschen. Der durch die Kommutierungssperre ohnehin bereits wirkungslose Führungsgrößenregler 41B (Fig. 9), der während der Störung der Station B nur irreguläre Werte zeigen würde, wird inaktiviert, um nach Beendigung der Störung von einem definierten Wert $\Delta x_B = 0$ wieder anlaufen zu können.

Ebenso kann der Schalter 61B mit oder nach dem Auftreten des Störungssignals QB = 0 von der die Modellstörgröße aus Istwerten $i_{dB}$ und $U_B$ errechnenden Schaltung 43B' auf den vorläufig inaktiven Hochlaufgeber 66 B umgeschaltet werden.

Der während des Normalbetriebes auf den betriebsmäßigen Sollwert $i^*_{dAo}$ (Nennwert) geregelte Strom $i_{dA}$ der Station A zeigt nach der Streckenlaufzeit ebenfalls einen Anstieg, bei dem die Differenz $i^*_{dA} - i_{dA}$ einen Grenzwert erreicht, der zum abgeleiteten Störungssignal QA = 0 führt ($t'_{10}$). Dadurch wird nunmehr der Steuerwinkel nicht mehr auf die normale Weise vorgegeben, bei der vom auf $i^*_{dAo}$ regelnde Stromregler 41A (Fig. 10) der entsprechende Nennwert $\alpha^*_{Ao}$ (z. B. $\alpha^*_{Ao} \approx 150°$) bzw. $\Delta x^*_A$ und von einem Meßglied die Störspannung $U_{dLA}$ als Vorsteuergröße $U_{dAv}$ gebildet werden. Vielmehr wird durch Umlegen des Schalters 60A zum Zeitpunkt $t'_{10}$ vom Sollwert für den betriebsmäßigen Strom auf einen Sollwert umgeschaltet, den ein Bypass-Regler, z. B. ein Regler für die Spannung $U_A$, liefert.

Da im betrachteten Fall als Bypass-Pfad nur ein Brückenzweig aus in Reihe liegenden Ventilgruppen des Stromrichters ausgewählt und gezündet wird und einen Dauerstrom führen muß, ist dessen thermische Belastbarkeit geringer als beim normalen netzgetakteten Betrieb. Daher ist der vom Bypass-Regler gelieferte Bypass-Strom-Sollwert gegenüber dem Nennwert $i^*_{dAo}$ zurückgenommen.

Der im wesentlichen vom Bypass-Regler 68A gelieferte Steuerwinkel ist in Fig. 23 symbolisch als konstant angenommen. Er kann bis zum Ende des Bypass-Betriebes von der gemessenen Spannung $U_{dLA}$ oder auch von dem nach Fig. 14 gebildeten Ersatz $\widehat{U}_{dLA}$ oder $\widehat{U}_{dB}$ vorgesteuert werden ; nach Fig. 23 wird zum Zeitpunkt $t'_{12}$ die Vorsteuerung auf den (zunächst inaktiven) Hochlaufgeber 66A umgeschaltet, um auf den Normal-Start vorzubereiten.

Der von der gesunden Station A jetzt nachgelieferte Gleichstrom $i_{dbypass}$ fließt nach dem Nulldurchgang (Zeitpunkt $t_{11}$) der Spannung $U_{dB}$ über die Bypass-Ventile, bis zum Zeitpunkt $t_{20}$ die Spannung $U_B$ wiederkehrt, gegebenenfalls mit erheblichen Spannungsspitzen.

Das Grenzwertmelde-Signal G711B liefert mit einer auf die Synchronisierzeit des Referenzspannungsgenerators abgestimmten Verzögerung $T_{syn}$ das führende Freigabesignal QB = 1, mit dem der Teilstromrichter 1B' mit dem Steuerwinkel $\alpha'_B \approx 90°$ gestartet wird und zunächst mit einer niedrigen Steigung um z. B. 10° in den Wechselrichterbetrieb verschoben wird. Mit einer Verzögerung $T_{ZS}$, die vom Zeitglied ZS (Fig. 15) geliefert wird, wird auch der Teilstromrichter 1B'' freigegeben.

Dabei kommt es zunächst, wie bereits besprochen wurde, zu einer negativen Spannungs-Zeit-Fläche in $U_{dB}$ und das Netz NB wird mit Blindstrom belastet, was zu einer erwünschten Spannungsabsenkung und Reduzierung von Spannungsspitzen in $U_B$ führt. Da die Teilstromrichter versetzt zugeschaltet werden, nimmt also auch die Blindlast in Stufen zu.

Vorteilhaft wird dabei der Steuerwinkel $\alpha'_B$ des zuerst gestarteten Teilstromrichters in dem Bereich nahe 90° belassen, in dem der HGÜ-Strom vorwiegend als Blindlast wirkt, und wird erst dann auf die betriebmäßige Wechselrichteraussteuerung hochgefahren, wenn alle anderen Teilstromrichter voll kommutieren. Dabei kann, wie Fig. 15 vorsieht, für jeden Teilstromrichter eine eigene Hochlauffunktion gewählt werden. Nach Fig. 23 genügt aber meistens ein einziger Hochlaufgeber für $\alpha_B$, wobei der Hochlauf von $\alpha_B$ zunächst nur auf 1B' wirkt und mit einer geringen Steigung beginnt, um erst nach dem Zeitpunkt $t_{20} + T_{ZS}$, nachdem der letzte Teilstromrichter mit $\alpha''_{Bo} = \alpha_B$ gestartet ist, mit einer erhöhten Steigung auf den Nennwert $\alpha_{Bo}$ zu fahren.

Der von Station B eingeprägte Spannungsimpuls führt nach der Streckenlaufzeit Tts zu einer Bewegung von $U_{dA}$ (bzw. $U_{dLA}$) und $i_{dA}$ (bzw. $i_{dLA}$), die in Station A detektiert wird und das abgeleitete Freigabesignal QA = 1 auslöst ($t'_{20}$). Dort wird nun der Steuerwinkel $\alpha_A$ auf $\alpha_A \approx 0°$ hochgefahren, wobei vorteilhaft die Steigung zunächst groß ist und später zurückgenommen wird. Da auf die Station A zunächst nur die durch die anfänglich geringe Steigung von $\alpha_B$ eingeprägte Störspannung $U_{dB}$ (bzw. $U_{dLA}$) wirkt, steigt $i_{dA}$ rasch auf den Nennwert $i_{dAo}$ an und der Stromrichter 1A gerät bald in einen Bereich, in dem der das Netz NA belastende Strom $i_{dA}$ vorwiegend einen Wirkstrom darstellt.

Während des Hochlaufs ist durch Umlegen des Schalters 60A auf den betriebsmäßigen Sollwert $i^*_{dA}$ umgeschaltet, wobei der Bypass-Regler außer Kraft ist. Nach dem Start der Hochlauffunktion, in Fig. 23 zum Zeitpunkt $t_{21}$ ist der Führungsgrößenregler 41B aktiviert und etwa am Ende der Hochlauffunktion (vom Verzögerungsglied VZ vorgegebene Zeiten $t_{22}$, $t'_{22}$) ist auch jeweils das betriebsmäßige Vorsteuersignal aufgeschaltet, so daß der Normalbetrieb wieder hergestellt ist.

Im Normalbetrieb sind also beide Stationen durch die Freigabesignale QA = 1, QB = 1 freigegeben, während die Schalter 61A und 61B jeweils durch das zuletzt abgegebene Zündimpuls-Freigabesignal QIZ = 1 so geschaltet sind, daß die Steuerwinkel $\alpha_A$ und $\alpha_B$ in der Vorsteuereinrichtung durch Addition der jeweils für den Normalbetrieb vorgesehene Modell-Störgröße und des jeweiligen Vorgabewinkels (d. h. dem durch die Größen $\Delta x_B$ und $\Delta x_A$ bestimmten Winkel in Fig. 9 und 10) bestimmt sind. Ebenso sind auch die Umschalter 60A und 60B in einer Position gehalten, in der der Vorgabewinkel $\alpha^*_A$ bzw. $\gamma^*_B$ von der für den Normalbetrieb vorgesehenen Führungsgrößenregelung bestimmt wird. z. B. wird entsprechend Fig. 7 zur Bildung von $\Delta x_A$ der Sollwert $i^*_{dA}$ des Stromreglers 41A in der Station A von einem überlagerten Regler (Wirkleistungsregler 51, Fig. 7) entsprechend der Wirkleistungsbilanz oder anderen Bedürfnissen des ungestörten Netzes NA geliefert. In der Station B wird $\Delta x_B$ entsprechend dem einen Sollwert $\gamma*$ von einem Löschwinkelregler (41B, Fig. 5) oder von einem Blindleistungsregler (41B') oder Spannungsregler (41B'') geliefert, wobei $\gamma*$ im Rechenzusatz 47 aus der Forderung des Netzes nach Blindleistung oder Spannungskonstanz abgeleitet sein kann.

Da es für Wartungsarbeiten an der HGÜ selbst erforderlich sein kann, nach einer Störung die HGÜ strom- und spannungslos zu halten, also keinen Bypass-Betrieb vorzunehmen, sei zunächst dieser Fall betrachtet.

b) Beispiele mit Entregung der Strecke

In einem typischen Ablauf nach Fig. 24 ist zunächst der Fall betrachtet, daß in der einen Station B zum Zeitpunkt $T_{10}$ ein Kurzschluß des Netzes NB, d. h. ein Zusammenbruch der Spannung $U_B$ auftritt. In der Überwachungsstation meldet der Grenzwertmelder 711 das entsprechende Signal G711B. Die HGÜ, die Stromrichterdrossel LB sowie die Filterelemente CFB und LFB entladen sich über den Kurzschluß, so daß die Ströme $i_{dB}$ bzw. $i_{dLB}$ zunächst ansteigen und zu einem Wechselrichterkippen führen. Gleichzeitig wird das Störungssignal QB = 0 gesetzt und die Zündimpulse des Stromrichters 1B werden gesperrt, was in Fig. 24 durch den Steuerwinkel $\alpha B = 90°$ angedeutet ist.

Dabei bricht die Spannung $U_{dB}$ ein und der HGÜ-strom erlischt.

In der Station A kommt es nach der durch die HGÜ-Laufzeit bedingten Totzeit Tts ebenfalls zu einem Anstieg des HGÜ-Stroms $i_{dA}$ bzw. $i_{dLA}$, der über den Fremdstörungs-Meldeimpuls zu einem Störungssignal und zu QA = 0 führt (Zeitpunkt $t_{10'}$). Dadurch wird auch die andere Station A stillgelegt ($\alpha A = 90°$).

In Fig. 24 ist angenommen, daß sich durch den B-seitigen Kurzschluß die HGÜ bis auf geringe Oszillation in der nunmehr beidseitig gesperrten HGÜ praktisch vollkommen entladen hat. Dabei kann es insbesondere von Vorteil sein, wenn mit QA = 0 der andere Stromrichter 1A nicht sofort gesperrt wird, sondern der HGÜ-Strom und die HGÜ-Spannung über den Regler dieser Station A vollständig auf den Wert O abgebaut werden. Ein derartiges Vorgehen ist vor allem dann vorteilhaft, wenn z. B. nach einer Kurzunterbrechung die HGÜ möglichst rasch aus dem stromlosen Zustand angefahren werden soll.

Bei diesem Wiederanlauf wird, sobald die Spannung $U_B$ einen bestimmten Grenzwert wieder erreicht

hat (Zeitpunkt $t_{20}$) und in der einen Station B der Grenzwertmelder 711 angesprochen hat, nach einer gewissen Verzögerungszeit $T_{syn}$, die zum Synchronisieren des Referenzspannungsgenerators sowie zur Bildung des Zündimpuls-Freigabesignals QIZ erforderlich ist, der Hochlaufgeber 66B angestoßen und der Steuerwinkel $\alpha_B$ rampenförmig hochgefahren.

Um hierbei der HGÜ einen definierten Spannungsimpuls einzuprägen, der in der anderen Station A einen Fremdfreigabe-Impuls auslösen kann, ist vorteilhaft vorgesehen, dem rampenförmigen Hochlauf des Steuerwinkels $\alpha_B$ einen Zusatzimpuls $\Delta\alpha$ vorzuschalten oder zu überlagern, durch den der Stromrichter 1B vorübergehend im Gleichrichterbetrieb betrieben wird. Fig 24 zeigt, daß dadurch der HGÜ-Strom $i_{dB}$ schnell angeregt und die HGÜ-Spannung $U_{dB}$ vorübergehend negativ wird.

Folglich kommt es zum wiederum durch die HGÜ-Laufzeit bestimmten Zeitpunkt $T_{20'}$ auch in der bis dahin gesperrten Station A zu einer negativen Spannungszeitfläche und zum Signal QA = 1, mit dem auch dort der während der Störung inaktivierte Hochlaufgeber aktiviert und der Steuerwinkel $\alpha_A$ rampenförmig hochgefahren wird.

In beiden Stationen liefern die während der Störung inaktivierten Hochlaufgeber während des Hochlaufs zunächst einen Ersatzwert für die Modell-Störgröße, wobei aber am Verlauf der Steuerwinkel $\alpha_A$ und $\alpha_B$ erkennbar ist, daß der während des Hochlaufs durch die Hochlauffunktion glatt vorgegebene Wert durch die wellige Modell-Störgröße ersetzt wird, sobald die Umschalter 61A und 61B und auch die Schalter 60A und 60B umgelegt werden und der ungestörte Normalbetrieb wieder erreicht ist.

In Fig. 25 ist der Fall einer Störung in der Station A dargestellt. Dabei ist angenommen, daß im Netz NA zum Zeitpunkt $t_{10}$ nur eine der Phasenspannungen ausfällt, so daß die Spannungsamplitude UA dieses Netzes einen gepulsten Verlauf aufweist. In diesem Fall liefert der Grenzwertmelder 711 der einen Überwachungseinrichtung ebenfalls ein gepulstes Signal, das jedoch in Fig. 25 nur gestrichelt dargestellt ist, da z. B. die Zeitkonstante des Impulsformers 713 so eingestellt sein kann, daß ein diese Oszillationen unterdrückende Dauersignal erzeugt wird. In dem bereits erwähnten Fall, daß zur Bildung des Signals G711B kein eigener Grenzwertmelder vorgesehen ist, sondern die Impulsbildung vom Referenzspannungsgeneratur vorgenommen wird, der ohnehin alle Schwankungen des Wechselspannungsnetzes erfaßt, kann dort zwanglos ein entsprechendes Dauersignal für die Dauer der Störung erzeugt werden.

Im allgemeinen wird für einen derartigen Störfall ein anderer Notbetrieb vorgesehen, der nicht Gegenstand der Erfindung ist. Die für eine Störung des Gleichrichters mit Entregung der HGÜ vorgesehene Strategie sei jedoch auch für diesen Fall erläutert.

Das über QA = 0 erzeugte Sperren der Zündimpulse des Stromrichters 1A bewirkt das Erlöschen des HGÜ-Stroms $i_{dA}$, wobei es allerdings zunächst nicht zwangsläufig zu einer Entladung der HGÜ kommt. Eine solche Entladung kann, wie im Zusammenhang mit Fig. 24 bereits erläutert wurde, durch eine vorübergehende Zündwinkelverschiebung in der ungestörten anderen Station B erzwungen werden, worauf aber im Beispiel der Fig. 25 verzichtet ist. Vielmehr wird in der anderen Station B nach der Totzeit Tts von dem einbrechenden HGÜ-Strom $i_{dB}$ bzw. der HGÜ-Spannung $U_{dB}$ die Zündimpulse des Stromrichters 1B gesperrt, so daß auch dort der Strom ausgeht und der Stromrichter stillgesetzt ist. Die HGÜ führt dann zwar keinen Strom, aber noch Spannung.

In diesem Fall ist es häufig nicht erforderlich, nach Wiederkehr des Netzes NA (Zeitpunkt $T_{20}$) den Übergang in den Normalbetrieb mit einem vorübergehenden Zusatzimpuls $\Delta\alpha$ auf den Steuerwinkel zu beginnen. Dies gilt insbesondere, wenn die HGÜ noch eine positive Restspannung, wie in Fig. 25 gezeigt ist, enthält, die bei der Ventilzündung in 1B einen Stromfluß erzeugt. Der Steuerwinkel kann dann rampenförmig von etwa $\alpha_A = 90°$ hochgefahren werden.

Bei den Fällen der Fig. 24 und 25 ist demnach als Notbetrieb bei einer Störung eine Stillsetzung (Entregung) der HGÜ zumindest so weit vorgesehen, daß der HGÜ-Strom gleich Null ist, was dadurch erreicht wird, daß während der Störung, also vor Aufnahme des Normalbetriebes, durch eine Sperre beider Stromrichter die HGÜ von den Wechselspannungsnetzen getrennt ist. Der dann vorgesehene Übergang in den Normalbetrieb ist daher auch zur Erst-Betriebnahme der HGÜ nach Installation oder nach einer grundlegenden Wartung geeignet.

Die zum Zeitpunkt $t_{20}$ durch die Aufnahme des Normalbetriebes sprunghaft geänderte HGÜ-Spannung wird zum Zeitpunkt $t'_{20}$ in der anderen Station B detektiert, wo es daher zum abgeleiteten Freigabesignal QB = 1 und ebenfalls zur Aufnahme des Normalbetriebes kommt.

Während der Störung sind die Schalter 60, 61 und 67 der Stationen nach Figur 9 und 10 in einer Stellung, bei der die desaktivierten Regler 41 und Hochlaufgeber 66 den Steuerwinkel 90° entsprechend dem Aussteuerungsgrad Null vorgeben. Das Hochlaufen des Steuerwinkels wird zum Zeitpunkt $t_{20}$ bzw. $t'_{20}$ durch Aktivieren der Hochlaufgeber erreicht, wobei die Position P3 der Schalter 61 ermöglichen, den Zusatzimpuls $\Delta\alpha$ beim netzgetakteten Start dem Steuersatz vorübergehend aufzuschalten. Werden die Regler 41 gleichzeitig mit den Hochlaufgebern 66 aktiviert, so ist der Hochlauf von Einschwingungsvorgängen des Reglers überlagert, während zu den Zeitpunkten $t_{21}$ und $t'_{21}$ aus dem welligen Verlauf der Vorsteuerspannung erkennbar ist, daß nunmehr der Steuerwinkel von der Vorsteuergröße $U_{dLA}$ bzw. $\alpha_{Bv}$ bestimmt wird, die als Meßwert der Störgröße den vom Hochlaufgeber gebildeten, gesteuerten Modellwert ablöst.

c. Beispiele mit Bypass-Betrieb

Ist für den Fall einer Störung in der einen Station bei ungestörter anderer Station wegen der bereits erwähnten Vorteile ein Bypass-Betrieb vorgeschrieben, so werden in der gestörten Station bei Beginn der Störung mittels des Selbststörungs-Meldeimpulses Fde die für den Bypass-Pfad ausgewählten Bypass-Ventile gezündet und die HGÜ-Anschlüsse dieser Station kurzgeschlossen. In der anderen Station löst der Fremdstörungs-Meldeimpuls Fdf bei dieser Betriebsart einen Gleichrichterbetrieb aus, durch den ein gewünschter Bypass-Strom in die HGÜ eingespeist wird. Dieser Bypass-Strom wird vorteilhaft entsprechend den Bedürfnissen der anderen Station, d. h. aus dort vorliegenden Meßwerten des Wechselspannungsnetzes abgeleitet.

Nach Beendigung der Störung wird in der « wieder gesundeten » Station mittels des Selbstfreigabe-Impulses Ffe der Bypass-Pfad wieder unterbrochen und der netzgetaktete Normalbetrieb aufgenommen. Dies führt in der ungestörten anderen Station zu einem Fremdfreigabe-Impuls Fff, durch den die Bypass-Stromeinspeisung beendet und ebenfalls der netzgetaktete Normalbetrieb aufgenommen wird. Die Figuren 26 und 27 zeigen vorteilhafte Ausführungsformen dieses Störbetriebes mit Bypass-Strom.

In Figur 26 ist eine Störung des Gleichrichterbetriebes (Station A) angenommen.

Die einbrechende Spannung $U_A$ des zum Zeitpunkt $t_{10}$ zusammenbrechenden Netzes NA wird in der Station A wieder durch den Selbststörungs-Meldeimpuls Fde erfaßt und löst $Q_A = 0$ aus. Der Stromrichter 1 wird gesperrt. Dabei geht der Strom $i_{dA}$ aus und die Spannung $U_{dA}$ bzw. $U_{dLA}$ gerät in eine Schwingung, die gestrichelt dargestellt ist und von den weiteren Vorgängen in der Station B abhängt.

Nach der Streckentotzeit $T_{ts}$ (Zeitpunkt $T'_{10}$) kommt es zu einem entsprechenden Einbruch in der Spannung $U_{dB}$ (bzw. $U_{dLB}$) und im Strom $i_{dB}$ an den Gleichspannungsanschlüssen der Station B. Dort wird daher z. B. durch Überwachung des Stromes $i_{dB}$ ein Fremdstörungs-Meldeimpuls Fdf erzeugt, der zu $Q_B = 0$ führt.

Ist nun für einen derartigen Störungsfall der Bypass-Betrieb vorgesehen, so wird mit dem Fremdstörungs-Meldeimpuls in der ungestörten Station B auf Gleichrichterbetrieb übergegangen, wobei der Steuerwinkel von einem übergeordneten Regler bereitgestellt wird. Soll z. B. der Bypass-Betrieb der Konstanthaltung der Spannung $U_B$ oder der Regelung der Blindlast dienen, so ist als übergeordneter Regler für den Bypass-Betrieb ein Spannungsregler oder Blindleistungsregler vorgesehen. Das Ausgangssignal dieses Bypass-Reglers 68B (Fig. 9) bildet die Größe $\Delta x_B$, die dem Sollwert $i^*_{dB}$ für den dem ungestörten Netz zu entnehmenden Strom entspricht und dem Steuersatz als Steuerwinkel $\alpha_B$ im Bypass-Betrieb über den Schalter 60B aufgeschaltet wird. Die Rechenstufe 43B' ist dabei abgetrennt, z. B. indem der Schalter 61B auf den Ausgang des (während der Störung inaktivierten) Hochlaufgebers 66B geschaltet ist.

Dabei werden mit QB = 0 zum Zeitpunkt $t'_{10}$ bei einer Variante zunächst die Zündbefehle des Stromrichters gesperrt. Es hängt dann von der Phasenlage des Netzes NB ab, ob und wann der Strom $i_{dB}$ erlischt. Anschließend wird in der Station B ein Gleichrichter-Betrieb aufgenommen, der entsprechend der Polarität der Stromrichterventile zu einer Spannungsumkehr in der HGÜ führt.

Der Zeitpunkt $t'_{11}$ zur Aufnahme dieses Gleichrichterbetriebes (ggf. unter Abgabe des Impulses $\Delta\alpha$) ist praktisch frei wählbar. Der Vorsteuerwinkel $\alpha_{Bv}$ wird dabei auf den (während der Störung inaktivierten) Hochlaufgeber umgeschaltet, so daß der Steuerwinkel $\alpha_B$ allein vom jetzt aufgeschalteten Bypass-Regler bestimmt wird.

Der nunmehr von der Station B aufgenommene Bypass-Betrieb führt dazu, daß in der gestörten Station A zum Zeitpunkt $t_{11}$ ein Anstieg der Spannung $U_{dA}$ an den Gleichspannungsanschlüssen auftritt, wobei die Speicherschaltung 63A aus dem gleichzeitigen Auftreten des Signals G711A bzw. des Selbststörungs-Meldeimpulses Fde und des aus der Spannungsbewegung abgeleiteten Fremdfreigabesignals Fff den von der ungestörten Station aufgenommenen Bypass-Betrieb erkennen kann. Da zu diesem Zeitpunkt $i_{dA} = 0$ vorliegt, ist es gleichgültig, welche in Reihe liegenden Stromrichter-Ventile der Station A als Bypass-Pfad gezündet werden. So können z. B. mehrere parallele Bypass-Pfade geschlossen werden. Im vorliegenden Fall ist die Auswahl der als Bypass-Pfad dienenden « Bypass-Ventile » unter den für den Normalbetrieb erforderlichen Ventilen des Stromrichters 1A vorprogrammiert und nur ein einziger Bypass-Pfad vorgesehen.

Die Zündbefehle für diesen Bypass-Pfad können gleich beim oder kurz nach Auftreten des Selbststörungs-Melde-impulses gebildet werden ; zur Zündung kommt es aber erst, wenn die Spannung $U_{dA}$ (infolge der Spannungseinprägung durch den Bypass-Gleichrichterbetrieb der Station B) die Polarität gewechselt hat. Dann fließt über den Stromrichter 1A und die HGÜ ein Strom $i_{dA}$, der jedoch von dem defekten Netz NA getrennt ist.

Das zum Zeitpunkt $t_{20}$ wiederkehrende Netz NA erreicht zum Zeitpunkt $t_{21}$ den vorgegebenen Grenzwert, bei dem der Selbstfreigabeimpuls ausgelöst wird. Nach der für die Bildung der netzsynchronen Referenzspannung des Steuersatzes benötigten Zeit $T_{syn}$ meldet das Störungsgedächtnis QA = 1 und der Stromrichter 1A wird mit dem Steuerwinkel $\alpha_A$ rampenförmig hochgefahren.

Um zu vermeiden, daß über den im Bypass-Betrieb zunächst noch als Gleichrichter arbeitenden Stromrichter 1B und den bereits in den normalen Gleichrichterbetrieb übergegangenen Stromrichter 1A ein Kurzschlußstrom fließt, kann der Hochlauf des Steuerwinkels $_A$ gegenüber einem anfänglich eingeprägten Spannungsstoß verzögert werden, damit Station B nach Erkennen dieses Spannungsstoßes rechtzeitig in den Wechselrichterbetrieb übergehen kann.

Zum Zeitpunkt $t_{20}$ ist ferner der Schalter 61A so umgelegt, daß das Hochlaufgeber-Ausgangssignal

das Vorsteuersignal $U_{dAv}$ bildet. Da dieser Hochlaufgeber während der Störung inaktiviert und erst bei Netzwiederkehr freigegeben wird, wird, ergibt sich für die Spannung $U_{dAv}$ der dargestellte Verlauf, bei dem nach Auftreten des führenden Freigabesignals QA = 1 ein rampenförmiger Anstieg auftritt.

Zu einem, z. B. von der Programmschaltung vorgegebenen Zeitpunkt $t_{22}$ wird durch Umlegen des Schalters 61A wieder die Spannung $U_{dLA}$ als Vorsteuerspannung verwendet. Der Steuerwinkel $\alpha_A$ ist daher im Normalbetrieb praktisch durch $U_{dAv} = U_{dLA}$ (bzw. $\widetilde{U}_{dLB}$) gegeben und durch die Tätigkeit des Stromreglers nur gering modifiziert. Da die Blockierschaltung die aus $\alpha_A$ abgeleiteten Zündbefehle des Steuersatzes STA während des Bypass-Betriebes sperrt, ist es unerheblich, wann im Intervall zwischen $t_{10}$ und $t_{20}$ die Speicherschaltung von $U_{dAv} = U_{dLA}$ auf die durch den Hochlaufgeber vorgegebene Vorsteuerspannung umschaltet. Vorzugsweise ist innerhalb dieser Zeit der Stromregler inaktiv und wird über die Programmschaltung erst nach Wiederkehr des Netzes, vorzugsweise am Ende des rampenförmigen Hochlaufs aktiviert bzw. bei Auftreten (Zeitpunkt $t_{21'}$) der Auswirkungen des von der anderen Station gestarteten Normalbetriebes.

In der Station B bewirkt der von der Station A rampenförmig wiederaufgenommene Gleichrichterbetrieb zum Zeitpunkt $t'_{20}$ einen Anstieg in der Spannung $U_{dB}$ (bzw. $U_{dLB}$) und im Strom $i_{dB}$. Dies löst dort das abgeleitete Freigabesignal QB = 1 aus, mit dem nunmehr von der Bypass-Stromsteuerung auf die normale Regelung, d. h. vom Bypass-Regler 68B auf den Löschwinkelregler 41B in Fig. 9, umgeschaltet wird (Umschalter 60B). Gleichzeitig wird mit diesem Fremdfreigabesignal der Station B dort der Hochlaufgeber aktiviert, der nunmehr anstelle des Elementes 43B' den Vorsteuerwinkel $\alpha_{Bv}$ für die Station B liefert. Folglich wächst auch der Steuerwinkel $\alpha_B$ rampenförmig wieder auf den zum normalen Wechselrichterbetrieb gehörenden Winkel an, bis zum Zeitpunkt $t'_{22}$ der Schalter 61B wieder vom Hochlaufgeber zurück auf die Rechenschaltung 43B' geschaltet wird.

Das gleiche Prinzip läßt sich auch durchführen, wenn in der Station B eine Störung vorliegt ; wie für Fig. 27 angenommen ist.

Der Stromrichter 1B in der Station B wird bei Normalbetrieb als Wechselrichter mit einem Steuerwinkel $\alpha_B$ nahe der Wechselrichtertrittgrenze betrieben, der vom Löschwinkelregler (oder einem Regler für die Blindleistung oder eine andere Führungsgröße) gebildet und mit dem aus dem induktiven Spannungsabfall berechneten Vorsteuerwinkel vorgesteuert wird. Zum Zeitpunkt $t_{10}$ bricht nun die Spannung $U_B$ des Netzes NB zusammen und bewirkt über ein entsprechendes Signal G711B in der Überwachungseinrichtung der Station B, daß dort die normalen Zündimpulse gesperrt werden.

Dieser Kurzschluß führt auch zum Zusammenbruch der Gleichspannung $U_{dB}$ und zu einem stark anwachsenden, in den Kurzschluß fließenden Gleichstrom $i_{dB}$, so daß der Wechselrichter 1B kippt. Die Kapazitäten der HGÜ am Anschluß der Station B werden dabei in den Kurzschluß entladen, so daß sich eine Umkehrung der Spannung $U_{dLB}$ und schließlich ein Erlöschen des Gleichstroms $i_{dB}$ ergibt. Unterdessen hat auch das Grenzwertmeldesignal über den Selbststörungs-Meldeimpuls den Zustand QB = 0 ausgelöst, mit dem die normale Kommutierung des Stromrichters 1B gesperrt und die Zündung der Bypass-Ventile eingeleitet wird.

In der Station A tritt mit der Streckentotzeit ebenfalls ein Anwachsen des Gleichstroms $i_{dA}$ und ein entsprechender Abfall der Gleichspannungen $U_{dA}$ und $U_{dLA}$ auf. Dies führt über den Fremdstörungs-Meldeimpuls der Station A zum Zustand QA = 0, bei dem von dem betriebsmäßigen Strom-Sollwert $i^*_{dA}$ auf einen niedrigen Sollwert umgeschaltet wird, der von einem überlagerten Bypass-Regler geliefert wird, z. B. vom Blindleistungsregler 68A oder einem Spannungsregler für die Spannung $U_A$ (Umschalter 60A in Fig. 10). Der Stromrichter 1A speist daher nur noch den für den möglichst kontinuierlichen Betrieb des Netzes NA erforderlichen Blindstrom in die HGÜ ein. Außerdem wird vom Signal QA = 0 das Umschalten der Vorsteuerspannung $U_{dAv}$ von dem Meßwertausgang für $U_{dLA}$ auf den Ausgang des Hochlaufreglers ausgelöst (Schalter 61A), das z. B. zu einem vorgegebenen späteren Zeitpunkt $t_{12}$ erfolgt.

Da die Station A weiterhin Strom in die HGÜ einspeist, wird in Station B das über den Netzkurzschluß entladene Ende der HGÜ wieder aufgeladen. Die Spannung $U_{dA}$ nimmt somit wieder positive Werte an (Zeitpunkt $t_{12}$), so daß in der Station B bei Erreichen eines vorgegebenen positiven Grenzwertes bestimmte Ventile zünden, die zur Bildung des Bypass-Pfades ausgewählt werden und an denen dann zum Zeitpunkt $t_{12}$ entsprechende Zündspannungen anstehen. Dadurch ist nun der Bypass-Pfad geschlossen und der Bypass-Betrieb in Gang gesetzt, bei dem die HGÜ als Blindwiderstand für das Netz NA betrieben wird.

Bei dem in Figur 27 gezeigten Fall ist zum Zeitpunkt $t_{10}$ in der gestörten Station B mit QB = 0 die Sperrung der normalen, vom Steuersatz gelieferten Zündbefehle erfolgt, wobei der Strom $i_{dB}$ zunächst über die am Wechselrichterkippen beteiligten Ventile des Stromrichters 1B noch weiterfließt. Erst wenn nach Erlöschen dieser Ventile die unterdessen von der in den Bypass-Betrieb übergegangenen Station A die HGÜ mit einem Strom nachgeladen ist, der zum Zeitpunkt $t_{12}$ zu einem positiven Ansprechwert von $U_{dB}$ führt, liegt an den für den Bypass-Betrieb ausgewählten Ventilen die Spannung an, die zum Zündung der Bypass-Ventile und damit zu einem wiederkehrenden Strom $i_{dB}$ führt. In diesem Fall können die Bypass-Ventile unabhängig von den am Wechselrichterkippen beteiligten Ventilen ausgewählt werden. Da aber in der Station B die am Kippen beteiligten Ventile als Bypass-Ventile betriebsabhängig ausgewählt werden können, braucht ein — häufig unerwünschtes — vollkommenes Erlöschen des Stromes $i_{dB}$ nicht abgewartet zu werden.

Insbesondere kann es bei dem in Figur 27 gezeigten Fall im Zeitintervall zwischen $t_{10}$ und $t_{12}$ zu

erheblichen negativen Werten von $U_{dB}$ kommen, was für den Betrieb einer HGÜ in vielen Fällen von den Anwendern ausgeschlossen werden soll.

Dies kann erreicht werden, wenn der Steuerwinkel $\alpha_A$ der Station A bei Auftreten des abgeleiteten Störungssignals QA = 0 nicht sofort auf den zum Bypass-Betrieb gehörenden Wert nahe Null zurückgeführt wird, sondern auf einen Steuerwinkel, der zunächst in Richtung der Gleichrichter-Vollaussteuerung verschoben ist, um die HGÜ möglichst schnell nachzuladen. Dieser Wert kann von der Speicherschaltung 63A über die Position P3 des Schalters 61A nach Figur 10 vorgegeben werden. Ist jedoch ein Netzbeobachter 43A'' vorhanden, wie er in den Figuren 13 und 14 erläutert ist, so ist es möglich, den Strom $i_{dB}$ ungefähr konstant zu halten, indem der vom Netzbeobachter errechnete Ersatz-Istwert $\tilde{i}_{dB}$ des Stromreglers 41A' auf einen vom Spannungsregler 68A gelieferten, der Einhaltung einer konstanten Spannung $U_A$ dienenden Sollwert eingeregelt wird. Ist für den Normalbetrieb z. B. ein überlagerter Wirkleistungsregler 51 vorgesehen, so wird durch QA = 0 von diesem überlagerten Regler auf den Bypass-Regler (Spannungsregler 68A) umgeschaltet, während im Beobachter das Wechselrichterkippen der gestörten Station B durch Schließen des Schalters 77 simuliert wird.

Um nun aus dem Bypass-Betrieb bei Wiederkehr des Netzes NB (Zeitpunkt $t_{20}$ in Figur 7) mit Auftreten des führenden Freigabesignals QB = 1 in den netzgetakteten Normalbetrieb überzugehen, werden auf die bereits beschriebene Weise diejenigen Ventile gezündet, die bei einer vorprogrammierten Bypass-Ventil-Kombination vorprogrammiert sind, um den netzgetakteten Betrieb unter Einprägung eines Spannungsstoßes einzuleiten, oder es werden entsprechend den betriebsabhängig gezündeten Bypass-Ventilen die von der Auswahlschaltung betriebsabhängig ausgewählten Ventile gezündet.

Figur 27 läßt die nach der zur Synchronisierung des Referenzspannungsgenerators nötige Zeit $T_{syn}$ auftretende Spannung $U_{dB}$ erkennen, die durch den Hochlauf von $\alpha_B$ bedingt ist. Zum Zeitpunkt $t'_{20}$ kommt es dann zum abgeleiteten Freigabesignal QA = 1 und zum entsprechenden Hochlauf des Winkels $\alpha_A$ auf die für den normalen Betrieb vorgesehene Gleichrichter-Aussteuerung und zu einem entsprechenden Verlauf der Spannung $U_{dA}$, wobei in der ungestörten Station A nunmehr die Bypass-Regelung aufgehoben und wieder die normale Regelung über den Stromregler aufgeschaltet ist. Zu den Zeitpunkten $t_{22}$ unt $t'_{22}$ wird auch wieder von der durch die Hochlauffunktion gesteuert vorgegebenen Vorsteuergröße auf die gemessene Störgröße als Vorsteuergröße umgeschaltet.

Bei diesem Konzept ist inbesondere vorteilhaft, daß im normalen Betrieb die beiden Stationen unabhängig voneinander arbeiten, d. h. daß für die Steuerung der beiden Stromrichter keine über Fernwirkleitungen zu übertragende Informationen aus der jeweils anderen Station benötigt werden. Beide Stromrichter können daher durch entsprechende Vorsteuerung sehr schnell geregelt werden, ohne daß durch die Totzeit von Fernwirk-Signalübertragungen ein träges Regelverhalten erzwungen würde. Auch im Störungsfall geschieht die Übertragung entsprechender Störungssignale nicht über Fernwirkleitungen, sondern über die HGÜ selbst, so daß beim Auftreten einer Störung in der einen Station jeweils nach der überhaupt kürzestmöglichen Zeit die nötige Information über den Störungsfall auch in der anderen Station vorliegt. Auch die Wiederaufnahme des ungestörten Normalbetriebs in der einen Station wird auf die gleiche Weise in der kürzestmöglichen Zeit mitgeteilt, so daß sich sehr kurze Anregelzeiten für die Aufnahme des Normalbetriebes ergeben. Darüber hinaus ist es durch diese schnelle Regelung möglich, die HGÜ selbst auch zur Steuerung oder Regelung der elektrischen Größen der jeweiligen Netze zu verwenden, z. B. zur Blindstromsteuerung oder während des Bypass-Betriebes zur Konstanthaltung des ungestörten Netzes oder zur Dämpfung anderer Vorgänge, z. B. Ausgleichsvorgängen in den Netzen.

## Patentansprüche

1. Verfahren zur Aufnahme des Normalbetriebes einer Hochspannungsgleichstromübertragu ngsstrecke (HGÜ) zur Leistungsübertragung zwischen zwei Wechselspannungsnetzen (NA, NB), wobei im Normalbetrieb in einer ersten Station (Station A) ein netzgetakteter, als Gleichrichter betriebener erster Stromrichter (1A) einen vorgegebenen, dem ersten Wechselspannungsnetz (NA) entnommenen Gleichstrom ($i_{dA}$) der HGÜ einprägt und in einer zweiten Station (Station B) ein in das zweite Wechselspannungsnetz (NB) einspeisender netzgetakteter, als Wechselrichter betriebener zweiter Stromrichter (1B) die Gleichspannung ($U_{dB}$) der HGÜ bestimmt, und bei einem führenden Freigabesignal (QA = 1 bzw. QB = 1) in einer der beiden Stationen (Station A bzw. Station B) bei ungestörtem Zustand des an diese eine Station angeschlossenen einen Wechselspannungsnetzes (NA bzw. NB) in dieser Station der Normalbetrieb aufgenommen wird, dadurch gekennzeichnet,

a) daß das führende Freigabesignal den Start des netzgetakteten Normalbetriebes des in der einen Station angeordneten einen Stromrichters (1A bzw. 1B) auslöst, bei dem der HGÜ ein Spannungsstoß eingeprägt und der Steuerwinkel ($\alpha_A$ bzw. $\alpha_B$) des einen Stromrichters auf den für den Normalbetrieb vorgesehenen Steuerwinkel hochgefahren wird, und

b) daß in der an das andere Wechselspannungsnetz angeschlossenen anderen Station (B bzw. A) durch Überwachung der gleichspannungsseitigen elektrischen Größen

$$(dU_{dB}/dt,\ di_{dB}/dt \text{ bzw. } dU_{dA}/dt,\ di_{dA}/dt),$$

beim Auftreten der Auswirkungen des von der einen Station eingeprägten Spannungsstoßes ein abgeleitetes Freigabesignal (QB = 1 bzw. QA = 1) gebildet wird, das in dieser anderen Station die Aufnahme des netzgetakteten Normalbetriebes auslöst, wobei der Steuerwinkel des in dieser anderen Station (B bzw. A) angeordneten anderen Stromrichters von einem Steuerwinkel ungefähr 90° auf den für den stationären Normalbetrieb vorgesehenen Steuerwinkel nach einer Hochlauffunktion hochgefahren wird, die auf den Hochlauf des Steuerwinkels des einen Stromrichters abgestimmt ist. (Fig. 16, Fig. 23 bis Fig. 27).

2. Verfahren nach Anspruch 1, dadurch gekennzeichnet, daß das Hochfahren des Steuerwinkels nach etwa 2 Perioden der Wechselspannung beendet wird.

3. Verfahren nach Anspruch 1 oder 2, dadurch gekennzeichnet, daß das abgeleitete Freigabesignal nur freigegeben wird, wenn ein ungestörter Zustand des anderen Wechselspannungsnetzes vorliegt.

4. Verfahren nach Ansprüche 1 bis 3, dadurch gekennzeichnet, daß das führende Freigabesignal in der einen Station durch Erfassung des ungestörten Zustandes des an die erste Station angeschlossenen Wechselspannungsnetzes (NA bzw. NB) gebildet wird, und daß der Hochlauf beider Steuerwinkel ungefähr vom Steuerwinkel 90° beginnt, wobei dem Start des Hochlaufs eine vorübergehende Zusatzverschiebung ($\Delta\alpha$) in Richtung der Gleichrichter-Vollaussteuerung vorgelagert oder überlagert werden kann (Fig. 23 bis 27).

5. Verfahren nach einem der Ansprüche 1 bis 14, dadurch gekennzeichnet, daß beide Steuerwinkel nach Vorprogrammierten Hochlauffunktionen hochgefahren werden.

6. Verfahren nach einem der Ansprüche 1 bis 5, dadurch gekennzeichnet, daß vor dem Start des Normalbetriebes ein Erlöschen des HGÜ-Stromes durch Sperrung der Zündimpulse beider Stromrichter erzwungen wird (Fig. 25).

7. Verfahren nach einem der Ansprüche 1 bis 5, dadurch gekennzeichnet, daß vor dem Start des Normalbetriebes ein Stromrichter gesperrt und durch Verstellen des Zündwinkels für den anderen Stromrichter der HGÜ-Strom und die HGÜ-Spannung abgebaut werden (Fig. 24).

8. Verfahren nach einem der Ansprüche 1 bis 5, dadurch gekennzeichnet, daß vor dem Start des Normalbetriebes ein Notbetrieb aufrechterhalten wird, bei dem in der einen Station Bypass-Ventile stromführend sind und in der anderen Station ein Gleichrichterbetrieb aufrechterhalten wird (Fig. 23, 26, 27).

9. Verfahren nach einem der Ansprüche 6 bis 8, dadurch gekennzeichnet, daß der Start des Normalbetriebes dadurch aufgenommen wird, daß aus einer netzsynchronen Referenzspannung und dem Steuerwinkel ein Zyklus netzgetakteter Zündbefehle gebildet wird und der Zündbefehls-Zyklus erst beim Auftreten eines Zündbefehls für ein Ventil freigegeben wird, das in einer für den Start vorprogrammierten Auswahl von Stromrichterventilen enthalten ist.

10. Verfahren nach Anspruch 8, dadurch gekennzeichnet, daß der Start des Normalbetriebes dadurch aufgenommen wird, daß aus einer netzsynchronen Referenzspannung und dem Steuerwinkel ein Zyklus netzgetakteter Zündbefehle gebildet wird und der Zündbefehlszyklus erst beim Auftreten eines Zündbefehls für ein Ventil freigegeben wird, das in einer aus der Zündung der Bypass-Ventile abgeleiteten Auswahl von Stromrichterventilen enthalten ist.

11. Verfahren nach Anspruch 8, dadurch gekennzeichnet, daß als Bypass-Ventile eine Kombination aus beim netzgetakteten Normalbetrieb des Stromrichters angesteuerten Ventilen gezündet werden.

12. Verfahren nach Anspruch 8, dadurch gekennzeichnet, daß zum Start des Normalbetriebes nach einer Störung des einen Wechselspannungsnetzes ein Zündimpulszyklus, der aus dem Steuerwinkel und einer auf das Wechselspannungsnetz synchronisierten Referenzspannung abgeleitet wird, freigegeben wird, sobald nach der Störung der Referenzspannung mit einem Phasenfehler unter 30° netzsynchronisiert ist.

13. Verfahren nach einem der Ansprüche 1 bis 12, dadurch gekennzeichnet,

a) daß in jeder Station der Beginn und das Ende einer Störung des an diese Station angeschlossenen eigenen Wechselspannungsnetzes (NA bzw. NB) durch Überwachung elektrischer Größen ($U_A$ bzw. $U_B$) erfaßt werden und beim Auftreten einer Netzstörung ($U_A < U_{grenz}$ bzw. $U_B < U_{grenz}$) durch einen Selbststörungs-Meldeimpuls (Fde) ein führendes Störungssignal (QA = 0 bzw. QB = 0) und nach dem Ende der Netzstörung durch einen Selbstfreigabeimpuls (Ffe) das führende Freigabesignal (QA = 1 bzw. QB = 1) ausgelöst wird,

b) daß in jeder Station der Beginn und das Ende einer den Normalbetrieb in der fremden Station unterbrechenden Störung durch Überwachung der gleichspannungsseitigen elektrischen Größen der eigenen Station erfaßt werden und beim Auftreten von Auswirkungen einer Unterbrechung durch einen Fremdstörungs-Meldeimpuls (Fdf) ein abgeleitetes Störungssignal (QB = 0 bzw. QA = 0) und beim Auftreten von Auswirkungen der beendeten Unterbrechung durch einen Fremdfreigabeimpuls (Fff) ein abgeleitetes Freigabesignal ausgelöst wird,

c) daß in jeder Station der Normalbetrieb beendet und auf einen Notbetrieb umgeschaltet wird, sobald in dieser Station ein Störungssignal ausgelöst wird, und der Notbetrieb beendet und der Normalbetrieb gestartet wird, sobald in dieser Station ein Freigabesignal auftritt (Fig. 11).

14. Verfahren nach einem der Ansprüche 1 bis 13, dadurch gekennzeichnet, daß der Steuerwinkel zumindest nach Aufnahme des Normalbetriebes und Erreichen des Endwertes von einem Führungsgrößen-Regler bestimmt wird.

15. Verfahren nach Anspruch 14, dadurch gekennzeichnet, daß in der ersten Station als Regler ein Stromregler für den HGÜ-Strom und in der zweiten Station als Regler ein Blindleistungsregler oder ein Spannungsregler oder insbesondere ein Löschwinkelregler verwendet wird.

16. Verfahren nach Anspruch 14 oder 15, dadurch gekennzeichnet, daß das abgeleitete Freigabesignal und die für die Regler beider Stationen benötigten Größen aus den in der jeweils eigenen Station ohne Verwendung von Fernwirksignalen vorhandenen Information gebildet werden.

17. Verfahren nach einem der Ansprüche 14 bis 16, dadurch gekennzeichnet, daß jeweils zumindest nach Erreichen des für den Normalbetrieb vorgesehenen Steuerwinkels die Steuerwinkel vom Ausgangssignal des jeweiligen Reglers und einem aus der HGÜ-Spannung ($U_{dLA}$) der ersten Station (A) bzw. dem HGÜ-Strom ($i_{dB}$) der zweiten Station gebildeten Vorsteuersignal ($U_{dLA}$ bzw. $\alpha_{Bv}$) bestimmt werden (Fig. 5).

18. Verfahren nach einem der Ansprüche 14 bis 16, dadurch gekennzeichnet, daß nach Erreichen des für den Normalbetrieb vorgesehenen Steuerwinkels die Steuerwinkel vom Ausgangssignal des jeweiligen Reglers und von einem aus dem HGÜ-Strom ($i_{dB} = i_d$) und der Spannung des zweiten Wechselspannungsnetzes abgeleiteten Vorsteuersignal ($\widehat{U}_{dB}$ bzw. $\Delta x_{Bv}$) bestimmt werden (Fig. 3).

19. Vorrichtung zur Hochspannungsgleichstromübertragung mit einer Hochspannungsgleichstromübertragungsstrecke (HGÜ), die in einer ersten Station (A) über einen ersten, im Normalbetrieb als Gleichrichter betriebenen Stromrichter (1) an ein erstes Wechselspannungsnetz (NA) und in einer zweiten Station (B) über einen zweiten, im Normalbetrieb als Wechselrichter betriebenen Stromrichter (2) an ein zweites Wechselspannungsnetz angeschlossen ist, wobei im Normalbetrieb in jeder Station (A, B) ein mittels eines Referenzspannungsgenerators synchron mit dem jeweiligen Wechselspannungsnetz betriebener und von einer Steuer- und Regeleinrichtung mit einem Steuerwinkel angesteuerter Steuersatz einen Zyklus netzgetakteter Zündbefehle für den jeweiligen Stromrichter bildet und mittels eines in einer Überwachungseinrichtung gebildeten führenden Freigabesignals die Zündbefehle in einer Blockierschaltung sperrbar oder in Zündbefehle für die Stromrichterventile umsetzbar sind (Fig. 1), dadurch gekennzeichnet, daß

a) die Überwachungseinrichtung (Fig. 11) der einen Station erste Überwachungsmittel (71) enthält, die das führende Freigabesignal durch Überwachung des störungsfreien Zustandes des an diese eine Station angeschlossenen einen Wechselspannungsnetzes bilden,

b) die Überwachungseinrichtung der anderen Station zweite Überwachungsmittel (73) enthält, die ein abgeleitetes Freigabesignal durch Überwachung der gleichspannungsseitigen elektrischen Größen bilden, sobald die Aufnahme des Normalbetriebes der einen Station in dieser anderen Station erfaßbar ist,

c) in der Blockierschaltung (BS) jeder Station die Zündimpulse bei einem Störungssignal sperrbar und durch ein führendes oder ein abgeleitetes Freigabesignal freigebbar sind und

d) von dem jeweiligen Freigabesignal in jeder Station ein Hochlaufgeber (66A, 66B ; Fig. 9, 10) mit einer vorprogrammierten, nach einer vorgegebenen Hochlaufzeit ungefähr in den betriebsmäßigen Aussteuerungsgrad des jeweiligen Stromrichters einmündenden Hochlauffunktion zur Vorgabe des Steuerwinkels bei der Aufnahme des Normalbetriebes angestoßen wird.

20. Vorrichtung nach Anspruch 19, dadurch gekennzeichnet, daß die Überwachungseinrichtung jeder Station die ersten und zweiten Überwachungsmittel sowie dritte und vierte Überwachungsmittel aufweist, wobei durch Überwachung des jeweils an diese Station angeschlossenen Wechselspannungsnetzes und der gleichspannungsseitigen elektrischen Größen dieser Station

die ersten Mittel (71) beim Übergang des eigenen Wechselspannungsnetzes von einem gestörten Zustand in den störungsfreien Zustand oder bei einem Startbefehl einen Selbstfreigabeimpuls (Ffe) als führendes Freigabesignal,

die zweiten Mittel (73) beim Auftreten von Auswirkungen eines durch Freigabe der Zündimpulse der fremden Station erzeugten HGÜ-Spannungsstoßes eines Fremdfreigabeimpuls (Fff) als abgeleitetes Freigabesignal,

die dritten Mittel (72) bei einer durch eine Störung in der fremden Station oder der HGÜ verursachten Unterbrechung des Normalbetriebes einen Fremdstörungs-Meldeimpuls (Fdf) erzeugen, und

die vierten Mittel (74) beim Übergang des eigenen Wechselspannungsnetzes in den gestörten Zustand einen Selbststörungs-Meldeimpuls (Fde) erzeugen,

daß die Überwachungsmittel ein Störungsgedächtnis (700) ansteuern, das bei einem führenden oder abgeleiteten Freigabesignal den Hochlaufgeber aktiviert und bei einem Selbststörungs- oder Fremdstörungsmeldeimpuls ein Störungssignal abgibt.

21. Vorrichtung nach Anspruch 19 oder 20, dadurch gekennzeichnet, daß nach einem Ausfall des Wechselspannungsnetzes in einer Station und anschließender Wiederkehr der Wechselspannung die Bildung des Freigabesignals in dieser Station verzögert wird, bis (vorzugsweise nach einer vorgegebenen Zeit) der Referenzspannungsgenerator eine gegenüber der Spannungsgrundschwingung des wiedergekehrten Netzes um höchstens 30° phasenverschobene Referenzspannung erzeugt.

22. Vorrichtung nach einem der Ansprüche 19 bis 21, dadurch gekennzeichnet, daß im Hochlaufgeber eine ungefähr vom Aussteuerungsgrad Null beginnende Rampenfunktion gespeichert ist und daß

Mittel vorgesehen sind, um den Steuerwinkel vor oder mit dem Start der Hochlauffunktion vorübergehend in Richtung auf Gleichrichterbetrieb zu verschieben.

23. Vorrichtung nach einem der Ansprüche 19 bis 22, gekennzeichnet durch eine dem Steuersatz vorgeschaltete Vorsteuereinrichtung zur Eingabe des Steuerwinkels ($\alpha_A$, $\alpha_B$), und Umschaltmittel, durch die der Vorsteuereinrichtung das Ausgangssignal des Hochlaufgebers oder eine Störgröße aufschaltbar ist, insbesondere die Spannung ($U_{dLA}$) an der dem ersten Stromrichter (1A) abgewandten Seite einer nachgeschalteten Drossel (LA) in der ersten Station bzw. eine aus HGÜ-Strom ($id_B$), Netzwechselspannung ($U_B$) und einem vorgegebenen Soll-Löschwinkel berechnete Modell-Störspannung in der zweiten Station.

24. Vorrichtung nach einem der Ansprüche 19 bis 23, dadurch gekennzeichnet, daß der Steuerwinkel während des Hochlaufs vom Hochlaufgeber und nach dem Hochlauf von der Störgröße bestimmt und mit dem Ausgangssignal eines Führungsgrößen-Reglers korrigierbar ist.

25. Vorrichtung nach Anspruch 24, dadurch gekennzeichnet, daß der Führungsgrößen-Regler vor Aufnahme des Normalbetriebes stillsetzbar und mit oder nach dem Start des Hochlaufgebers aktivierbar ist.

26. Vorrichtung nach einen der Ansprüche 19 bis 25, gekennzeichnet durch eine Speicher- und Programmschaltung, die derart mit dem Hochlaufgeber und der Blockierschaltung verbunden ist, daß bei einem führenden Freigabesignal die Zündimpulse des einen Stromrichters unter Einprägung eines in der Stromführungsrichtung des anderen Stromrichters positiven Spannungsimpulses erfolgen.

**Claims**

1. A method of starting-up the normal operation of an EHT d. c. link for the transmission of power between two a. c. voltage networks (NA,NB), where, in normal operation, in a first station (station A) a network-clock-controlled first converter (1A) operates as a rectifier to impress onto the EHT d.c. link a predetermined d. c. current ($i_{dA}$), withdrawn from the first a. c. voltage network (NA), and in a second station (station B) a network-clock-controlled second converter (1B) which leads into the second a. c. voltage network (NB) and operates as an inverter determines the d. c. voltage ($U_{dB}$) of the EHT d. c. link, and the production of a leading release signal (QA = 1 or QB = 1) in one of the two stations (station A or station B) whilst the first a. c. voltage network (NA or NB) connected to this one station is in the undisturbed state, causes normal operation to be started up in this station, characterised in that

a) the leading release signal triggers the start of the network-clock-controlled normal operation of the one converter (1A or 1B) arranged in this first station, where a voltage surge is impressed upon the EHT d. c. link and the control angle ($\alpha_A$ or $\alpha_B$) of the first converter is increased to the control angle provided for normal operation ; and

b) that in the other station (B or A) connected to the other a. c. voltage network, monitoring of the d. c. voltage-side electrical variables

$$(dU_{dB}/dt,\ di_{dB}/dt \text{ or } dU_{dA}/dt,\ di_{dA}/dt),$$

when the influences of the voltage surge impressed by the first station occur causing a derived release signal (QB = 1 or QA = 1) to be formed which, in this other station, triggers the start-up of network-clock-controlled normal operation, where the control angle of the other converter arranged in this other station (B or A) is increased from a control angle of approximately 90° to the control angle provided for stationary normal operation, in accordance with a ramp function adapted to the increase of the control angle of the first converter. (Fig. 16, Fig. 23 to 27).

2. A method as claimed in Claim 1, characterised in that the increase of the control angle is terminated after approximately two cycles of the a. c. voltage.

3. A method as claimed in Claim 1 or 2, characterised in that the derived release signal is released only when the other a. c. voltage network is in the undisturbed state.

4. A method as claimed in Claims 1 to 3, characterised in that the leading release signal is formed in the first station by detecting the undisturbed state of the a. c. voltage network (NA or NB) connected to the first station, and that the increase of the two control angles commences approximately from the control angle 90°, where a temporary additional shift ($\Delta\alpha$) in the direction of the rectifier maximum drive is preliminary impressed or superimposed upon the start of the increase. (Fig. 23 to 27).

5. A method as claimed in one of Claims 1 to 4, characterised in that the two control angles are increased in accordance with pre-programmed ramp functions.

6. A method as claimed in one of Claims 1 to 5, characterised in that prior to the start of the normal operation the EHT d. c. current is compulsorily extinguished by blocking the ignition pulses of the two converters. (Fig. 25).

7. A method as claimed in one of Claims 1 to 5, characterised in that prior to the start of the normal

operation one converter is blocked, and the EHT d. c. current and the EHT d. c. voltage are extinguished by adjusting the ignition angle for the other converter. (Fig. 24).

8. A method as claimed in one of Claims 1 to 5, characterised in that prior to the start of the normal operation an emergency service is maintained in which bypass valves are current-carrying in the first station and a rectifier operation is maintained in the other station. (Fig. 23, 26, 27).

9. A method as claimed in one of Claims 6 to 8, characterised in that the normal operation is started-up in that a cycle of network-clock-controlled ignition commands is formed from a network-synchronous reference voltage and from the control angle, and in that only when an ignition command occurs is the ignition command cycle released for a valve contained in a selection of converter valves pre-programmed for the start-up.

10. A method as claimed in Claim 8, characterised in that the normal operation is started-up in that network-clock-controlled ignition commands are formed from a network-synchronous reference voltage and from the control angle and in that not until an ignition command occurs is the ignition command cycle released for a valve contained in a selection of converter valves derived from the ignition of the bypass valves.

11. A method as claimed in Claim 8, characterised in that as bypass valves a combination of valves driven in the network-clock-controlled normal operation of the converter is ignited.

12. A method as claimed in Claim 8, characterised in that in order to start-up normal operation following a disturbance in the first a. c. voltage network, an ignition pulse cycle derived from the control angle and a reference voltage synchronised to the a. c. voltage network is released as soon following the reference voltage network disturbance as synchronism is established with a phase error of less than 30°.

13. A method as claimed in one of Claims 1 to 12, characterised in that

a) in each station the beginning and the end of a disturbance in the a. c. voltage network (NA or NB) connected to this station are determined by monitoring electrical variables ($U_A$ and $U_B$) and that when a network disturbance $U_A < U_{grenz}$ and $U_B < U_{grenz}$) a self-disturbance message pulse (Fde) triggers a leading disturbance signal (QA = 0 or QB = 0) and that at the end of the network disturbance a self-release pulse (Ffe) triggers the leading release signal (QA = 1 or QB = 1) ;

b) that in each station the beginning and the end of a disturbance which interrupts the normal operation in the remote station are detected by monitoring the d. c. voltage-side electrical variables of the station in question and that when the effects of an interruption occur a remote-disturbance message pulse (Fdf) triggers a derived disturbance signal (QB = 0 or QA = 0) and when the effects of the end of the interruption occur a remote release pulse (Fff) triggers a derived release signal ; and

c) that in each station the normal operation is terminated and a switch-over is made to emergency operation as soon as a disturbance signal is triggered in this station, and that the emergency operation is terminated and the normal operation is started as soon as a release signal occurs in this station. (Fig. 11).

14. A method as claimed in one of Claims 1 to 13, characterised in that at least following the start-up of the normal operation and the attainment of the end value the control angle is determined by a command variable regulator.

15. A method as claimed in Claim 14, characterised in that in the first station the regulator consists of a current regulator for the EHT d. c. current and in the second station the regulator consists of a reactive power regulator or a voltage regulator or, in particular, an extinction angle regulator.

16. A method as claimed in Claim 14 or 15, characterised in that the derived release signal and the variables required for the regulators in the two stations are formed from the information available in the station in question without the use of any remote control signal.

17. A method as claimed in one of Claims 14 to 16, characterised in that in each case, at least when the control angle provided for normal operation has been reached, the control angles are determined by the output signal of the respective regulator and by an advance control signal ($U_{dLA}$ or $\alpha_{Bv}$), formed from the EHT d. c. voltage ($U_{dLA}$) of the first station (A) and the EHT d. c. current ($i_{dB}$) of the second station. (Fig. 5).

18. A method as claimed in one of Claims 14 to 16, characterised in that when the control angle provided for normal operation has been reached, the control angles are determined by the output signal of the respective regulator and by an advance control signal ($U_{dB}$ and $\Delta x_{bV}$), derived from the EHT d. c. current ($i_{dB} = i_d$) and the voltage of the second a. c. voltage network. (Fig. 3).

19. An EHT d. c. device comprising an EHT d. c. link which is connected in a first station (A) to a first a. c. voltage network (NA) via a first converter (1) which operates as a rectifier in normal operation, and is connected in a second station (B) to a second a. c. voltage network via a second converter (2) which operates as an inverter in normal operation, where in each station (A,B) a control set which operates in synchronism with the respective a. c. voltage network and is driven by a control and regulating device with a control angle by means of a reference voltage generator, forms a cycle of network-clock-controlled ignition commands for the respective converter in normal operation, and where the ignition commands can be blocked in a blocking circuit or converted into ignition commands for the converter valves by means of a leading release signal formed in a monitoring device (Fig. 1), characterised in that

a) the monitoring device (Fig. 11) of the first station contains first monitoring means (51) which form the leading release signal by monitoring the disturbance-free state of the first a. c. voltage network connected to this first station ;

b) the monitoring device of the other station contains second monitoring means (73) which form a derived release signal by monitoring the d. c. voltage-side electrical variables as soon as the start-up of normal operation in this first station can be detected in this other station ;

c) in the blocking circuit (BS) of each station the ignition pulses can be blocked in the presence of a disturbance signal and can be released by a leading or a derived release signal ; and

d) in each station the respective release signal starts a ramp function generator (66A, 66B ; Fig. 9-10) having a pre-programmed ramp function which leads approximately into the operational modulation level of the respective converter after a predetermined ramp time in order to preset the control angle when normal operation is started-up.

20. A device as claimed in Claim 19, characterised in that the monitoring device of each station comprises the first and second monitoring means and also third and fourth monitoring means, the monitoring of the respective a. c. voltage network connected to this station and of the d. c. voltage-side electrical variables of this station resulting in :

the first means (71) generating a self-release pulse (Ffe) as leading release signal when the a. c. voltage network in question passes from a disturbed state into a disturbance-free state or when a start command occurs ;

the second means (73) generate a remote-release pulse (Fff) as derived release signal when the effects of an EHT d. c. voltage surge produced by the release of the ignition pulses of the remote station occur ;

the third means (72) generate a remote-disturbance message pulse (Fdf) in the event of an interruption in the normal operation, caused by an interference in the remote station or the EHT d. c. link ;

the fourth means (74) generate a self-disturbance message pulse (Fde) when the a. c. voltage network in question assumes the disturbed state ; and

that the monitoring means drive a disturbance memory (700) which activates the ramp function generator in the presence of a leading or derived release signal and emits a disturbance signal in the presence of a self-disturbance or remote-disturbance message pulse.

21. A device as claimed in Claim 19 or 20, characterised in that following a breakdown of the a. c. voltage network in a station and the subsequent recurrence of the a. c. voltage, the formation of the release signal in this station is delayed until (preferably following a predetermined length of time) the reference voltage generator generates a reference voltage which is displaced in phase by a maximum of 30° relative to the fundamental voltage oscillation of the recurring network.

22. A device as claimed in one of Claims 19 to 21, characterised in that the ramp function generator stores a ramp function which commences approximately from the modulation level of zero and that means are provided to temporarily shift the control angle in the direction of the rectifier operation prior to or at the start of the ramp function.

23. A device as claimed in one of Claims 19 to 22, characterised by an advance control device connected in series with the control set to input the control angle ($\alpha_A$, $\alpha_B$), and by switch-over means which enable the advance control device to be supplied with the output signal of the ramp function generator or an interference variable, in particular the voltage ($U_{dLA}$) on the side remote from the first converter (1A) of a following choke (LA) in the first station or a model interference variable, calculated from the EHT d. c. current ($id_B$), network a. c. voltage ($U_B$) and a predetermined theoretical extinction angle in the second station.

24. A device as claimed in one of Claims 19 to 23, characterised in that the control angle is determined during the ramp function by the ramp function generator, and following the ramp function by the disturbance variable, and can be corrected by the output signal of a command variable regulator.

25. A device as claimed in Claim 24, characterised in that the command variable regulator can be halted before normal operation is started up and can be activated at or after the start of the ramp function generator.

26. A device as claimed in one of Claims 19 to 25, characterised by a storage and programming circuit connected to the ramp function generator and to the blocking circuit such that in the presence of a leading release signal the ignition pulses of the first converter are generated by impressing a positive voltage pulse considered in the current-carrying direction of the other converter.

**Revendications**

1. Procédé pour faire démarrer le fonctionnement normal d'une voie de transmission (HGÜ) à courant continu à haute tension pour la transmission de la puissance entre deux réseaux à tension alternative (NA, NB), selon lequel, pendant le fonctionnement normal, un premier convertisseur de courant (1A) commandé par la cadence du réseau et fonctionnant en tant que redresseur, injecte un courant continu prédéterminé ($i_{dA}$) de la voie de transmission (HGÜ), prélevé du premier réseau à tension

alternative (NA), dans un premier poste (poste A) et un second convertisseur de courant (1B), qui est commandé par la cadence du réseau, réalise une injection dans le second réseau à tension alternative (NB) et fonctionne en tant qu'onduleur, détermine la tension continue ($U_{dB}$) de la voie de transmission (HGÜ) et selon lequel, dans le cas de la délivrance d'un signal de libération pilote (QA = 1 ou QB = 1) dans un premier des deux postes (poste A ou poste B) et alors que le réseau à tension alternative (NA ou NB) est raccordé à ce premier poste, le fonctionnement normal est déclenché dans ce poste, caractérisé par le fait que :

a) le signal de libération pilote déclenche le démarrage du fonctionnement normal, commandé par la cadence du réseau, du premier convertisseur de courant (1A ou 1B) situé dans le premier poste, fonctionnement lors duquel une impulsion de tension est injectée dans la voie de transmission (HGÜ) et l'angle de commande ($\alpha_A$ ou $\alpha_B$) du premier convertisseur de courant est augmenté jusqu'à prendre la valeur de l'angle de commande prévu pour le fonctionnement normal, et

b) dans le second poste (B ou A) raccordé à l'autre réseau à tension alternative, un signal de libération dérivé (QB = 1 ou QA = 1) est formé, par contrôle des grandeurs électriques côté tension continue

$$(dU_{dB}/dt,\ di_{dB}/dt \text{ ou } dU_{dA}/dt,\ di_{dA}/dt),$$

lors de l'apparition des effets de l'impulsion de tension injectée dans le premier poste, ce signal déclenchant dans ce second poste le démarrage du fonctionnement normal commandé par la cadence du réseau, l'angle de commande de l'autre convertisseur de courant disposé dans ce second poste (B ou A) est augmenté conformément à une fonction de marche en régime élevé, depuis un angle de commande voisin de 90° à l'angle de commande prévu pour le fonctionnement normal stationnaire et qui est réglé sur l'augmentation de l'angle de commande du premier convertisseur de courant (figure 16, figure 23 à figure 27).

2. Procédé suivant la revendication 1, caractérisé par le fait que l'augmentation de l'angle de commande est terminée au bout d'environ 2 périodes de la tension alternative.

3. Procédé suivant la revendication 1 ou 2, caractérisé par le fait que le signal de libération dérivé n'est libéré que lorsque l'autre réseau à tension alternative se trouve dans un état non perturbé.

4. Procédé suivant les revendications 1 à 3, caractérisé par le fait que le signal de libération pilote dans un poste est formé par détection de l'état non perturbé du réseau à tension alternative (NA ou NB) raccordé au premier poste et que l'augmentation des deux angles de commande commence approximativement à partir de l'angle de commande 90°, auquel cas un décalage supplémentaire transistoire ($\Delta\alpha$) est superposé ou peut être superposé au démarrage de la marche en régime élevé, dans le sens de la modulation complète du redresseur (figures 23 à 27).

5. Procédé suivant l'une des revendications 1 à 4, caractérisé par le fait que les deux angles de commande sont augmentés conformément à des fonctions de marche en régime élevé, programmées d'avance.

6. Procédé suivant l'une des revendications 1 à 5, caractérisé par le fait qu'une extinction du courant de la voie de transmission HGÜ est imposée, avant le démarrage du fonctionnement normal, au moyen d'un blocage des impulsions d'amorçage des deux convertisseurs de courant (figure 25).

7. Procédé suivant l'une des revendications 1 à 5, caractérisé par le fait qu'un convertisseur de courant est bloqué avant le démarrage du fonctionnement normal et que le courant de la voie de transmission HGÜ et la tension de la voie de transmission HGÜ sont interrompus par décalage de l'angle d'amorçage pour l'autre convertisseur de courant (figure 24).

8. Procédé suivant l'une des revendications 1 à 5, caractérisé par le fait qu'avant le démarrage du fonctionnement normal on maintient un fonctionnement en régime de secours, lors duquel des valves de dérivation sont conductrices dans un premier poste et un fonctionnement en redresseur est maintenu dans le second poste (figures 23, 26, 27).

9. Procédé suivant l'une des revendications 6 à 8, caractérisé par le fait que le démarrage du fonctionnement normal est déclenché par le fait qu'un cycle d'instructions d'amorçage commandées par la cadence du réseau est formé à partir d'une tension de référence synchrone avec le réseau et à partir de l'angle de commande, et que le cycle d'instructions d'amorçage n'est libéré que lors de l'apparition d'une instruction d'amorçage pour une valve qui fait partie d'une sélection, programmée d'avance pour le démarrage, de valves du convertisseur de courant.

10. Procédé suivant la revendication 8, caractérisé par le fait que le démarrage du fonctionnement normal est déclenché grâce au fait qu'un cycle d'instructions d'amorçage commandées par la cadence du réseau est formé à partir de la tension de référence synchrone avec le réseau et de l'angle de commande et que le cycle d'instructions d'amorçage n'est libéré que lors de l'apparition d'une instruction d'amorçage pour une valve, qui fait partie d'une sélection, dérivée de l'amorçage des valves de dérivation, de valves du convertisseur de courant.

11. Procédé suivant la revendication 8, caractérisé par le fait qu'une combinaison de valves

commandées lors du fonctionnement normal, commandées par la cadence du réseau, du convertisseur de courant sont amorcées en tant que valves de dérivation.

12. Procédé suivant la revendication 8, caractérisé par le fait qu'au démarrage du fonctionnement normal, après une perturbation de l'un des réseaux à tension alternative, un cycle d'impulsions d'amorçage, qui est dérivé de l'angle de commande et d'une tension de référence synchronisée sur le réseau à tension alternative, est libéré dès qu'il se produit une synchronisation du réseau après la perturbation de la tension de référence avec un défaut de phase inférieur à 30°.

13. Procédé suivant l'une des revendications 1 à 12, caractérisé par le fait que

a) dans chaque poste, le début et la fin d'une perturbation du réseau à tension alternative particulier (NA ou NB), raccordé à ce poste, sont détectés au moyen du contrôle de grandeurs électriques ($U_A$ ou $U_B$) et que, lors de l'apparition d'une perturbation du réseau ($U_A < U_{limite}$ ou $U_B < U_{limite}$) un signal de perturbation pilote (QA = 0 ou QB = 0) est déclenché par une impulsion (Fde) de signalisation d'une auto-perturbation et qu'à la fin de la perturbation du réseau, le signal de libération pilote (QA = 1 ou QB = 1) est déclenché par une impulsion d'auto-libération (Ffe),

b) que dans chaque poste, le début et la fin d'une perturbation interrompant le fonctionnement normal dans le poste étranger sont détectés par contrôle des grandeurs électriques, côté tension continue, du poste proprement dit et que lors de l'apparition d'effet d'une perturbation, un signal de perturbation dérivé (QB = 0 ou QA = 0) est déclenché par une impulsion de signalisation de perturbation étrangère (Fde) et que, lors de l'apparition d'effets d'une interruption terminée, un signal de libération dérivé est déclenché par une impulsion de libération étrangère (Ffe), et

c) que dans chaque poste, le fonctionnement normal est terminé et une commutation est réalisée sur le fonctionnement en régime de secours dès qu'un signal de perturbation est déclenché dans ce poste, et que le fonctionnement en régime de secours est terminé et que le fonctionnement normal démarre dès qu'un signal de libération apparaît dans ce poste (figure 11).

14. Procédé suivant l'une des revendications 1 à 13, caractérisé par le fait que l'angle de commande est déterminé au moins après le démarrage du fonctionnement normal et une fois que la valeur finale d'un régulateur d'une grandeur de référence est atteinte.

15. Procédé suivant la revendication 14, caractérisé par le fait que dans le premier poste, on utilise en tant que régulateur un régulateur de courant pour le courant de la voie de transmission HGÜ et qu'on utilise dans le second poste, en tant que régulateur, un régulateur de la puissance réactive ou un régulateur de tension ou notamment un régulateur de l'angle d'extinction.

16. Procédé suivant la revendication 14 ou 15, caractérisé par le fait que le signal de libération dérivé et les grandeurs nécessaires pour les régulateurs des deux postes sont formés à partir de l'information présente dans le poste respectif proprement dit, sans l'utilisation de signaux de télécommande.

17. Procédé suivant l'une des revendications 14 à 16, caractérisé par le fait que respectivement au moins une fois que l'angle de commande prévu pour le fonctionnement normal est atteint, les angles de commande sont déterminés par le signal de sortie du régulateur respectif et à partir d'un signal de commande pilote ($U_{dLA}$ ou $\alpha_{Bv}$) formé à partir de la tension ($U_{dLA}$) dans la voie HGÜ du premier poste (A) ou à partir du courant ($i_{dB}$) dans la voie HGÜ du second poste (figure 5).

18. Procédé suivant l'une des revendications 14 à 16, caractérisé par le fait qu'une fois que l'angle de commande prévu pour le fonctionnement normal est atteint, les angles de commande sont déterminés par le signal de sortie du régulateur respectif et par un signal de commande pilote ($\widetilde{U}_{dB}$ ou $\Delta x_{dBv}$) dérivé du courant ($i_{dB} = i_d$) de la voie HGÜ, et de la tension du second réseau à courant alternatif (figure 3).

19. Dispositif pour la transmission à courant continu à haute tension comportant une voie de transmission (HGÜ) à courant continu à haute tension, qui est raccordée, dans un premier poste (A) à un premier réseau à tension alternative (NA) par l'intermédiaire d'un premier convertisseur de courant (1) fonctionnant en tant que redresseur pendant le fonctionnement normal, et est raccordé, dans un second poste (B), à un second réseau à tension alternative par l'intermédiaire d'un second convertisseur de courant (2) fonctionnant en onduleur pendant le fonctionnement normal, auquel cas, pendant le fonctionnement normal, un ensemble de commande fonctionnant, au moyen d'un générateur de la tension de référence, en synchronisme avec le réseau respectif à tension alternative et commandé par un dispositif de commande et de réglage avec un angle de commande, forme un cycle d'instructions d'amorçage commandées par la cadence du réseau, pour le convertisseur de courant respectif et, à l'aide d'un signal de libération pilote formé dans un dispositif de contrôle, les instructions d'amorçage peuvent être bloquées dans un circuit de blocage ou peuvent être converties en instructions d'amorçage pour les valves du convertisseur de courant (figure 1), caractérisé par le fait que

a) le dispositif de contrôle (figure 11) d'un poste contient des premiers moyens de contrôle (71), qui forment le signal de libération pilote par contrôle de l'état exempt de perturbation d'un réseau à tension alternative raccordé à ce poste,

b) le dispositif de contrôle de l'autre poste contient des seconds moyens de contrôle (73) qui forment un signal de libération dérivé par contrôle des grandeurs électriques côté tension continue, dès que le démarrage du fonctionnement normal du premier poste peut être détecté dans cet autre poste,

c) dans le circuit de blocage (BS) de chaque poste, les impulsions d'amorçage peuvent être bloquées dans le cas de la présence d'un signal de perturbation et peuvent être libérées par un signal de libération pilote ou par un signal de libération dérivée, et

d) dans chaque poste un générateur de fonctionnement en régime élevé (66A, 66B ; figures 9, 10) est déclenché dans chaque poste par le signal de libération respectif, conformément à une fonction de marche en régime élevé programmée d'avance et aboutissant après une durée prédéterminée de marche en régime élevé, approximativement au degré de modulation, conforme au fonctionnement, du convertisseur de courant respectif, pour la prédétermination de l'angle de commande lors du démarrage du fonctionnement normal.

20. Dispositif suivant la revendication 19, caractérisé par le fait que le dispositif de contrôle de chaque poste comporte les premiers et seconds moyens de contrôle ainsi que les troisièmes et quatrièmes moyens de contrôle, auquel cas grâce au contrôle du réseau à tension alternative raccordé respectivement à ce poste et des grandeurs électriques, côté tension continue, de ce poste

les premiers moyens (71) produisent une impulsion d'autolibération (Ffe) en tant que signal de libération pilote, lors du passage du réseau à tension alternative proprement dit d'un état perturbé à l'état non perturbé, ou lors de l'apparition d'une instruction de démarrage,

les seconds moyens (73) produisent une impulsion de libération étrangère (Fff) en tant que signal de libération dérivé, lors de l'apparition d'effets d'une impulsion de tension de la voie de transmission (HGÜ), produite par la libération des impulsions d'amorçage du poste étranger,

les troisièmes moyens (72) produisent une impulsion (Fdf) de signalisation d'une perturbation étrangère, dans le cas d'une interruption du fonctionnement normal, provoquée par une perturbation dans le poste étranger ou dans la voie de transmission HGÜ, et

les quatrièmes moyens (74) produisent une impulsion (Fde) de signalisation d'auto-perturbation lors du passage du réseau à tension alternative proprement dit à l'état perturbé, et

que les moyens de contrôle commandent une mémoire de perturbations (700) qui déclenche le générateur de marche en régime élevé dans le cas de l'apparition d'un signal de libération pilote ou dérivé et délivre un signal de perturbation dans le cas de l'apparition d'une impulsion de signalisation d'auto-perturbation ou d'une impulsion de signalisation de perturbation étrangère.

21. Dispositif suivant la revendication 19 ou 20, caractérisé par le fait qu'après une défaillance du réseau à tension alternative dans un poste et le rétablissement ultérieur de la tension alternative, la formation du signal de libération dans ce poste est retardée jusqu'à ce que (de préférence après un intervalle de temps prédéterminé) le générateur de la tension de référence produise une tension de référence déphasée au maximum de 30° par rapport à l'oscillation fondamentale de la tension du réseau rétabli.

22. Dispositif suivant l'une des revendications 19 à 21, caractérisé par le fait que dans le générateur de marche en régime élevé se trouve mémorisée une fonction en rampe qui démarre approximativement à partir du degré de modulation zéro et qu'il est prévu des moyens permettant de décaler l'angle de commande transitoirement en direction du fonctionnement en redresseur avant ou lors du démarrage de la fonction de marche en régime élevé.

23. Dispositif suivant l'une des revendications 19 à 22, caractérisé par un dispositif de commande pilote, branché en amont de l'ensemble de commande et servant à introduire l'angle de commande ($\alpha_A$, $\alpha_B$), et par des moyens de commutation au moyen desquels peut être appliqué au dispositif de commande pilote le signal de sortie du générateur de marche à régime élevé ou une grandeur perturbatrice, notamment la tension ($U_{dLA}$) présente sur le côté, tourné à l'opposé du premier convertisseur de courant (LA) d'une bobine d'arrêt (LA) branchée en aval dans le premier poste ou une tension perturbatrice modèle calculée à partir du courant ($i_{dB}$) dans la voie de transmission HGÜ, de la tension alternative du réseau ($U_B$) et d'un angle d'extinction de consigne prédéterminé, dans le second poste.

24. Dispositif suivant l'une des revendications 19 à 23, caractérisé par le fait que l'angle de commande est déterminé par la grandeur perturbatrice pendant la marche à régime élevé du générateur de marche à régime élevé et après cette marche en régime élevé et peut être corrigé au moyen du signal de sortie d'un régulateur de la grandeur de référence.

25. Dispositif suivant la revendication 24, caractérisé par le fait que le régulateur de la grandeur de référence peut être mis à l'arrêt avant le démarrage du fonctionnement normal et peut être activé avec ou après le démarrage du générateur de fonctionnement en régime élevé.

26. Dispositif suivant l'une des revendications 19 à 25, caractérisé par un circuit de mémoire et de programmation qui est relié au générateur de marche à régime élevé et au circuit de blocage de telle sorte que dans le cas de l'apparition d'un signal de libération pilote, les impulsions d'amorçage de l'un des convertisseurs de courant sont déclenchées au moyen de l'injection d'une impulsion de tension positive dans la direction de transmission de courant de l'autre convertisseur de courant.

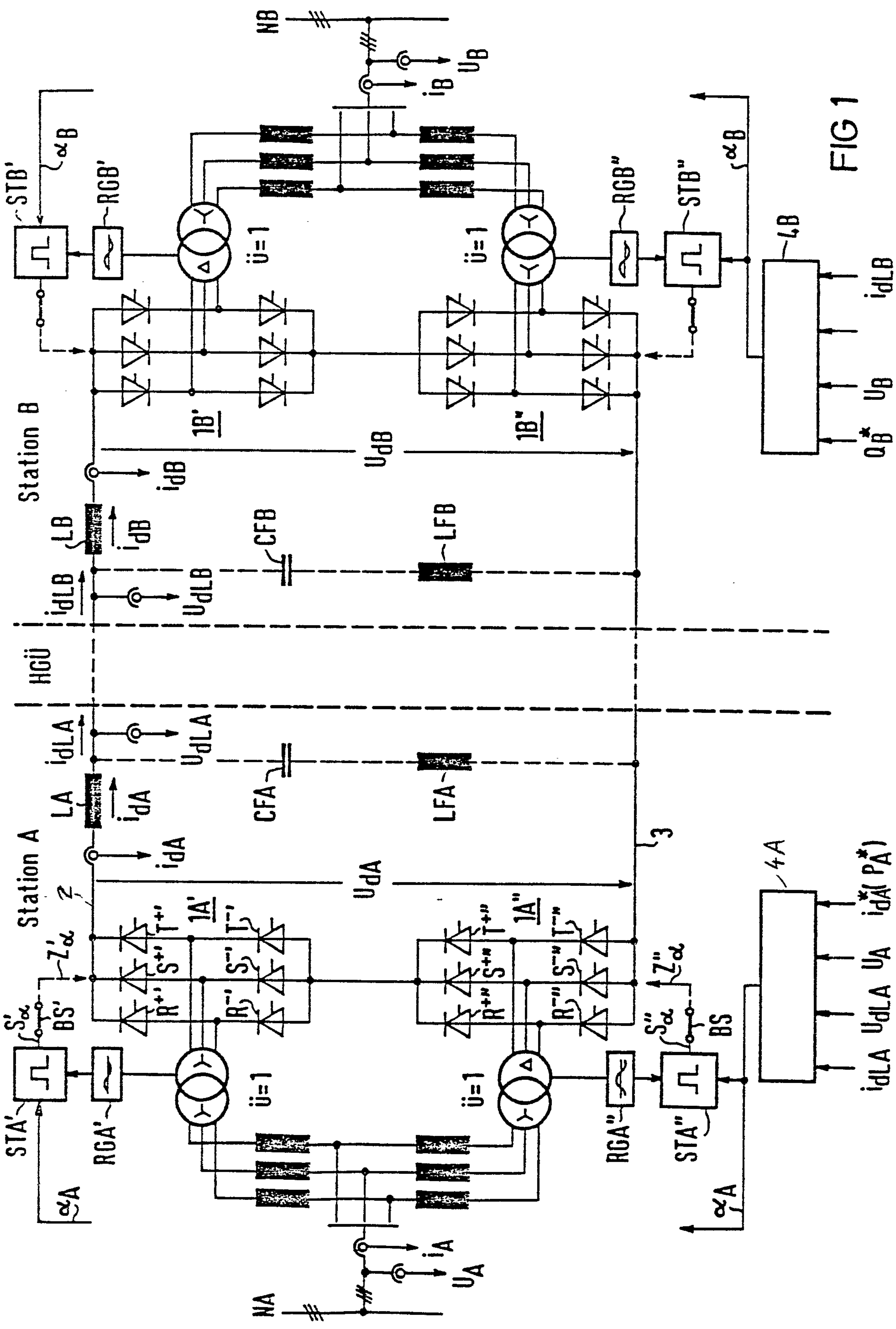

NB
NA
Station A
Station B
HGÜ
STA'
STA"
STB'
STB"
RGA'
RGA"
RGB'
RGB"
1A'
1A"
1B'
1B"
LA
LB
CFA
CFB
LFA
LFB
4A
4B
ü=1
BS'
BS


FIG 1

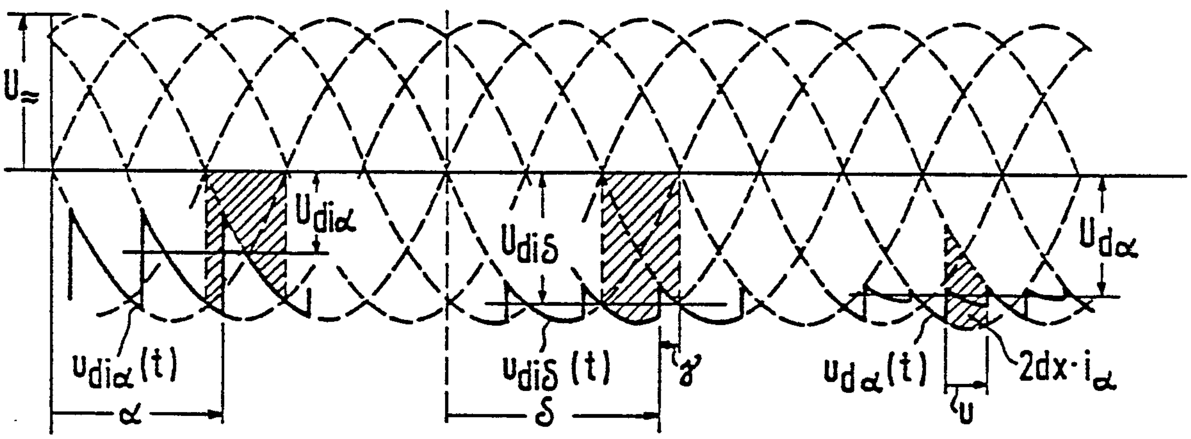


FIG 2

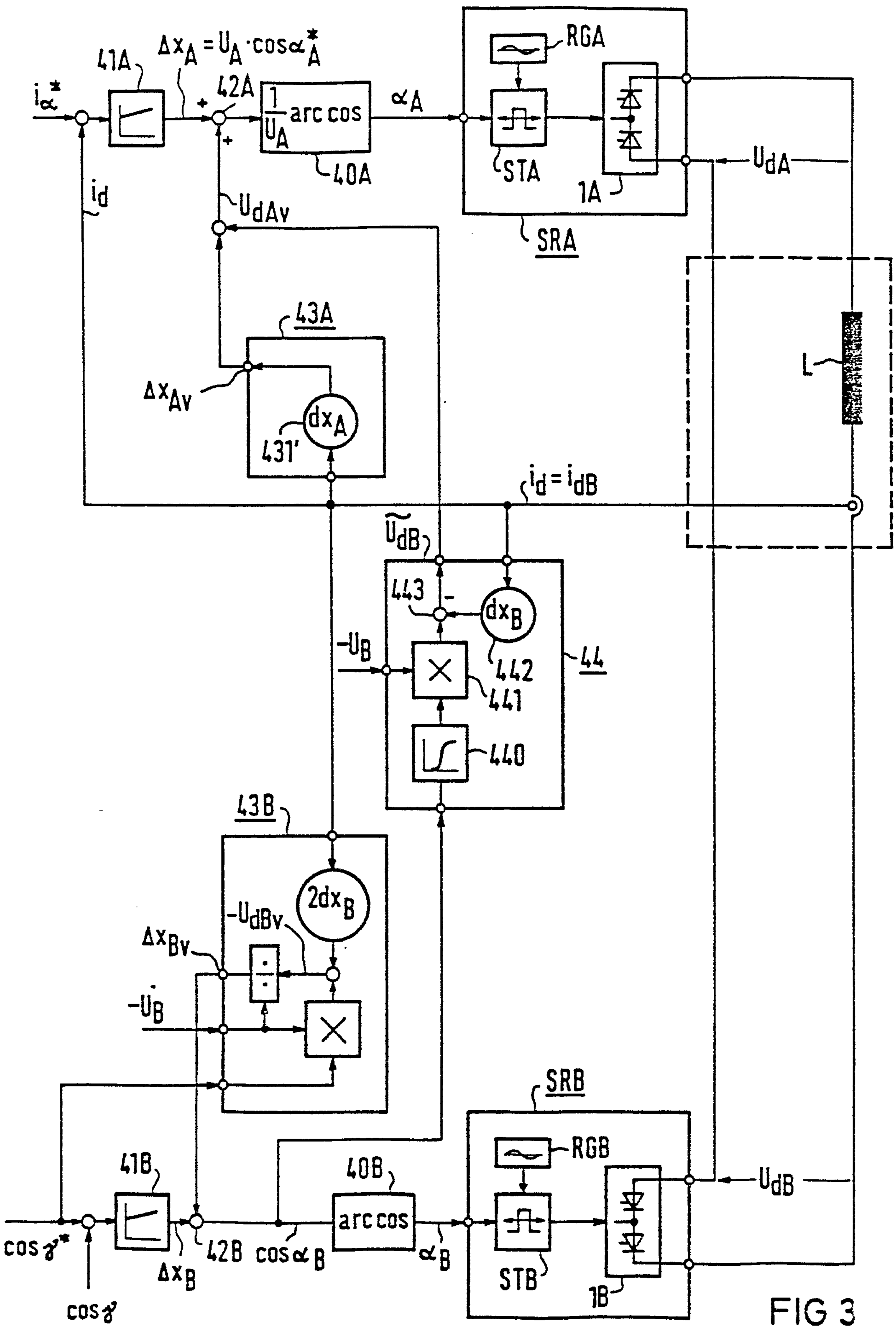
41A
$\Delta x_A = U_A \cdot \cos\alpha_A^*$
$i_\alpha^*$
42A
$\frac{1}{U_A}$ arc cos
$\alpha_A$
RGA
STA
1A
SRA
40A
$i_d$
$U_{dAv}$
$U_{dA}$
43A
$\Delta x_{Av}$
$dx_A$
431'
L
$i_d = i_{dB}$
$\widetilde{U_{dB}}$
443
$dx_B$
$-U_B$
442
441
44
440
43B
$2dx_B$
$-U_{dBv}$
$\Delta x_{Bv}$
$-U_B$
SRB
RGB
41B
40B
arc cos
$U_{dB}$
$\cos\gamma^*$
$\Delta x_B$
42B
$\cos\alpha_B$
$\alpha_B$
STB
1B
$\cos\gamma$
FIG 3

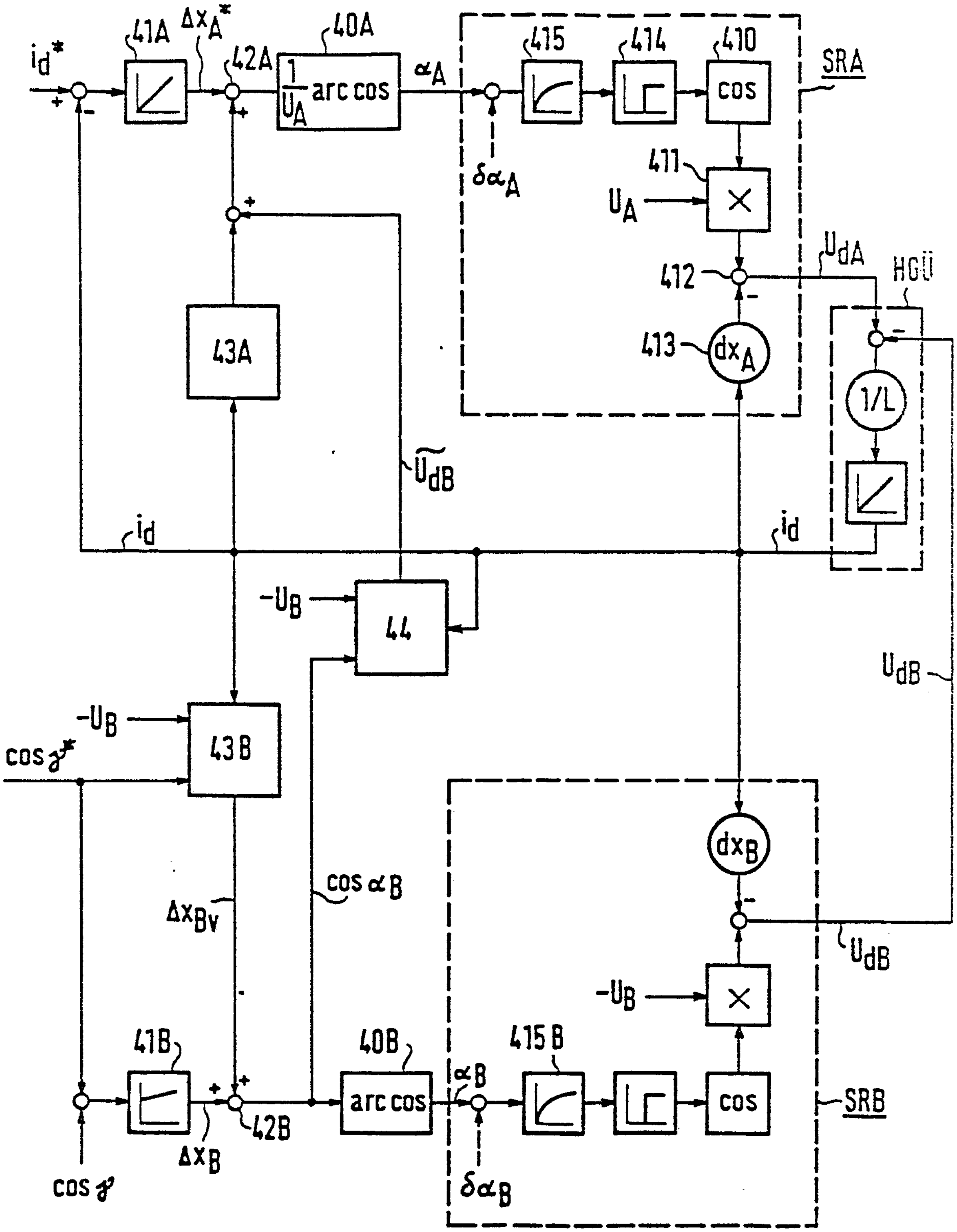

id*
41A
Δx_A*
42A
40A
1/U_A arc cos
α_A
415
414
410
cos
SRA
δα_A
411
U_A
412
U_dA
HGÜ
413
dx_A
1/L
43A
Ũ_dB
id
id
-U_B
44
-U_B
43B
cos γ*
U_dB
dx_B
cos α B
Δx_Bv
U_dB
-U_B
41B
40B
415 B
α B
arc cos
cos
SRB
Δx_B
42B
cos γ
δα_B


FIG 4

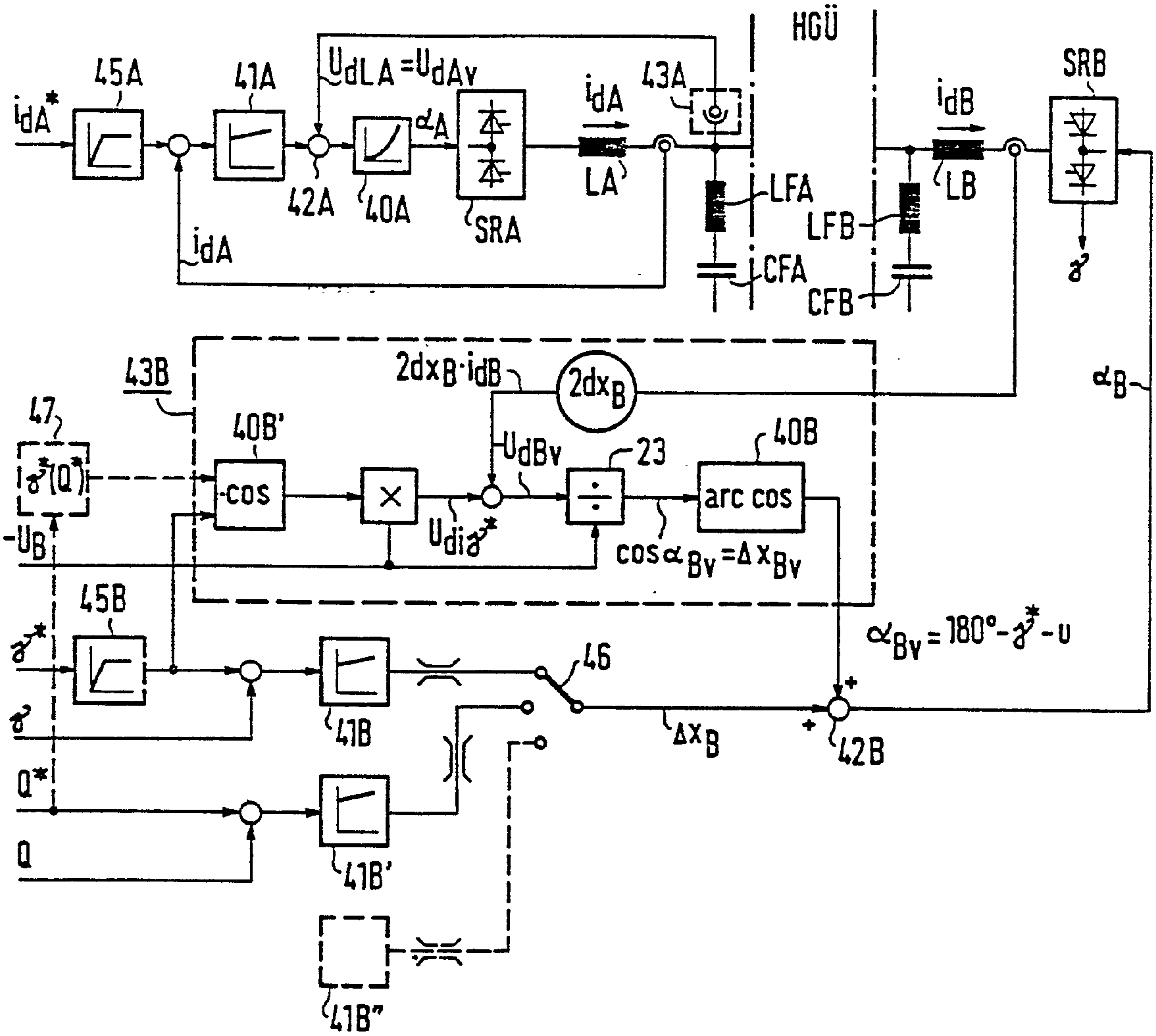

HGÜ
$i_{dA}^*$
45A
41A
$U_{dLA} = U_{dAv}$
$\alpha_A$
$i_{dA}$
43A
$i_{dB}$
SRB
42A
40A
SRA
LA
LFA
LFB
LB
$i_{dA}$
CFA
CFB
$\gamma$
43B
$2dx_B \cdot i_{dB}$
$2dx_B$
$\alpha_B$
47
40B'
40B
$\gamma^*(Q^*)$
cos
×
$U_{dBv}$
÷
23
arc cos
$-U_B$
$U_{di\gamma}^*$
$\cos\alpha_{Bv} = \Delta x_{Bv}$
45B
$\alpha_{Bv} = 180° - \gamma^* - u$
$\gamma^*$
46
$\gamma$
41B
$\Delta x_B$
42B
$Q^*$
Q
41B'
41B"


FIG 5

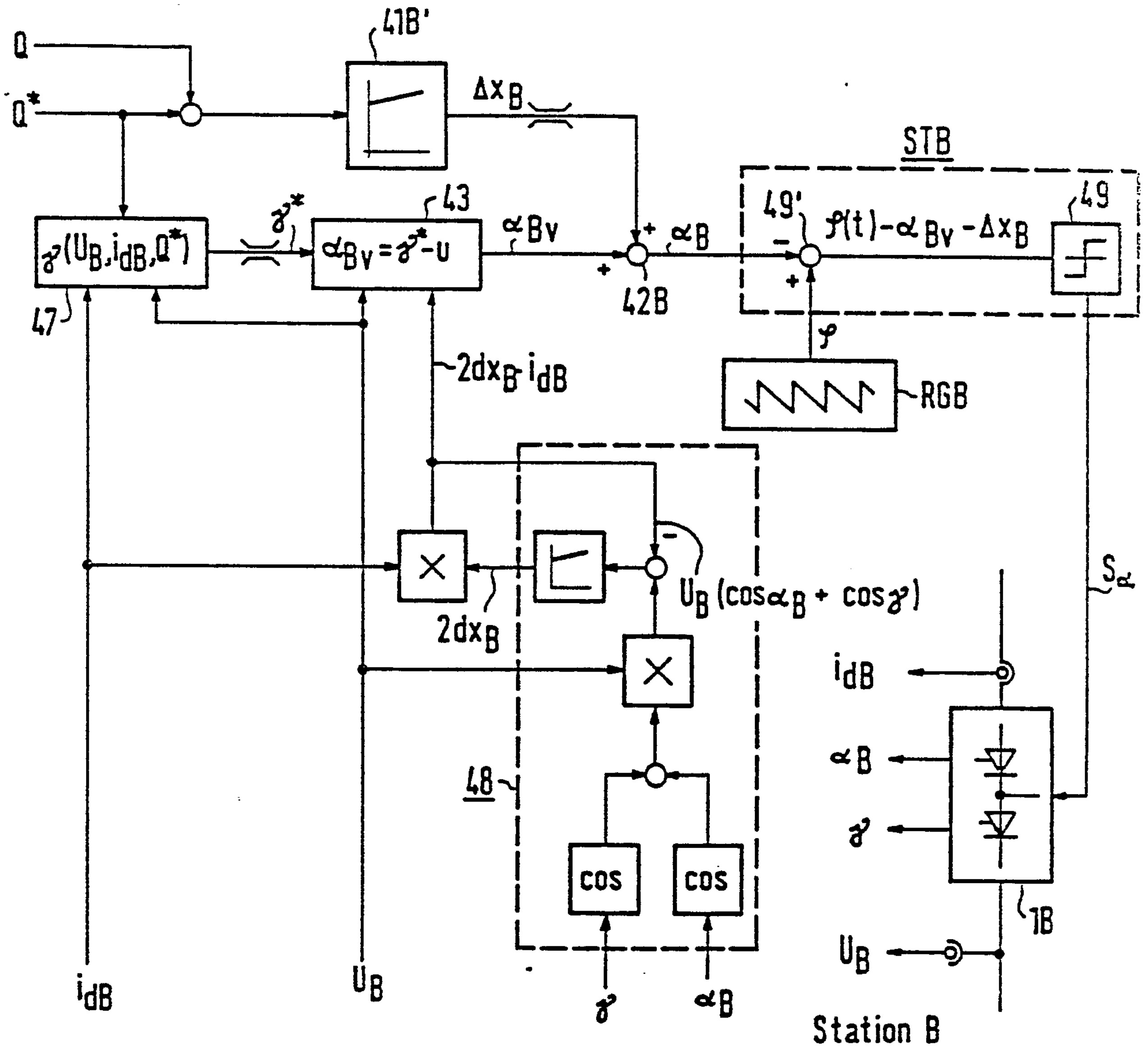
Q
Q*
41B'
ΔxB
STB
43
49'
49
γ(UB,idB,Q*)
γ*
αBv=γ*-u
αBv
+
+
αB
42B
–
+
φ(t)-αBv-ΔxB
47
φ
RGB
2dxB·idB
–
UB(cosαB+cosγ)
2dxB
Sα
idB
αB
γ
1B
UB
48
cos
cos
idB
UB
γ
αB
Station B

FIG 6

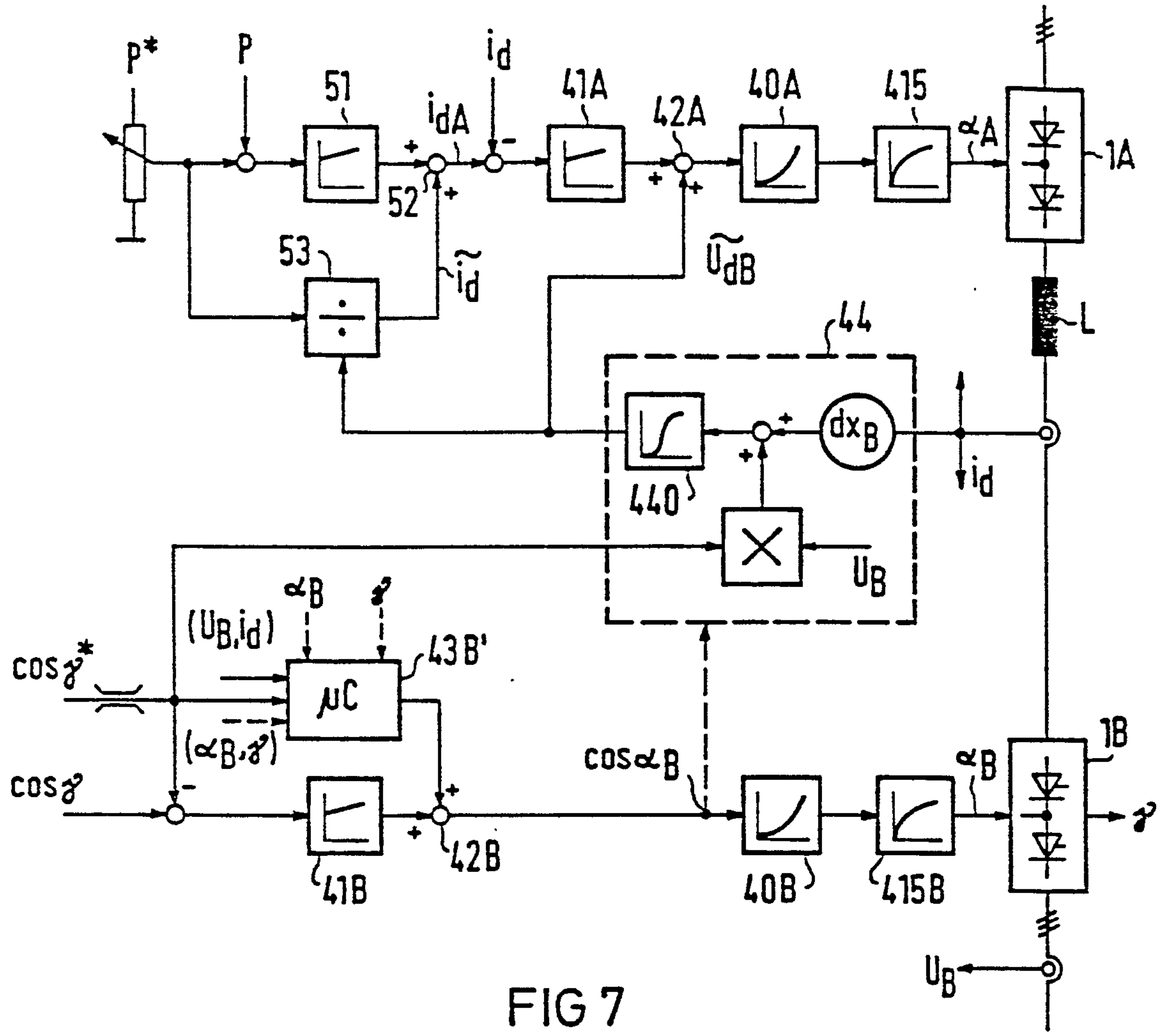
P*
P
51
id
idA
41A
42A
40A
415
αA
1A
52
53
ŨdB
ĩd
L
44
dxB
440
id
UB
αB
(UB,id)
43B'
cos γ*
μC
(αB,γ)
cos γ
cosαB
1B
41B
42B
40B
415B
γ
UB

FIG 7

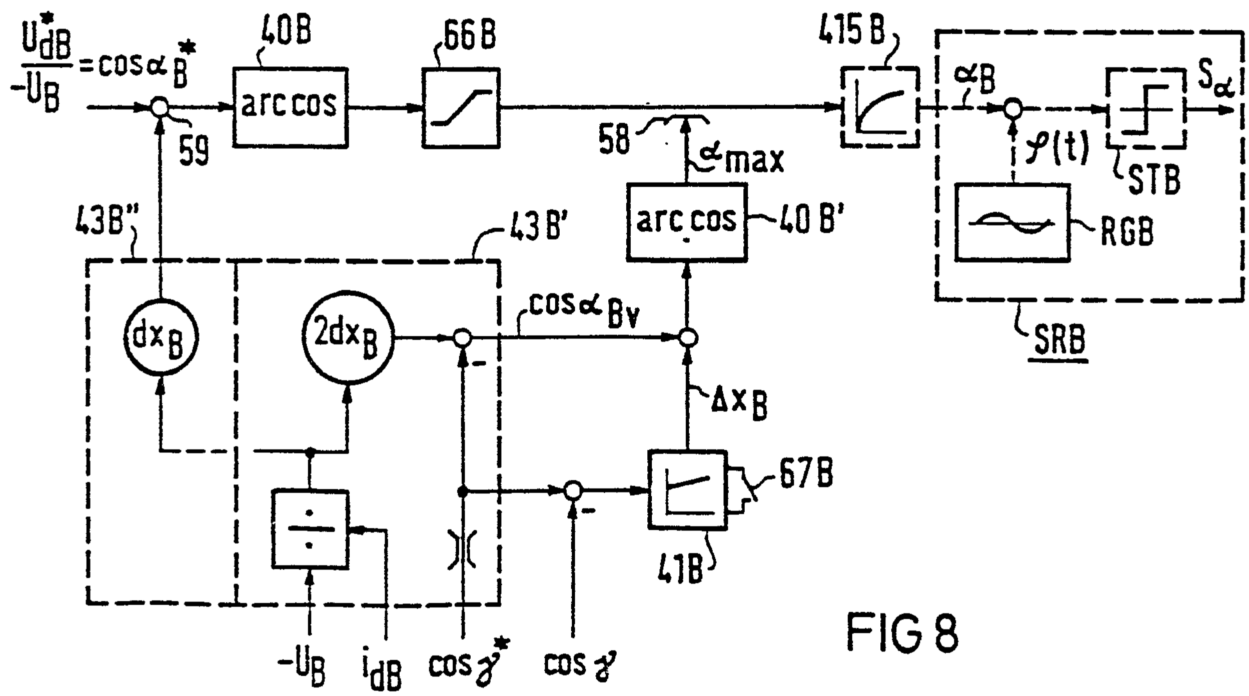
U*dB / -UB = cosα*B
40B
arccos
66B
415B
αB
Sα
59
58
αmax
φ(t)
STB
43B''
43B'
arc cos
40B'
RGB
dxB
2dxB
cosαBv
SRB
ΔxB
67B
41B
-UB
idB
cos γ*
cos γ

FIG 8

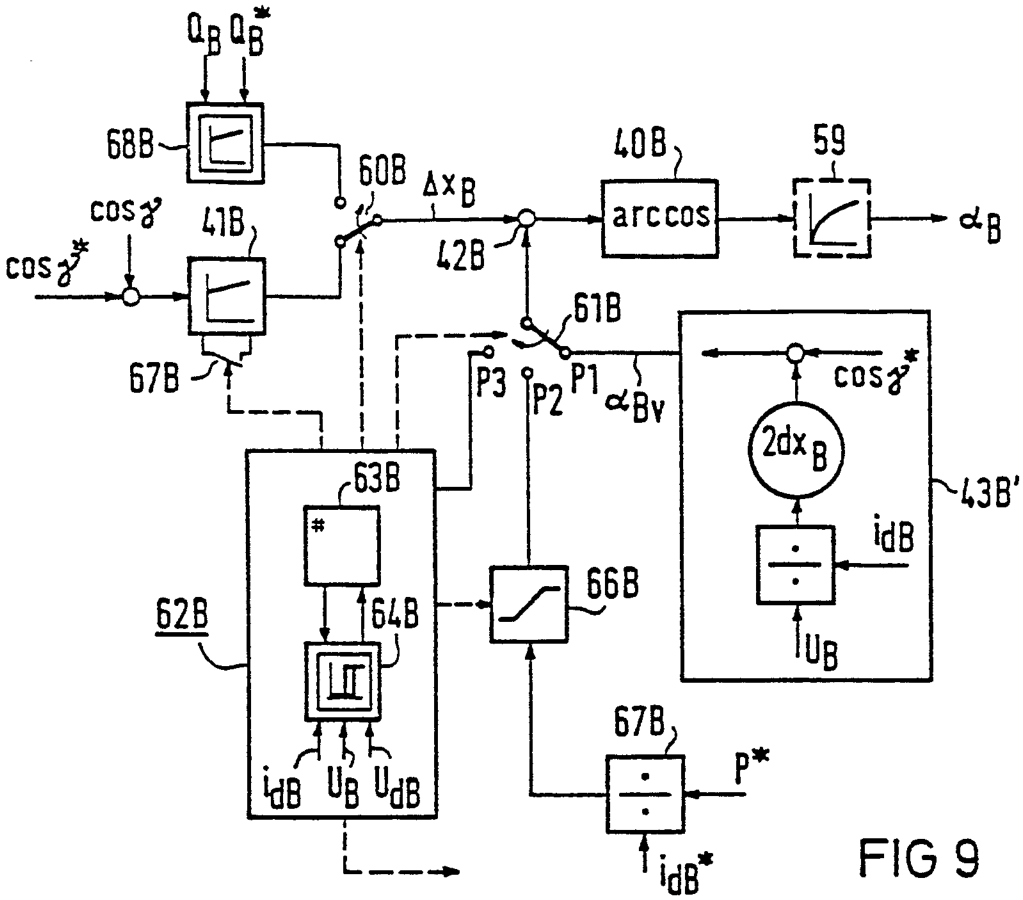

$Q_B$ $Q_B^*$
68B
60B
$\Delta x_B$
40B
59
arccos
$\alpha_B$
cos γ
cos γ*
41B
42B
61B
67B
P3
P2
P1
$\alpha_{Bv}$
cos γ*
2dx_B
63B
43B'
$i_{dB}$
66B
64B
62B
67B
$i_{dB}$ $U_B$ $U_{dB}$
$P^*$
$U_B$
$i_{dB}^*$


FIG 9

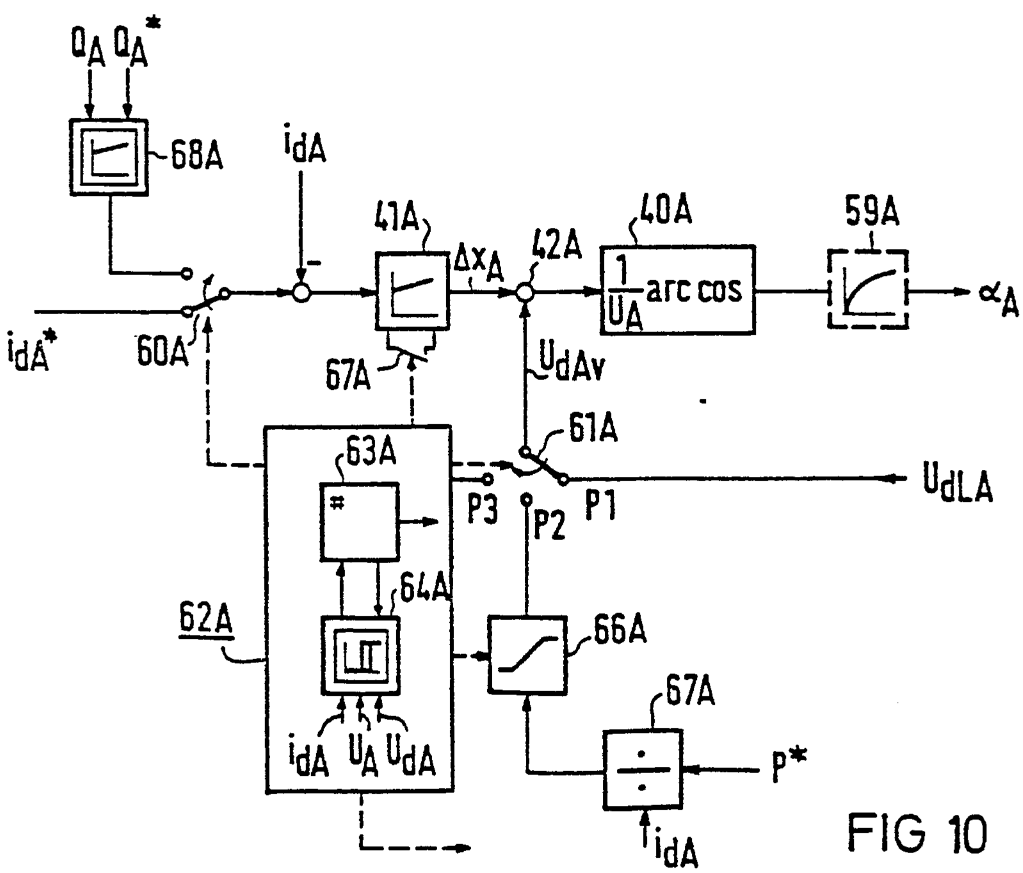

$Q_A$ $Q_A^*$
68A
$i_{dA}$
41A
$\Delta x_A$
42A
40A
59A
1/U_A arc cos
$\alpha_A$
$i_{dA}^*$
60A
67A
$U_{dAv}$
61A
63A
P3
P2
P1
$U_{dLA}$
64A
62A
66A
67A
$i_{dA}$ $U_A$ $U_{dA}$
$P^*$
$i_{dA}$


FIG 10

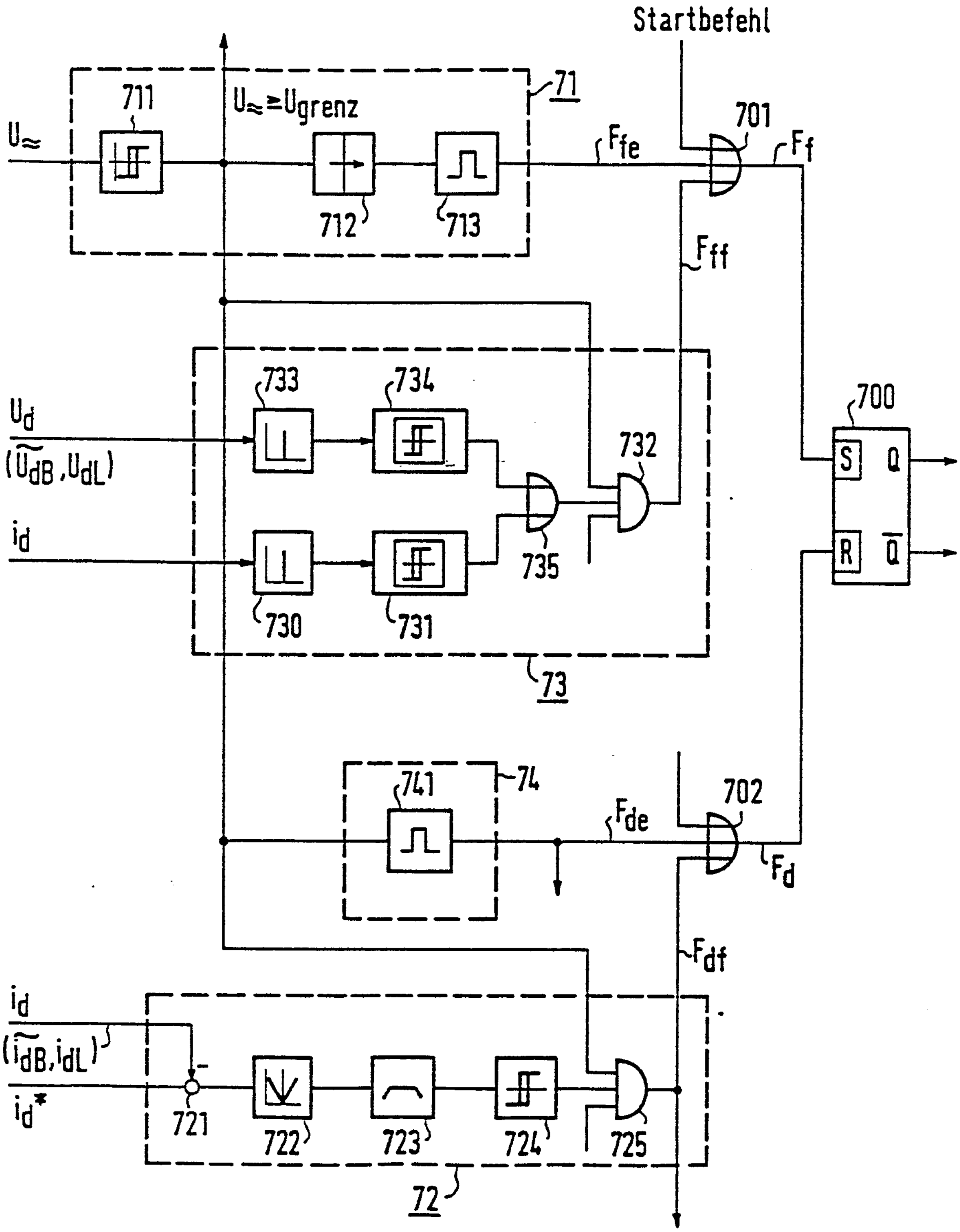

Startbefehl
71
711
U≈
U≈ ≥ Ugrenz
Ffe
701
Ff
712
713
Fff
733
734
700
Ud
732
S
Q
(ŨdB, UdL)
id
735
R
Q̄
730
731
73
741
74
702
Fde
Fd
Fdf
id
(ĩdB, idL)
id*
721
722
723
724
725
72


FIG 11

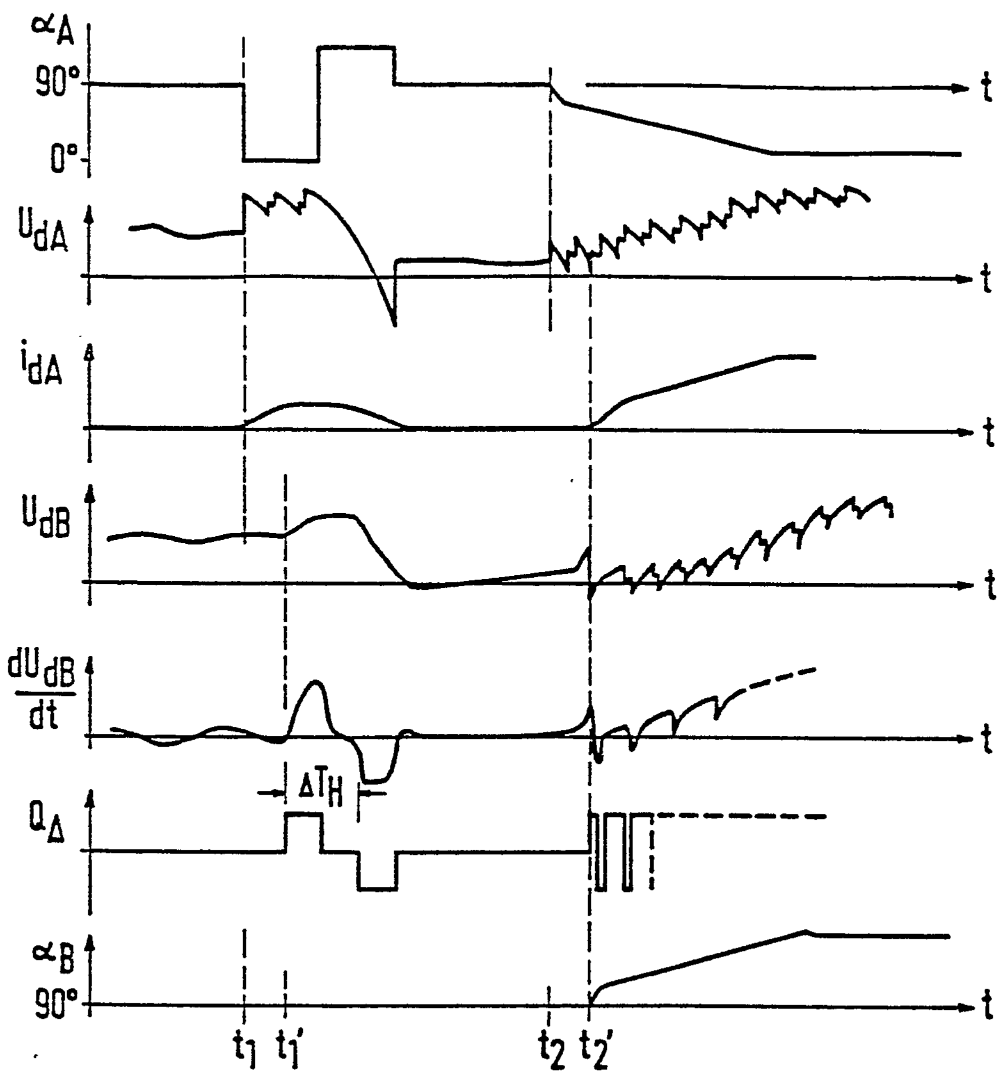

αA
90°
0°
UdA
idA
UdB
dUdB/dt
ΔTH
QΔ
αB
90°
t
t1 t1'
t2 t2'


FIG 12

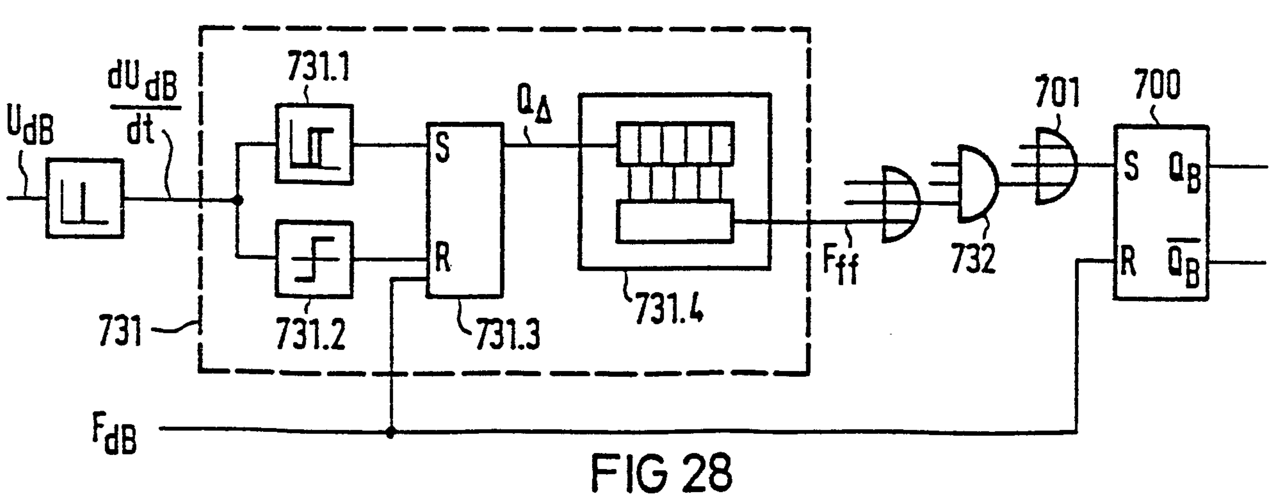

UdB
dUdB/dt
731.1
S
R
QΔ
731.2
731.3
731.4
731
Fff
732
701
700
S QB
R Q̄B
FdB


FIG 28

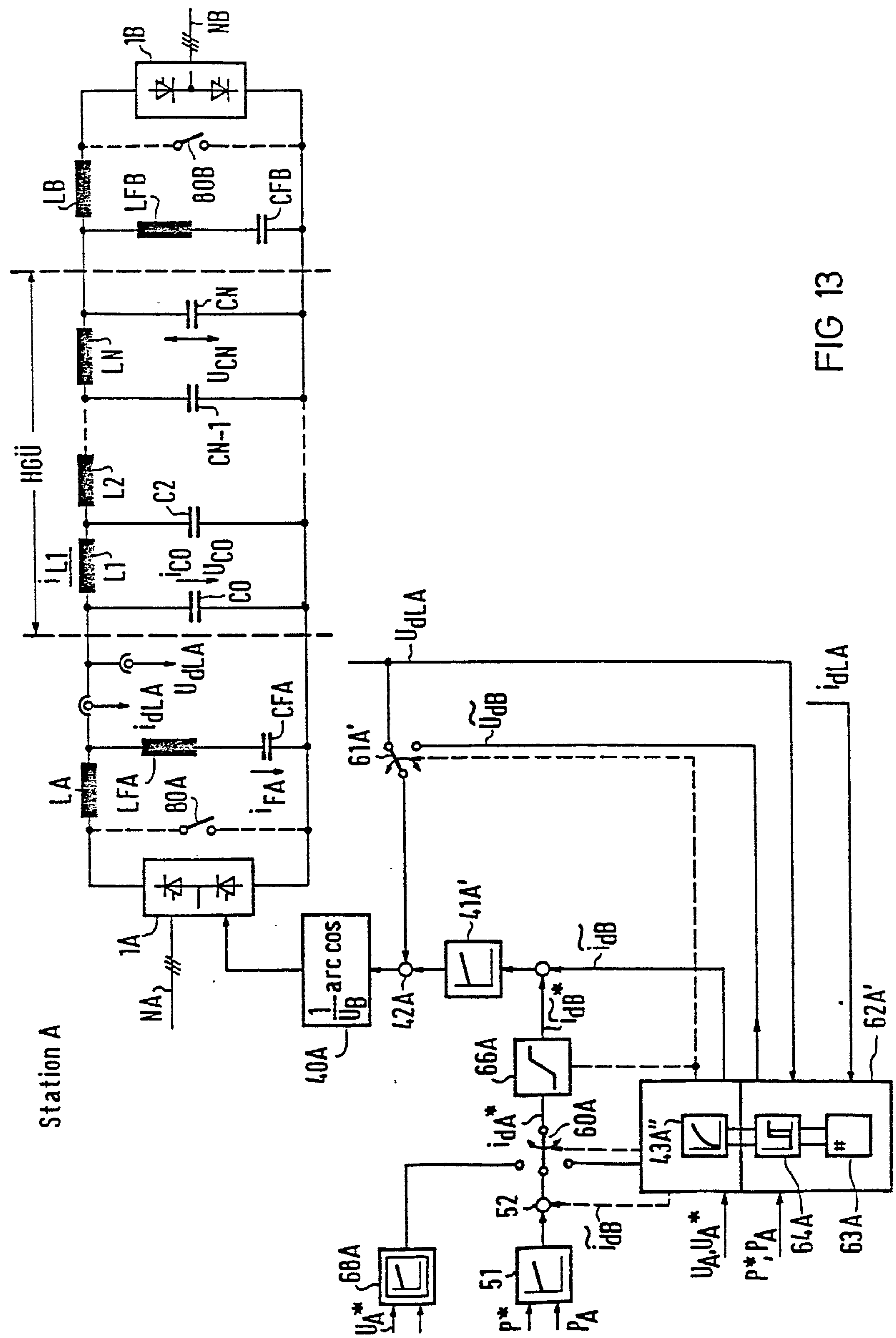
Station A
NA
1A
1B
NB
LA
LFA
80A
iFA
CFA
idLA
UdLA
CO
iCO
UCO
L1
iL1
C2
L2
HGÜ
CN-1
LN
UCN
CN
LB
LFB
80B
CFB
40A
arc cos
42A
41A'
61A'
UdB
UdLA
idLA
idB
idB*
66A
idA*
60A
43A''
62A'
64A
63A
52
51
68A
UA*
P*
PA
UA,UA*
P*,PA

FIG 13

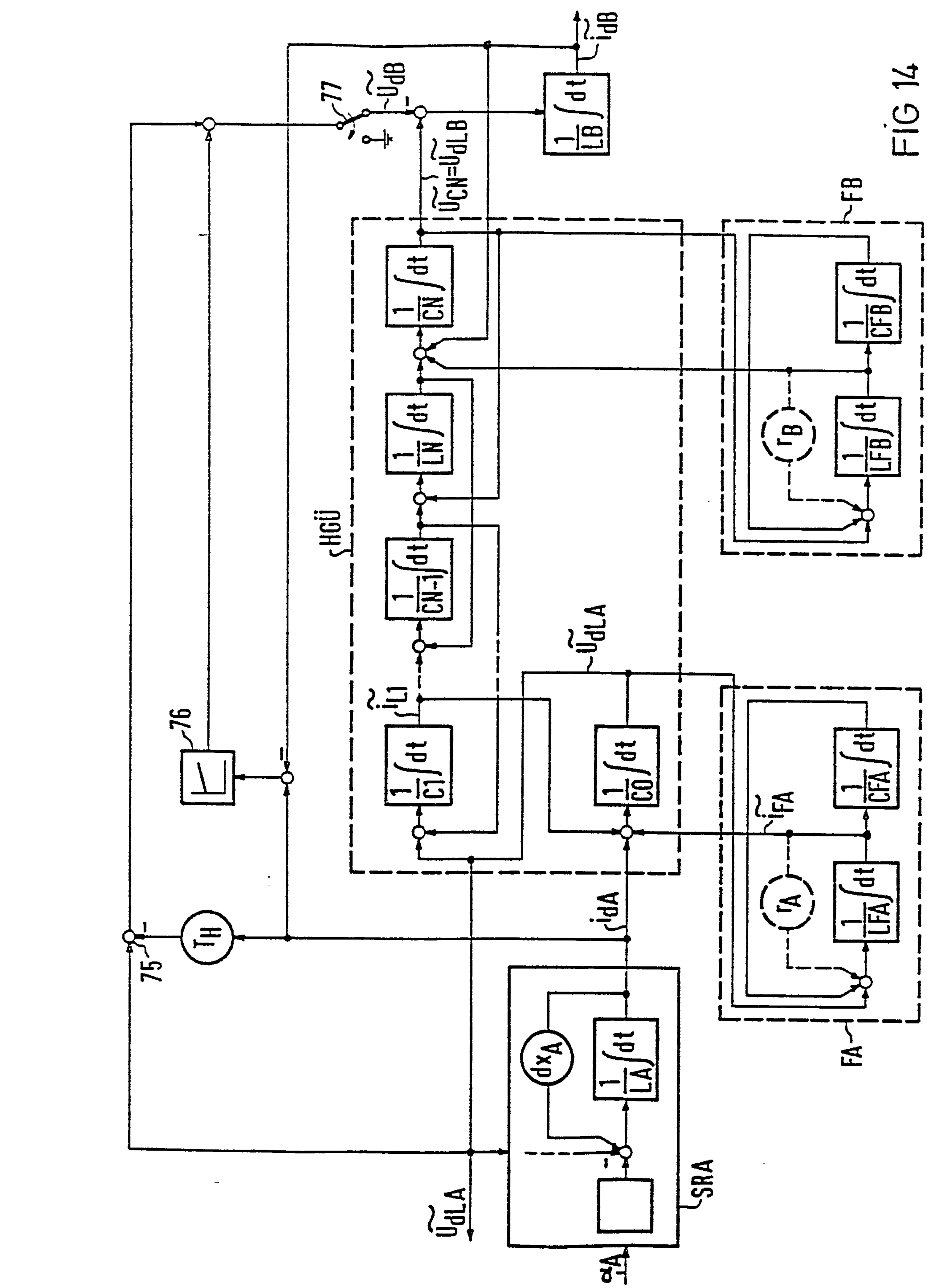


FIG 14

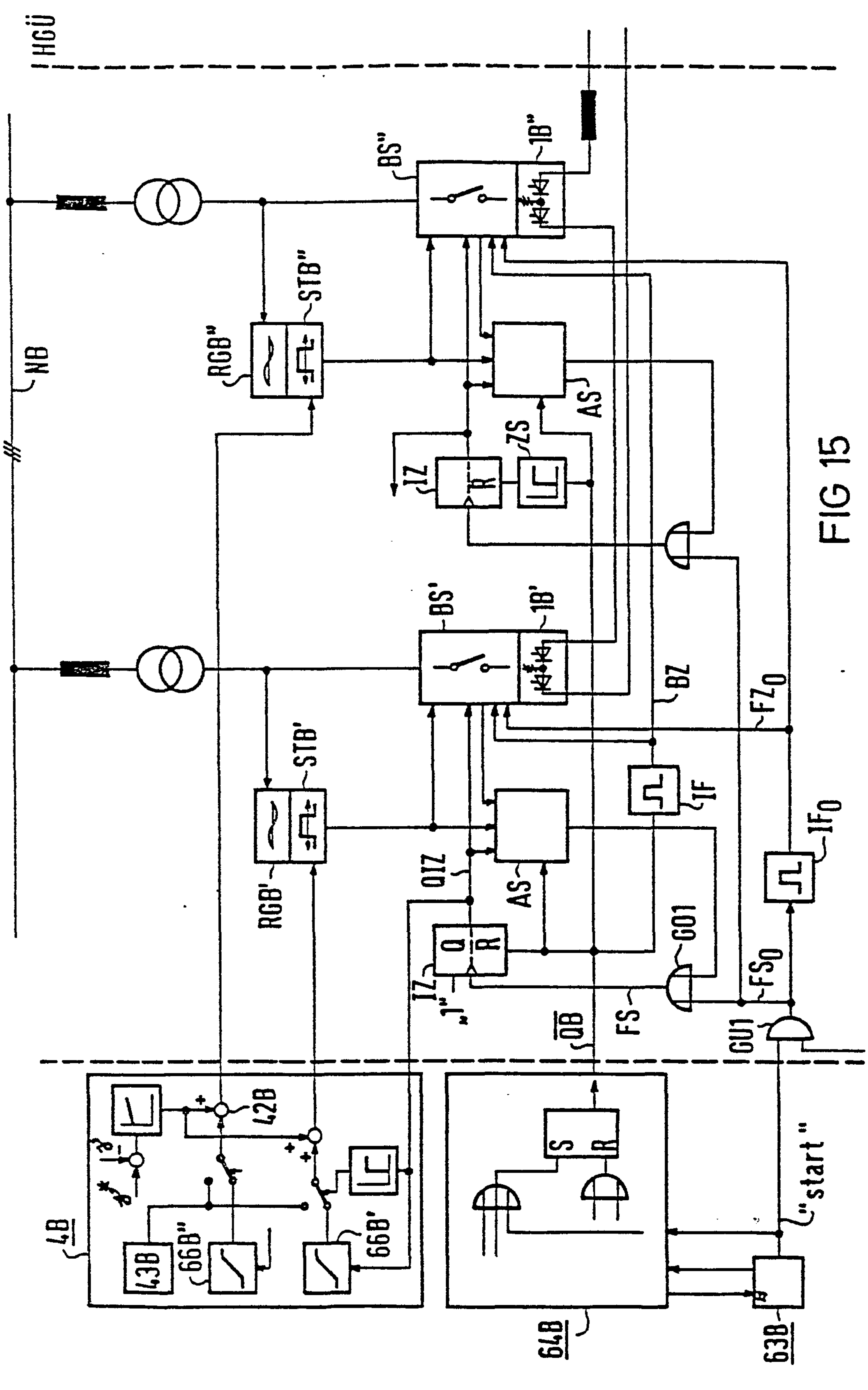
HGÜ
NB
RGB"
STB"
BS"
1B"
AS
ZS
IZ
R
RGB'
STB'
BS'
1B'
BZ
FZ0
1F
1F0
QIZ
AS
Q
R
G01
IZ
"1"
FS
FS0
GU1
QB
4B
42B
43B
66B"
66B'
64B
S
R
"start"
63B

FIG 15

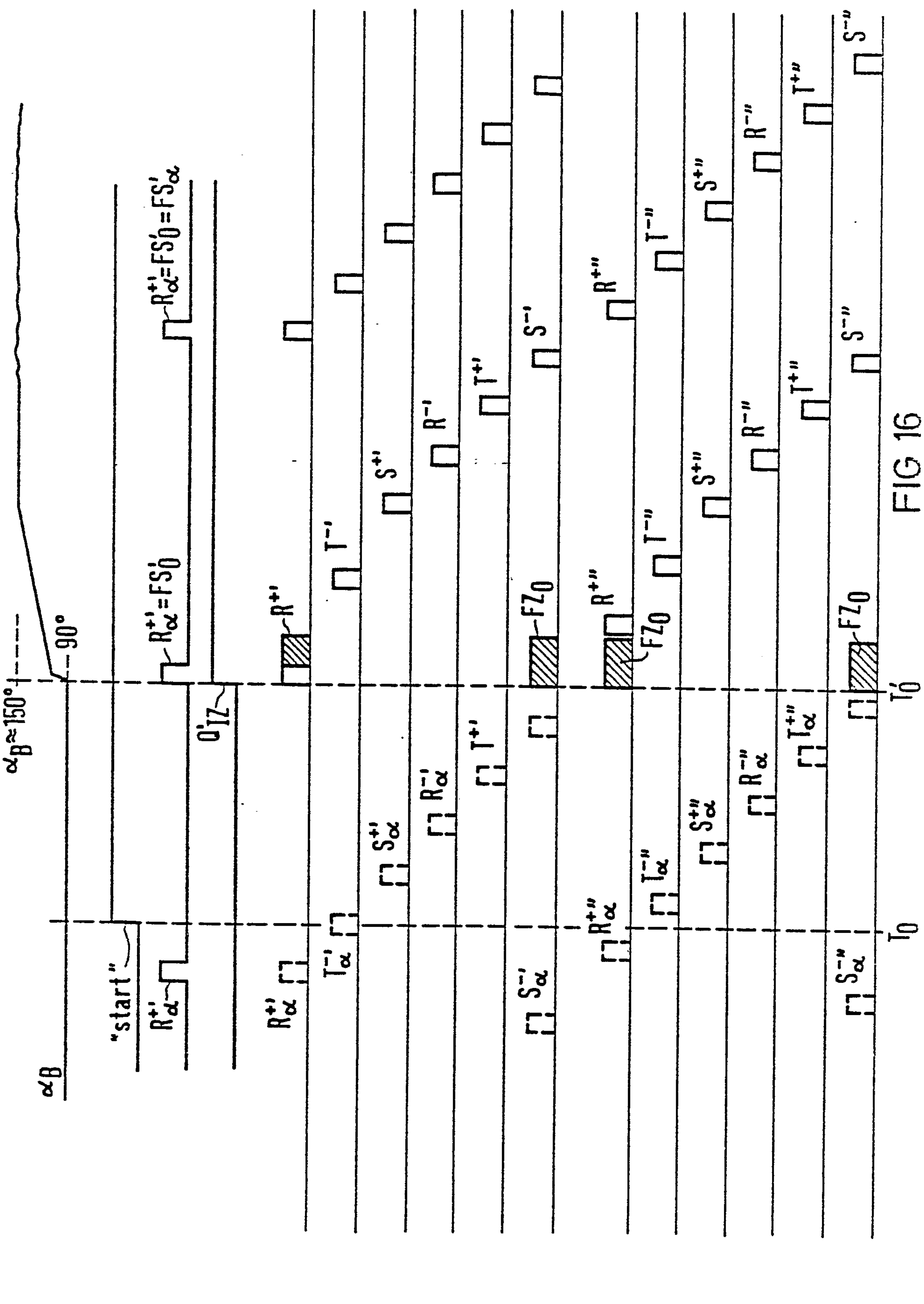

FIG 16

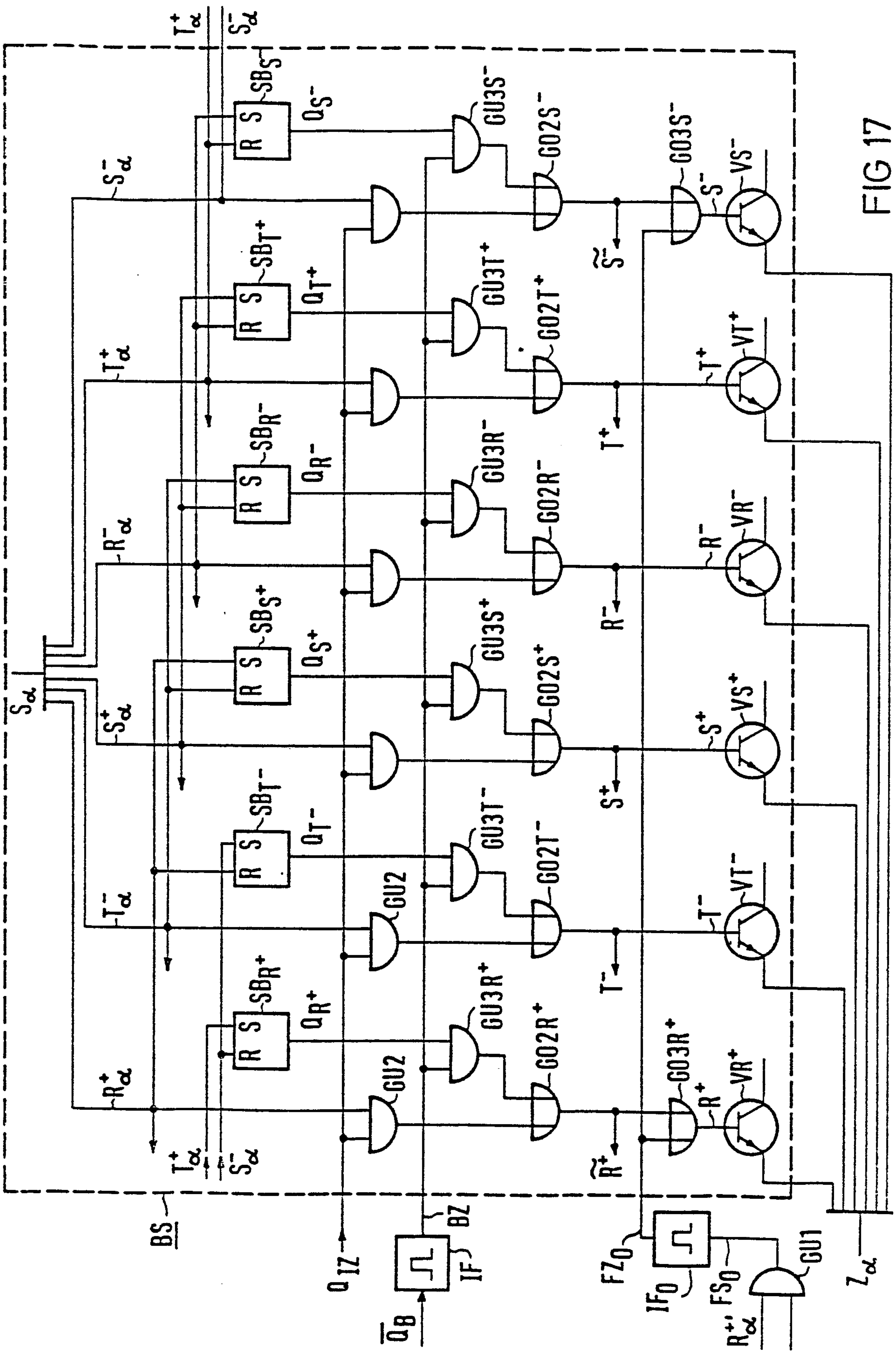
BS
Sα
Q1Z
QB
IF
BZ
FZ0
IF0
FS0
GU1
Zα
SBR+
SBT-
SBS+
SBR-
SBT+
SBS-
QR+
QT-
QS+
QR-
QT+
QS-
GU2
GU3R+
GU3T-
GU3S+
GU3R-
GU3T+
GU3S-
GO2R+
GO2T-
GO2S+
GO2R-
GO2T+
GO2S-
GO3R+
GO3S-
VR+
VT-
VS+
VR-
VT+
VS-

FIG 17

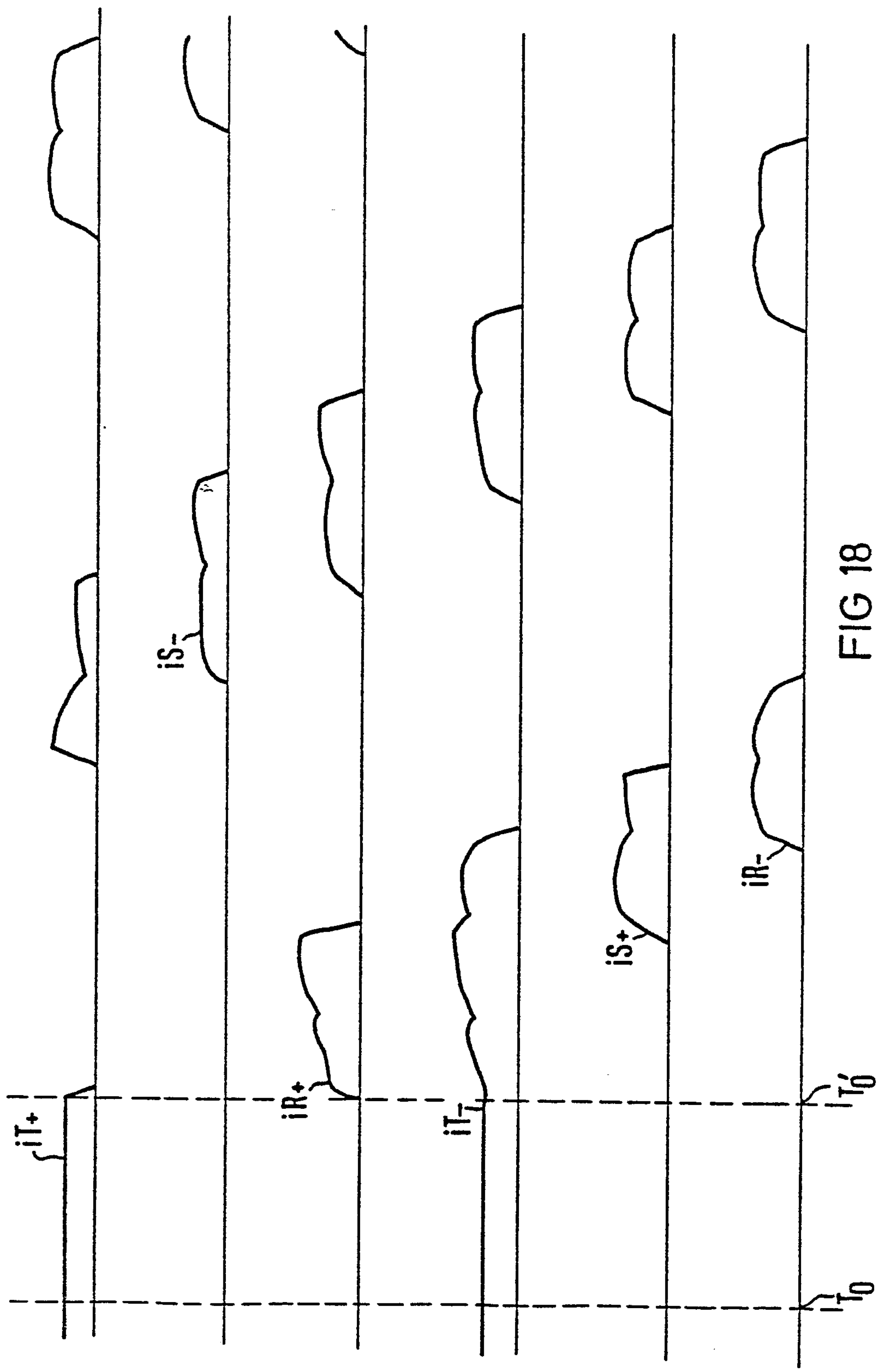


FIG 18

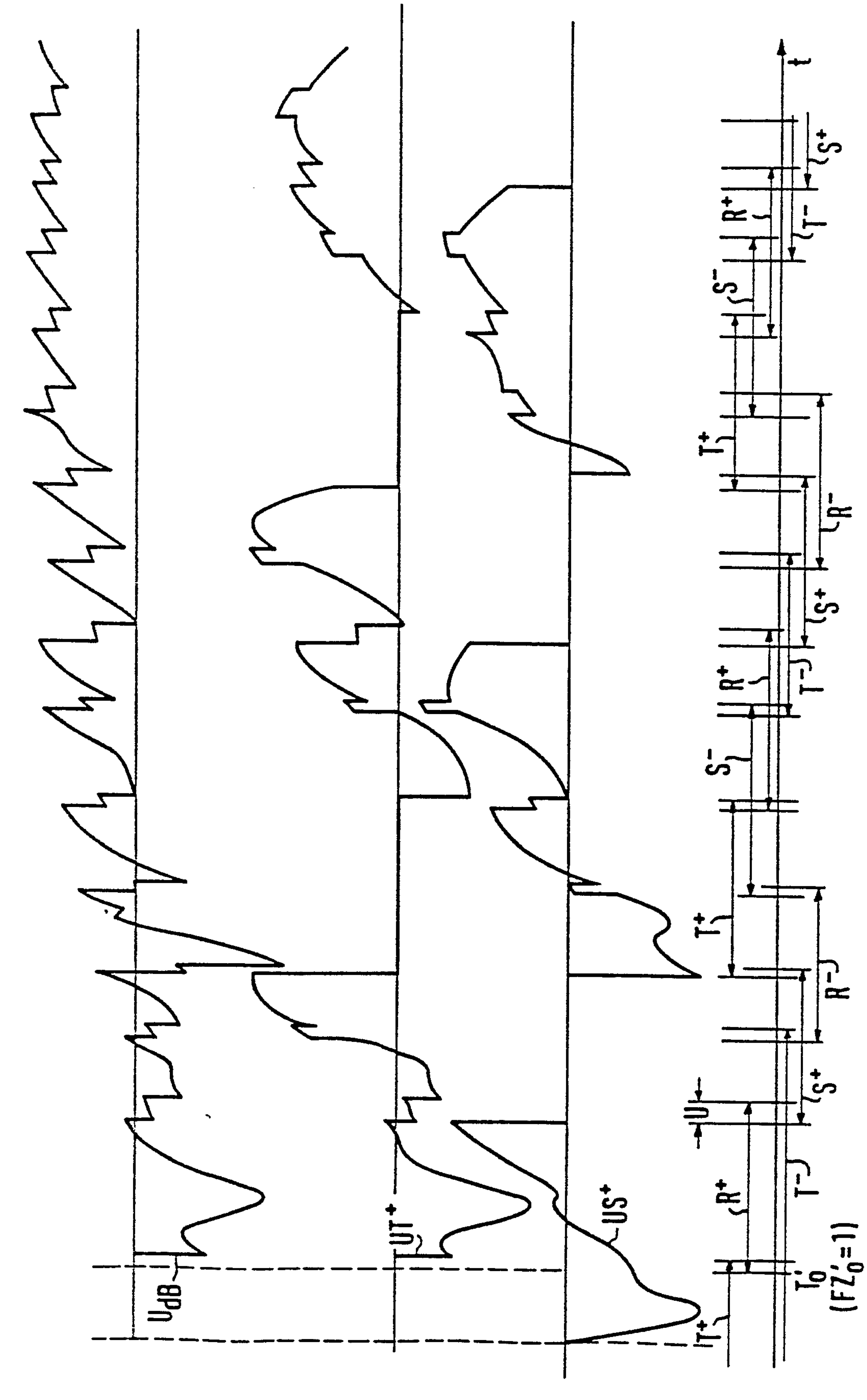


FIG 19

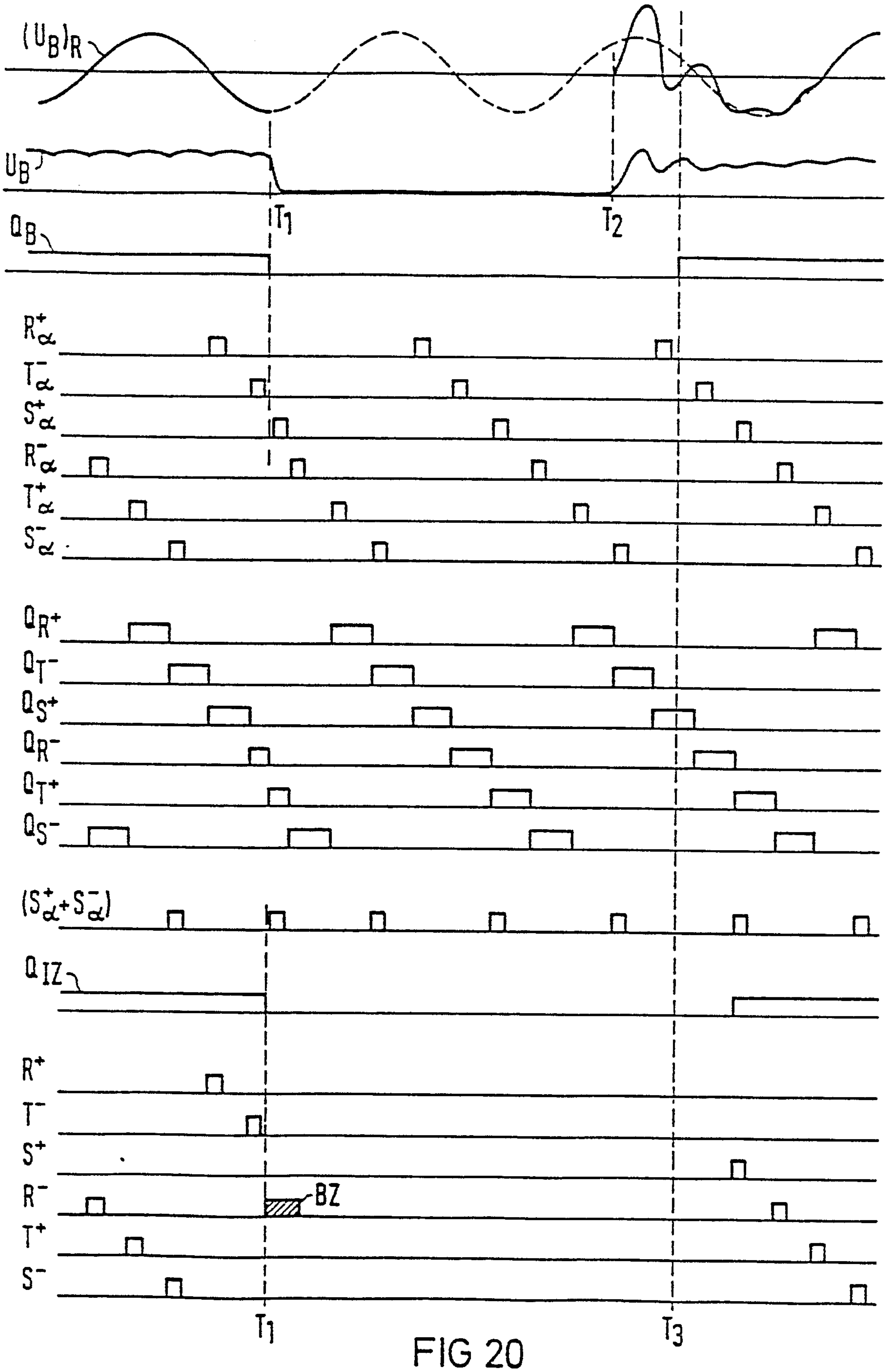

$(U_B)_R$
$U_B$
$T_1$
$T_2$
$Q_B$
$R_\alpha^+$
$T_\alpha^-$
$S_\alpha^+$
$R_\alpha^-$
$T_\alpha^+$
$S_\alpha^-$
$Q_{R^+}$
$Q_{T^-}$
$Q_{S^+}$
$Q_{R^-}$
$Q_{T^+}$
$Q_{S^-}$
$(S_\alpha^+ + S_\alpha^-)$
$Q_{IZ}$
$R^+$
$T^-$
$S^+$
$R^-$
BZ
$T^+$
$S^-$
$T_1$
$T_3$


FIG 20

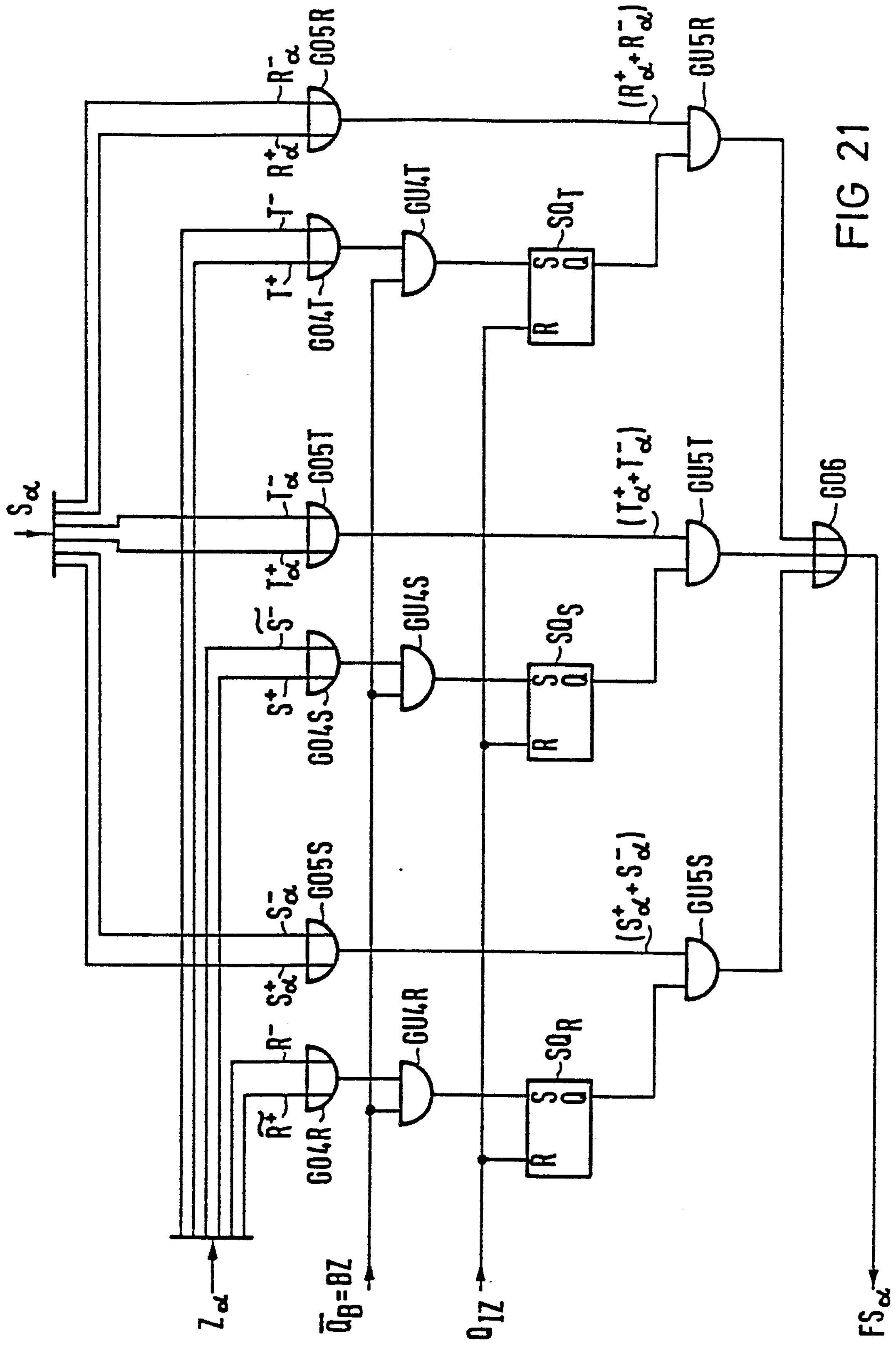

Sα
GO5R
GO4T
GU4T
SQT
GU5R
GO5T
GU5T
GO6
GO4S
GU4S
SQS
GO5S
GU5S
GO4R
GU4R
SQR
Zα
QB=BZ
QIZ
FSα


FIG 21

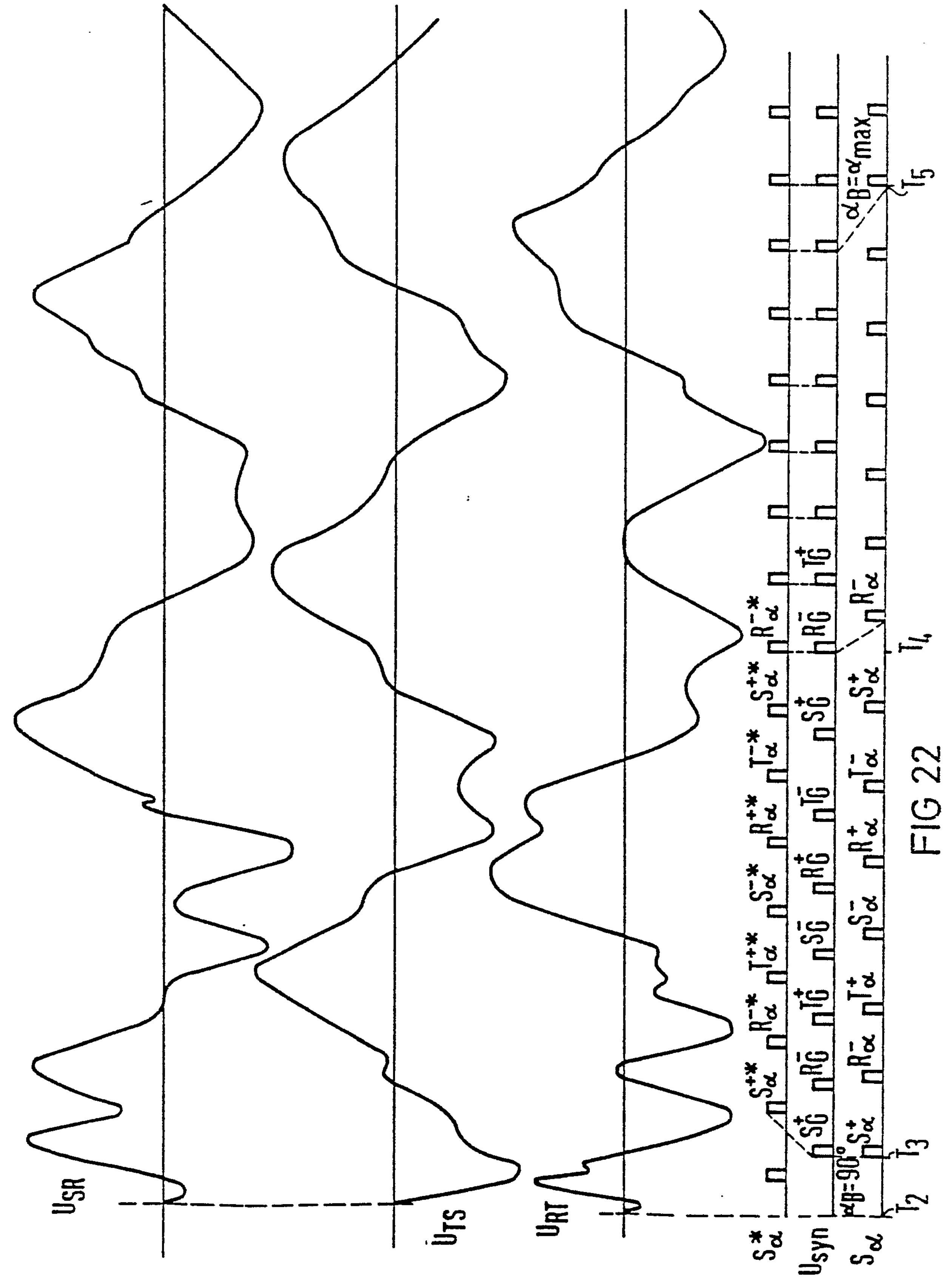


FIG 22

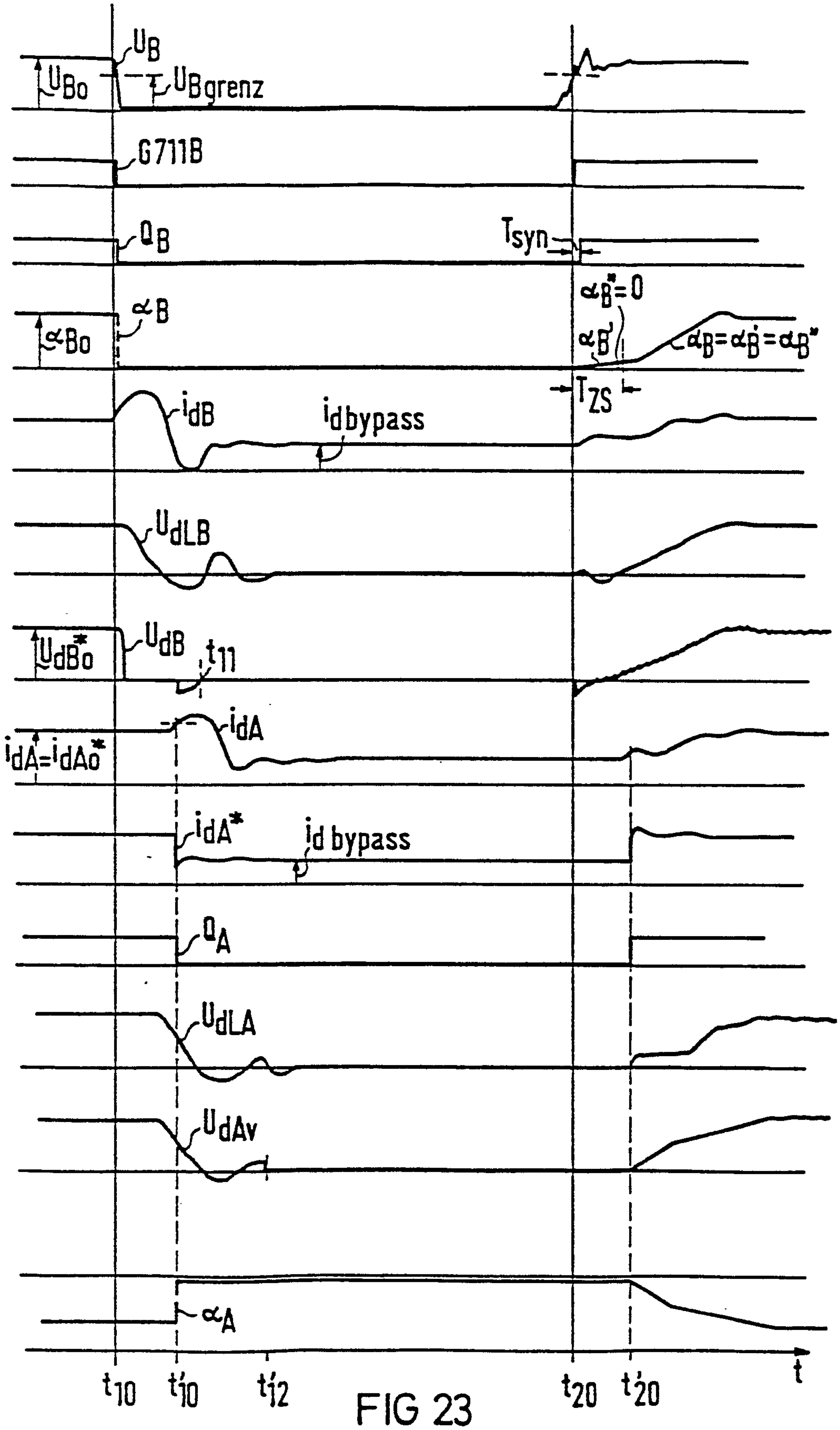

UB
UBo
UBgrenz
G711B
QB
Tsyn
αB*=0
αB
αBo
αB'
αB=αB'=αB*
TZS
idB
id bypass
UdLB
UdBo*
UdB
t11
idA
idA=idAo*
idA*
id bypass
QA
UdLA
UdAv
αA
t10
t'10
t'12
t20
t'20
t


FIG 23

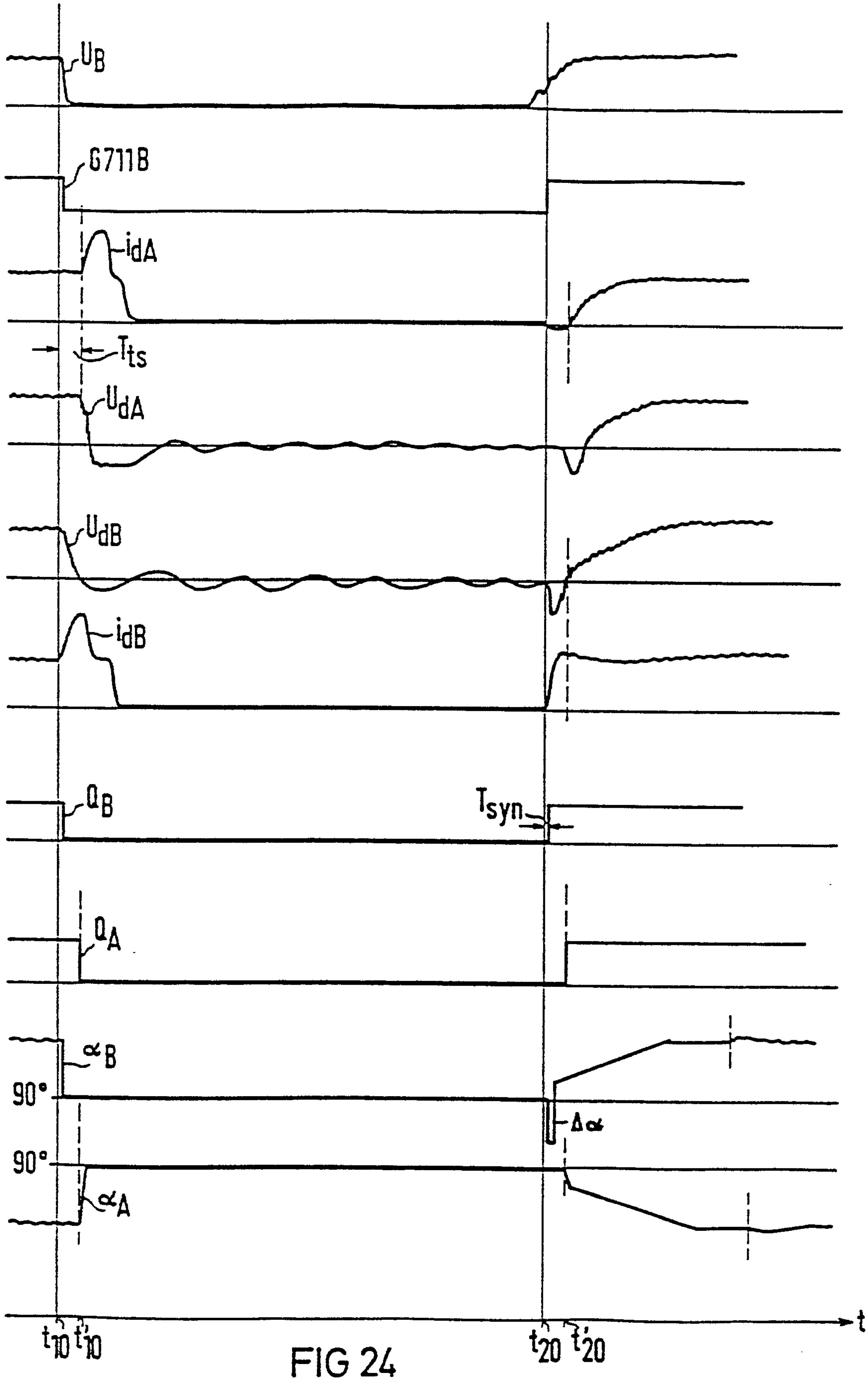
UB
G711B
idA
Tts
UdA
UdB
idB
QB
Tsyn
QA
αB
90°
Δα
90°
αA
t
t10 t'10
t20 t'20

FIG 24

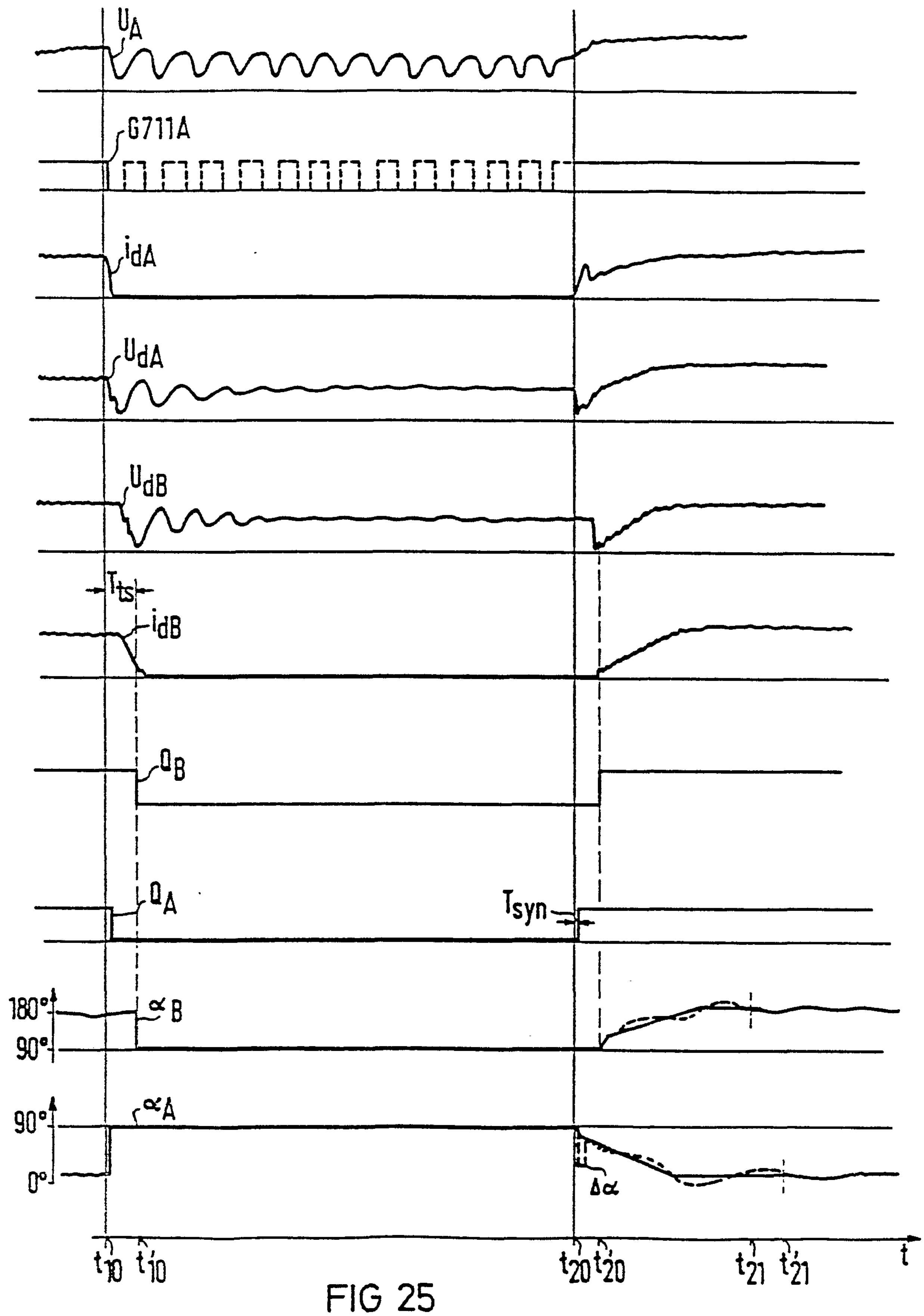
$U_A$
G711A
$i_{dA}$
$U_{dA}$
$U_{dB}$
$T_{ts}$
$i_{dB}$
$Q_B$
$Q_A$
$T_{syn}$
180°
90°
$\alpha_B$
90°
0°
$\alpha_A$
$\Delta\alpha$
$t_{10}$
$t'_{10}$
$t_{20}$
$t'_{20}$
$t_{21}$
$t'_{21}$
t

FIG 25

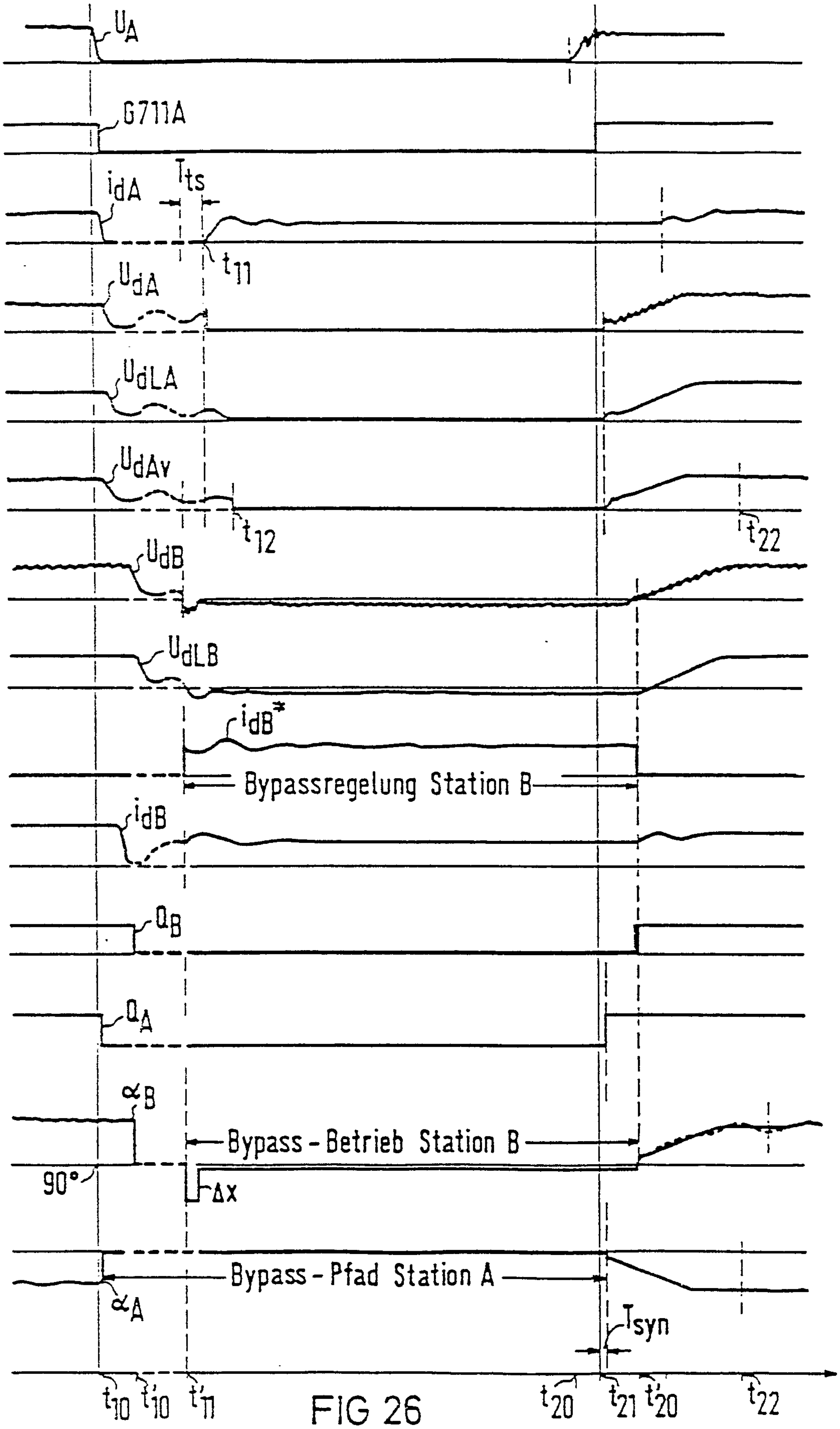

$U_A$
G711A
$i_{dA}$
$T_{ts}$
$t_{11}$
$U_{dA}$
$U_{dLA}$
$U_{dAv}$
$t_{12}$
$t'_{22}$
$U_{dB}$
$U_{dLB}$
$i_{dB}^*$
Bypassregelung Station B
$i_{dB}$
$Q_B$
$Q_A$
$\alpha_B$
Bypass - Betrieb Station B
90°
Δx
Bypass - Pfad Station A
$\alpha_A$
$T_{syn}$
t
$t_{10}$
$t'_{10}$
$t'_{11}$
$t_{20}$
$t_{21}$
$t'_{20}$
$t_{22}$


FIG 26

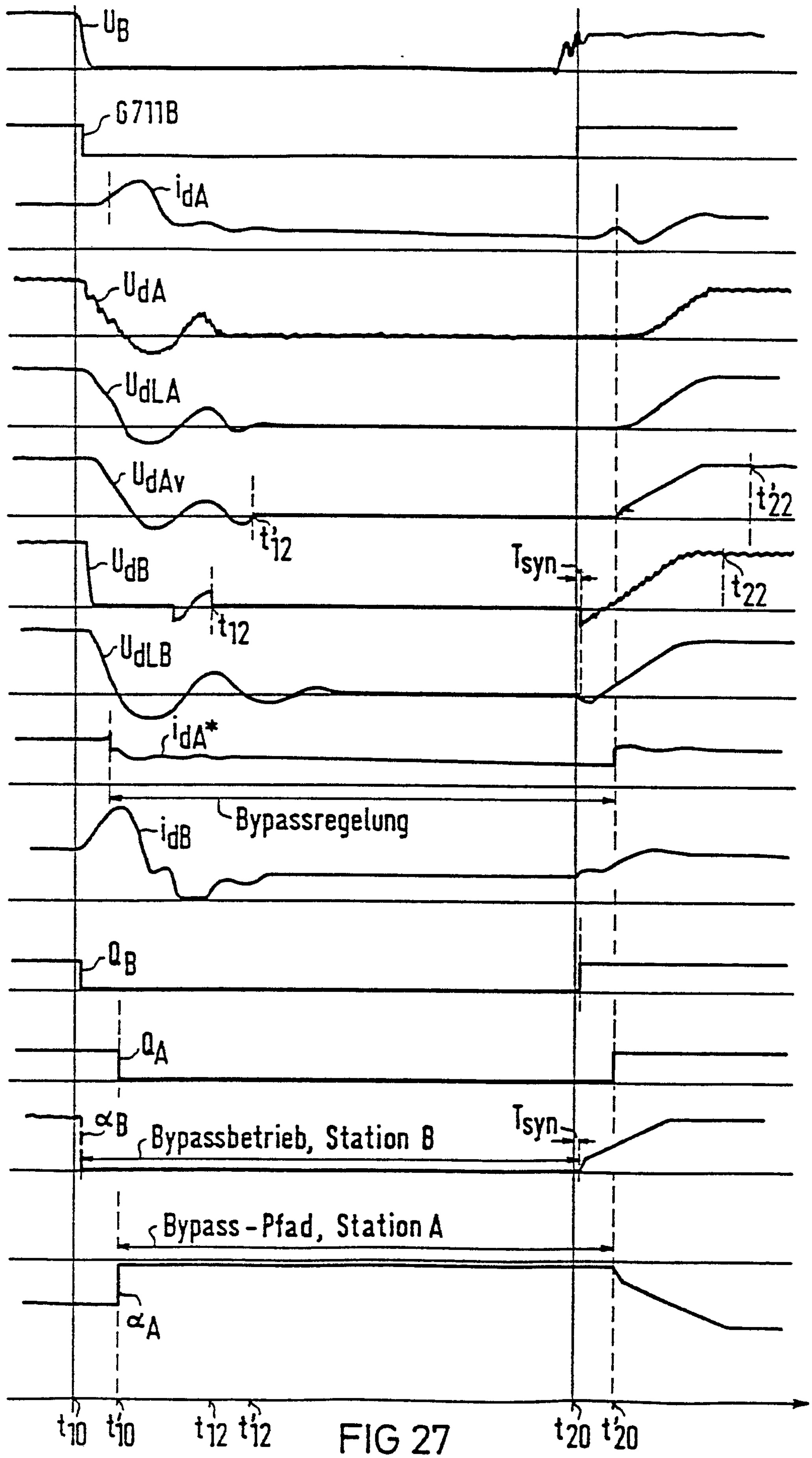

U_B
G711B
i_dA
U_dA
U_dLA
U_dAv
t'_12
U_dB
T_syn
t_12
t'_22
t_22
U_dLB
i_dA*
Bypassregelung
i_dB
Q_B
Q_A
α_B
Bypassbetrieb, Station B
T_syn
Bypass-Pfad, Station A
α_A
t_10
t'_10
t_12
t'_12
t_20
t'_20


FIG 27